# EUROPEAN PATENT APPLICATION

(11) **EP 4 715 747 A1**
(43) Date of publication of application: **25.03.2026**
(21) Application number: 25203265.1
(22) Date of filing: 19.09.2025
(51) Int. Cl.: G06T 17/05

(54) **SYSTEM AND METHOD FOR COLLABORATION WHEN VIEWING AERIAL IMAGERY AND DERIVED CONTENT**

(30) Priority: 20.09.2024 US 202463697055 P; 16.09.2025 US 202519330707
(71) Applicant: Nearmap US, Inc., Lehi, Utah 84043 (US)
(72) Inventor: MISTLER, Carl, Barangaroo NSW, 2000 (AU); ROOT, Aaron David, Barangaroo NSW, 2000 (AU); AITCHISON, Charley Mae, Barangaroo NSW, 2000 (AU); SRIDHAR, Anuraag, Barangaroo NSW, 2000 (AU); SIMONS, Irfan, Walthamstow, E17 7FT (GB); HART, Clarissa Marie, Seattle, Washington, 98104 (US)
(74) Representative: v. Bezold & Partner Patentanwälte - PartG mbB

(57) **Abstract**

A system and method for viewing aerial imagery and derived content on a web-based imagery browser that can be accessed by at least two users simultaneously. In addition, a system for interactively generating 3D geometry data for a location imaged from multiple viewpoints.

## Description

### CROSS REFERENCE TO RELATED APPLICATIONS

This application claims the benefit of US Application 63/697,055, filed September 20, 2024, the contents of which are incorporated by reference herein.

### BACKGROUND

### 1. Field of the Disclosure

The present disclosure relates to a system and method for viewing aerial imagery and derived content. In particular, the present disclosure relates to a system and method for viewing aerial imagery and derived content on a web-based imagery browser that can be accessed by at least two users simultaneously for collaboration.

### 2. Description of Related Art

Generally, when a first user is viewing aerial imagery on a web-based system, the first user is the only user working on a particular project. If the first user would like to work with a second user, then the second user would log on using the first user's credentials. However, the first user would be unable to work on the project while the second user is logged on. Alternatively, the first user undesirably prints a report that is shown to the second user.

Accordingly, it has been determined by the present disclosure that there is a continuing need for a system and method that overcomes, alleviates, and/or mitigates one or more of the aforementioned and other deleterious effects of prior systems and methods.

### SUMMARY

The present disclosure provides a system and method for viewing aerial imagery and derived content on a web-based imagery browser that can be accessed by at least two users simultaneously.

This system allows multiple users to collaborate in real time on projects, supports a reasonable backup and restore mechanism for projects, and allows control of the structure of saved data.

The above-described and other features and advantages of the present disclosure will be appreciated and understood by those skilled in the art from the following detailed description, drawings, and appended claims.

### DESCRIPTION OF THE DRAWINGS

The patent or application file contains at least one drawing executed in color. Copies of this patent or patent application publication with color drawing(s) will be provided by the Office upon request and payment of the necessary fee.
FIG. 1 is a simplified block diagram of an exemplary embodiment of a system and method for viewing aerial imagery and derived content on a web-based imagery browser that can be accessed by at least two users simultaneously for collaboration according to the present disclosure.
FIG. 2 is a flow chart of a sequence for use of the system of FIG. 1.
FIG. 3 is a simplified block diagram of the system and method for viewing aerial imagery and derived content on a web-based imagery browser that can be accessed by at least two users simultaneously for collaboration of FIG. 1 that is modified.
FIG. 4 is a flow chart of a sequence for use of the system of FIG. 3.
FIG. 5 is a flow chart of a sequence for use of the system of FIG. 3.
FIG. 6 is a simplified block diagram of an example of a project interface (along with some relevant associations).
FIG. 7 is a simplified block diagram of the system and method for viewing aerial imagery and derived content on a web-based imagery browser that can be accessed by at least two users simultaneously for collaboration of FIG. 1 that is modified.
FIG. 8 is a simplified block diagram of the system of FIG. 7 that runs in a "non-real time" mode.
FIG. 9 is a flow chart of a sequence for use of the system of FIG. 7.
FIG. 10 is a flow chart of a sequence for use of the system of FIG. 7.
FIG. 11 is a flow chart of a sequence for use of the system of FIG. 7.
FIG. 12 is a flow chart of a sequence for use of the system of FIG. 7.
FIG. 13 is a simplified block diagram of a projects-core repository.
FIG. 14 is a method for determining access to a project of the system of FIG. 7.
FIGS. 15-56 and 60-129 are examples of screen displays of the system of FIG. 7.
FIGS. 57-59 are example emails generated by the system of FIG. 7.

### DETAILED DESCRIPTION

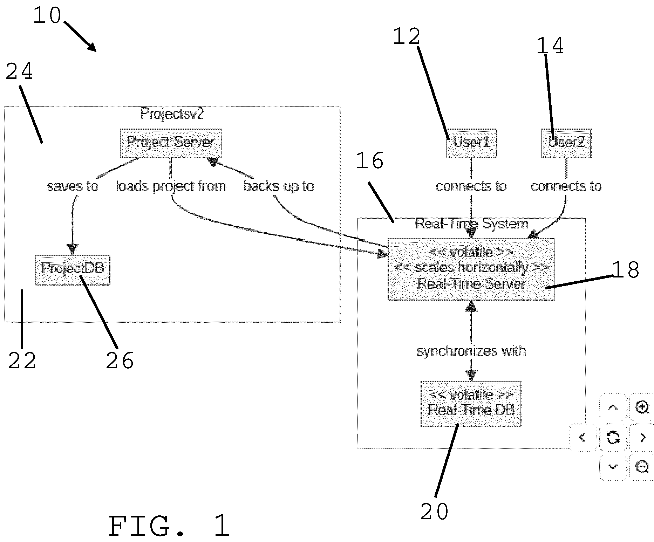

Referring to the drawings and in particular to FIG. 1, an exemplary embodiment of a system and method for viewing aerial imagery and derived content on a web-based imagery browser that can be accessed by at least two users simultaneously for collaboration according to the present disclosure is shown and is generally referred to by reference numeral 10 (hereinafter "system 10"). Advantageously, system 10 allows two or more users to access the same project simultaneously through separate user interfaces of a web-based imagery browser. The project can have one or more geographic locations displayed to the users simultaneously through the separate user interfaces. The project can also include an additional amount of the surrounding areas of the one or more geographic locations also displayed to the users simultaneously through the separate user interfaces. The geographic location is depicted in one or more aerial images or virtual models of the geographic location and/or combination thereof. Depending on permissions, each user can also engage with the project through their respective separate user interfaces, for example, to take measurements, generate comments, generate annotations and other functions available in system 10. System 10 can also advantageously limit the functionality available to different users based on their permissions.

Advantageously, the systems and methods herein assist with the following scenarios:
A government risk analysis assessor wants to annotate in a map where the potential risks of a new construction project will be and share it with other members of his team.
A construction project manager wants to take notes about potential issues on a site that's undergoing excavation and share it with the in-field construction workers.
A roof installer has noticed an issue with ponding on a roof and wants to make a note to send to the field worker.
Two government foresters are working on plans to redevelop a lot into a park.
They want to be able to take and share notes in the same document while keeping the other up to date.
A local GIS administrator is working with his team on some disputed territory between local counties where new housing is being built. The GIS administrator wants to make notes on where the new housing is being built, mark up the interlocal agreements, and share that with local counties to determine who has authority in that area.
A public safety local government team is working to plan out a parade route. They need to make sure they will have quick routes to respond to incidents and want to put annotations of particular areas to be aware of on the map and share it with their team.
A solar roof installer has noticed that there is an issue with tree overhang on some roofs in a neighborhood. He wants to highlight this issue to send to the field workers so they will know of the need to trim back certain branches during construction.
A telecom installer is keeping an eye on construction progress in a local development. When lots are completed, she will let her team will know when to go in to install their utilities. As construction is underway, she wants to make notes about which sites are nearing completion and send them to her team.
An architectural firm is developing their building plans and wants to share their building designs projected over satellite imagery with their client.
A manager in a roof repair company has noticed several areas in the imagery where he needs feedback from his field workers. He makes notes on the image browser so that they know where to look when they go in for site visits.

We note the following further explanations of the terms in the table below that are intended to assist with the understanding of the present disclosure but not to limit the present disclosure:

| Term | General Definition/example(s) | |
|---|---|---|
| graphql | Common API alternative to REST. | |
| | Codegen can be used to generate code for graphql. | |
| yjs | Opensource CRDT library for real time handling of JSON documents modified by multiple inputs or sources, with change and/or conflict management. Yorkie is another example of CRDT framework. | |
| crdt library/crdt framework | Conflict-free replicated data type | |
| duck | Duck is a slice of UI state. | |
| | - e.g. which button is active. | |
| | Derived from the open source redux toolkit (re ducks) where redux complicated, ducks simple | |
| | redux state management library that is for synchronous updates | |
| saga | Spawns a task for asynchronous functions | |
| | - framework | |
| | - a saga of tasks that is performed from a redux change. | |
| | -facilitates synchronization of yjs representation in memory across kubernetes pods | |
| redis | A real time messaging system used in Kubernetes to synchroniser yjs representation across Kubernetes pods. | |
| kml | Keyhole markup language | |
| | - example of geometry | |
| acl | Access control list | |
| reacttree | in the browser, renderer of a tree node of UI elements | |
| | - rendering webpage for user | |
| | - optimised update of webpage | |
| | - refresh the view | |
| miromodel | - architecture diagrams | |
| | - diagram what users plan to make | |
| | - using miro as example, however, other alternative similar functionality can be used in systems 10, 300, 700 | |
| | - if client side disconnects- save up pending changes, then apply them all | |
| MongoDB | As discussed herein, mongodb instance is a mongo persistence layer used by projects real time system to: | |
| | | Save incremental updates received over websocket connections |
| | | Use those updates to reproduce the latest full document content, for: |
| | | Other pods to get initial data from (see sequence diagram of FIG. 9) |
| | | Getting full content for projects-watcher to save Store metadata information about document sessions, including: |
| | | Which users have access to which documents |
| | | Timestamps of last user |
| | | activity, to determine when sessions can be ended and memory cleaned up |
| | Information to determine which documents are dirty and need saving | |
| AWS | Amazon Web Services that could alternatively be other cloud and/or web-based services | |

System 10 is implemented in a web-based imagery browser that lets a user view, mark up and export a variety of content, easily explore locations of interest and examine change through historical content, take accurate measurements of important site features with system tools and organize work into projects. Locations can be found, for example, by street address, latitude and longitude coordinates, suburbs, places of interest or by simply copying a system URL. Users are allowed to switch between base layers to change perspective and get a closer look. Users are allowed to take measurements remotely with high resolution imagery that also allows users to inspect and measure sites from a remote location such as an office. With the built-in measurement tools, line and area measurements can be taken, and notes included with the annotation tool. Historical content is included which enables a user to view imagery that is timestamped, so the user has a reference of when the photo was taken and compare imagery to detect change. Imagery can be exported as high resolution imagery to use in presentations and design workflows with this tool that is able to download georeferenced or high resolution imagery of a project area. A snapshot tool to take a screenshot at a display screen's resolution is available. Images/models available for use in system 10 can be the web-based system known as MapBrowser that includes: Nearmap Oblique for viewing a location from multiple directional perspectives, providing a 45-degree view allowing measure the height of structure, roof area and slope; Nearmap 3D that has photorealistic city models with 3D Viewer to obtain elevation data, measure height and distance between buildings; Nearmap Vertical imagery that is made up of individual photos that are taken from survey flights with each image corrected to remove distortions and phenomena, such as cloud and smoke, that is then stitched together into a mosaic, allowing seamless panning and zooming throughout predetermined areas of coverage; Nearmap Panorama detailed, multidirectional panoramic views across areas of interest; Nearmap Al that includes Al data to detect change over time, or streamline data analysis for a higher quality result, at greater scale, and updated regularly.

The 3D mesh of Nearmap 3D comprises 3D mesh tiles that are artificial virtual representations, for example stored as "b3dm" data format of a region of 3D geometry and 2D texture. The 3D mesh is provided with its own geometry measured in units (for example meters), which means 3D coordinates can be directly sampled from the 3D mesh geometry. The 3D mesh exists in 3D space and is rendered in the virtual 3D scene that contains the 3D mesh. A project in Nearmap 3D allows users to save their in-progress annotations on the mesh. When a saved project is opened, the 3D Mesh Content product re-draws the annotations and redetermines geometry information (e.g., area, lengths). The Projects feature allows users to save information about different jobs or sites, whether in progress, planned for the future or historical.

System 10 includes a projects tool to manage projects. The projects tool allows the user to add content-rich information to a location of interest, which can be saved, organized and revisited. Projects can be created, named, and plans and layouts can be saved on high resolution imagery that can be returned to and updated as many times as required many projects can be saved. Projects can be sorted and saved with custom tags, and viewed in a single dashboard. Lower priority projects can also be archived. The projects tool saves site measurements and annotations to projects. The projects tool has the ability to measure a sum of areas or distances in a project. System 10 allows grouping of features in layers by organizing and grouping similar objects or features in distinct layers, colors and opacity. KML (Keyhole Markup Language) data can also be imported and extra content overlayed on the imagery. KML is an XML language focused on geographic visualization, including annotation of maps and images. System 10 also has content that can also be used with third-party applications, such as ArcGIS Online, ArcGIS Pro, Autodesk Civil 3D, custom applications, etc..

System 10 can be configured for collaboration on a project so that each user can navigate the same project on their own. Alternatively, system 10 can be configured so that a first user "follows" a second user during use. Still another alternative is that separate models are created for each user's navigation state. System 10 can have an access control list ("ACL") that is managed by an external application programming interface ("API"). The access control list stores permissions that can be used to control which users can access which projects. An example of code relating to a project for collaboration is found in the appendix included herewith. In addition, an example code of a model that is tracked on the real time server is found in the appendix included herewith.

System 10 has map navigation that can use a non-real time map from user id to collaborative navigation states. Alternatively, each user writes to their own navigation state and if a user starts following other users they no longer write to their own state where others are writing to their state. In other words, the other user's state would be saved by them as normal, and the user doing the following will not update their own state. This is one approach to implement view-following; however, other approaches could be used.

Referring back to FIG. 1, system 10 can have a first user interface 12 receiving inputs from a first user and a second user interface 14 receiving inputs from a second user. First user interface 12 and second user interface 14, running on e.g., computers or mobile devices, communicate with a server. Communicating as discussed herein, can be over a network, with a real-time system 16 that has a real-time server 18 and a real-time database 20. During use, real-time server 18 synchronizes with real-time database 20. Real-time server 18 communicates with a project system 22 that has a project server 24 and project database 26. Project server 24 communicates with project database 26 to save projects to project database 26. Real-time server 18 communicates with project server 24 to save the project to project server 24, and realtime server 18 communicates with project server 24 to load a project that is saved to project system 22. As discussed above, system 10 has an ACL that can be managed by an external service.

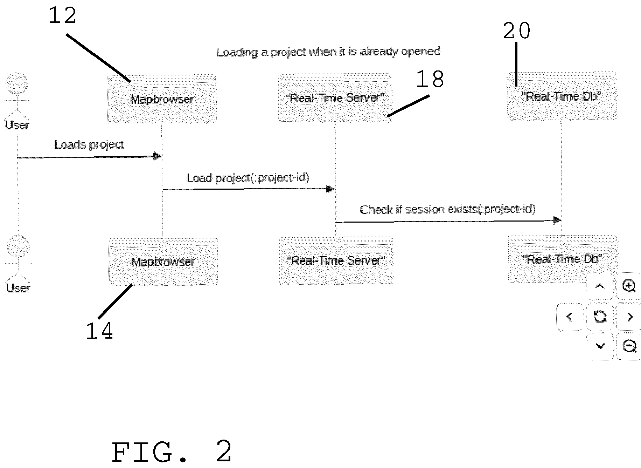

Referring to FIG. 2, a sequence for use of system 10 can include the first user and/or the second user providing inputs to load a project through first user interface 12 and second user interface 14, respectively. First user interface 12 and second user interface 14 communicate with real-time server 18 to load the project that is identified by a project ID. Real-time server 18 then communicates with real-time database 20 to check if a session exists based on the project ID. Example project nodes are shown in the appendix included herewith.

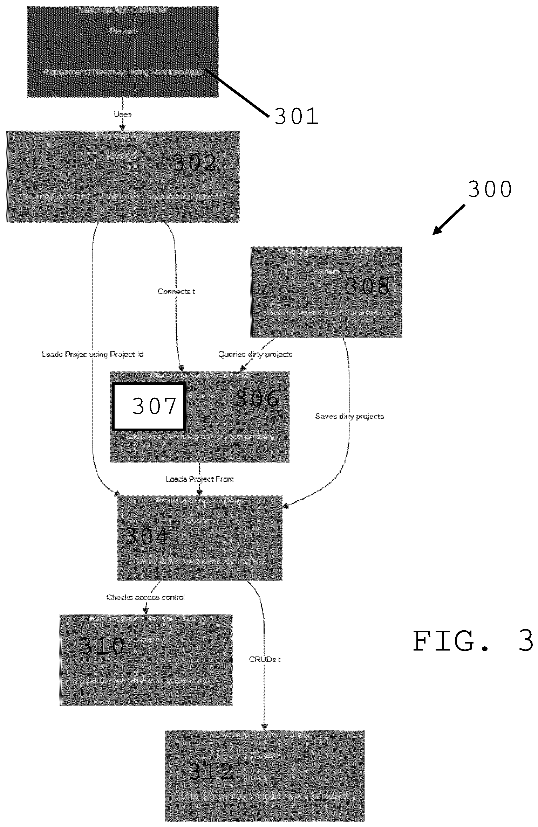

Referring to FIG. 3, system 10 can be modified to system 300 with a user 301 that uses a user interface on an application system 302, for example, on a computer or mobile device. Application system 302 communicates with a projects service system 304 to load a project using a project ID. Projects service system 304 can be a GraphQL API for working with projects. Application system 302 also communicates with a realtime service system 306 to provide convergence. Real-time service system 306 can load the project from projects service system 304. A watcher service system 308, that persists projects, can communicate with real-time service system 306 for queries of dirty projects which are projects that include user modifications, such as annotations, measurements and the like. Watcher service system 308 also communicates with projects service system 304 for saving dirty projects. Projects service system 304 communicates with an authentication service system 310 that provides authentication service for ACL and a storage service system 312 that provides long term persistent storage service for projects to provide Create, Read, Update, and Delete ("CRUD") resources.

The edges in FIG. 3 outline which service can "see" which other service in order to perform operations on it. To have a low level of coupling, the services are structured as a directed acyclic graph ("DAG").

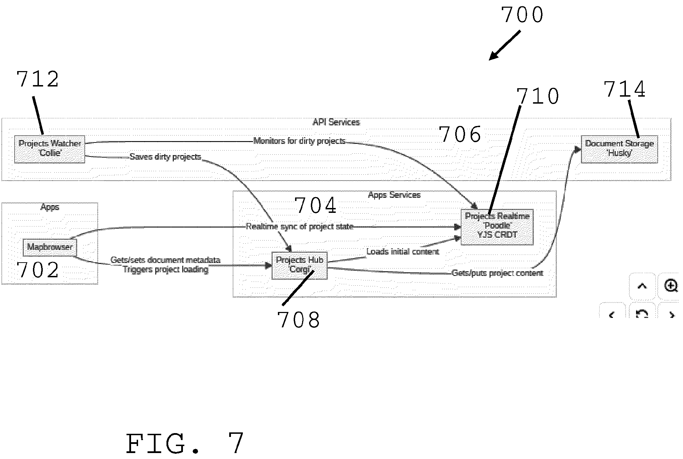

There are four or five main services that are required for projects collaboration. Projects service system 304 outlines the backend API responsible for the long term storage of projects. Projects service system 304 will also do additional work such as schema validation and operations required for backing up and retrieving projects. Realtime service system 306 is responsible for the real time collaboration aspect of the projects service and has server system 307 with a Conflict-free Replicated Data Type server ("CRDTserver") that ensures convergence, and real-time service system 306 is an API layer over server system 307 which provides convenience functions for server system 307 operations. Watcher service system 308 is responsible for periodically backing up project changes from server system 307 to storage service system 312. Storage service system 312 is a queue based system in order to lighten the load on storage service system 312. Alternatively, as shown in FIG.7, the responsibilities of the "authentication service", e.g., authentication service system 310, can be merged into the "projects service", e.g., projects service system 304 or projects hub system 708.

The following subsections outline details of each backend component that has been described in the system overview. Storage service system 312 is a CRUD service used to store/retrieve project related data. The underlying storage mechanisms used are S3 (main document storage) and DynamoDB (metadata). The only service that should call storage service system 312 is projects service system 304. Broadly, when storing a project/document the information is split into 2 groups. The first being the project information (e.g. stored as JSON) which represents the latest diagram/annotation (including the changes from the user). The second being metadata such as which users have access to a given project, various timestamps, versioning information and so on. Storage service system 312 operations break down into retrieving/storing updated documents and querying the metadata, e.g. (1) list of all documents/projects associated with a given user id, this is purely querying the metadata; (2) Retrieve the document/project as well as the associated metadata for that version, this is querying both the metadata from DynamoDB as well as retrieving the document/project from S3; and (3) Update a document/project and associated metadata, again, this is using both DynamoDB and S3.

Projects service system 304 will be a GraphQl layer whose initial purpose is to provide an API layer over storage service system 312. In order to have a strongly typed and well defined service, the projects hub service will contain schemas both for the GraphQL layer as well as for the project document.

Real-time service system 306 is the real-time service that provides collaborative functionalities to projects in system 300. Real-time service system 306 uses yjs, with a websocket server, under the covers to provide convergence and real-time functionality. All sessions in system 300 can be interactive. This means that whenever a project is loaded up it can have a real-time interactive session, regardless of whether it is a collaborative project or not. This can simplify the architecture considerably. The core functionality of real-time service system 306 is: to fetch existing session id, given a project id; load project document into a yjs session, for a project that does not have any yjs sessions; and get the project document from the mongo persistence layer to save it. The real-time service system 306 service code can reside in a projects real time repository.

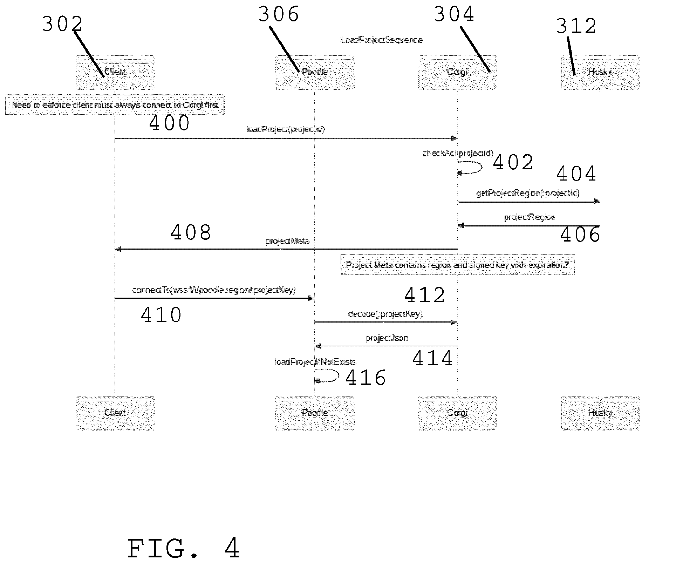

Referring to FIG. 4, user 301 that uses a user interface on an application system 302 communicates with projects service system 304 to load a project based upon a project ID at 400. System 10 can include a system to enforce application system 302 communicating with projects service system 304 initially. Projects service system 304 checks with the ACL based on the project ID to determine if the user is authorized for access to the project at 402. Projects service system 304 communicates with storage service system 312 to retrieve the project region based on the project ID at 404. The region can refer to which AWS data center the data is stored in. The data can be stored in the closest data center to the user to minimize latency of the user's browser communicating with the services. The project region is communicated to projects service system 304 at 406. Projects service system 304 assigns a signed key and communicates the project region and signed key to application system 302 at 408. Application system 302 communicates with real-time service system 306 with a project key at 410. Real-time service system 306 decodes the project key and communicates this output to projects service system 304 at 412. Based upon the project key, projects service system 304 communicates a project JSON file to real-time service system 306 at 414. Real-time service system 306 loads a new project if one does not exist at 416. In other words, when the first user goes through this sequence the project is not in real time memory yet, so the JSON has to be loaded and set up (the "not exists" path). But the second user to connect will find the document is already in memory and so does not need to get JSON again.

Watcher service system 308 is responsible for saving/migrating data from realtime service system 306/server system 307 to storage service system 312. For example, storage service system 312 can be an AWS Lambda (timer based) available from Amazon Web Services ("AWS") that will migrate server system 307 data to projects service system 304/ storage service system 312 at a regular interval. Watcher service system 308 can save via storage service system 312 or watcher service system 308 can saves via through projects service system 304.

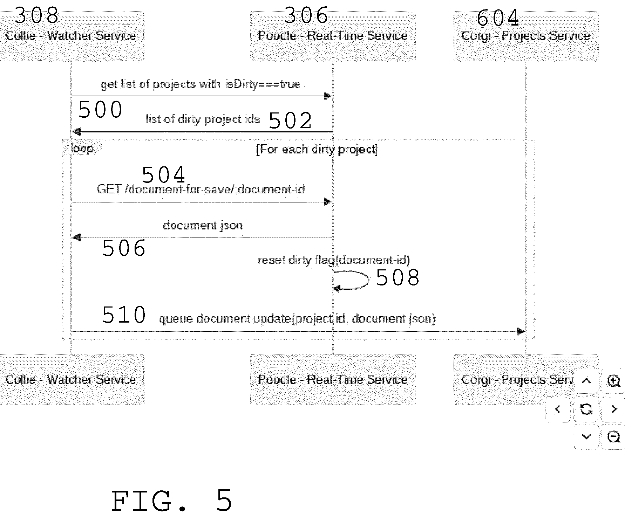

Referring to FIG. 5, a saving sequence can include watcher service system 308 that communicates a request to real-time service system 306 to get a list of dirty projects at 500. Real-time service system 306 then communicates a list or dirty projects IDs at 502 to watcher service system 308. Then for each dirty project, in a loop, watcher service system 308 requests an ID for a save at a value of time from real-time service system 306 at 504. Real-time service system 306 communicates a JSON document to watcher service system 308 at 506 in response to the request in 504. Real-time service system 306 resets dirty flag for document ID at 508. Watcher service system 308 communicates a queue document update including the project ID and the JSON document to projects service system 304 at 510.

Regarding a project schema, the project document schema will be checked when a project is saved to or loaded from the storage service. It can also be used to autogenerate the latest types for a project version. A json-schema-to-typescript can be used to generate the types from the project schema. The project schema can also be versioned so that any changes to it are tracked and do not break any applications. The graphQL schema will outline operations and queries that can be performed on the graphQL layer in the projects service. An apollo graphQL server can be setup. In addition to this, @graphql-codegen can be used to generate the typescript types for both server and client. @graphql-codegen is a code tool that helps keep the client and server code in sync easier. These typescript related things are for easier to manage internal code and they do not influence the behaviour of the system.

In order to iterate quickly in delivering the new projects experience to customers, a single feature flag can be used to enable/disable all features of system 300.

System 300 includes a single, well-typed, source-of-truth when a project is loaded into an app. The project document will have an interface that apps can implement for business logic. This will be the yjs client side document. The benefit of this is that collaboration and persistence are achieved starting with the new project source. However, similar performance/functionality can be achieved by using event handles that trigger a rerender of the user interface, when the project document changes. Alternatively, a redux store can be used.

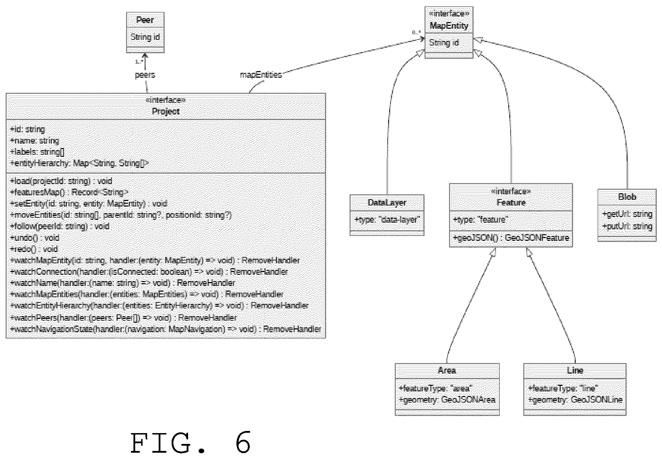

System 300 tracks the creation and architecting of this single source of truth document, in order to provide and use such a document in system 300. FIG. 6 is an example of the project interface (along with some relevant associations).

The new Projects Service is written in GraphQL with the app that was first wrapped in an apollo client provider initialized with the URL of the projects service. This can be initialized as soon as the user has logged in.

The project can also be provided through the react context API at a fairly high level, and thus accessible through most parts of the app. The project context and provider can sit in the @nearmap/project package since it is the interface defined by a project and a way to interact with the underlying project document. An example project context provider is given in the Appendix.

The features and project actions and selectors can be updated to defer handling to the project document itself. Thus, neither features nor projects will activate their reducers or sagas. They will simply perform changes to the project document. In order to achieve all new features and projects, duck can be created whose reducers will do nothing and the actions will all be handled by sagas. Any actions that result in changes to the data in features or projects will also increment a counter in the features and project store state. All selectors in the ducks will then defer to the project document and will also depend on the counter. This ensures that the features and projects are properly updated on each client when they are changed. This task can also involve disabling the persistence manager duck and node-operations duck when the feature flag is on. Alternatively, new "adapter ducks" can be created that do utilize their reducers, and do not use sagas.

Previously in the projects API, the z-index can be stored in the various layers as top level.

Projects service can include a "Scratchpad" when no project id is passed to MapBrowser (also called "Workspace" in MapBrowser). This represents an unsaved project (even though internally it still persists on a project node in the projects API). The main reason to do this is to have stable behaviour when the user does not pass a project id in the url. The scratchpad behaviour can be maintained with the new projects service. The scratchpad project can be a project keyed by the user's id. If a project is loaded via projects service system 304, but no project id is specified, the user's id can be used to fetch the scratchpad project.

For collaborative sessions, disconnections at the client side can be handled using the Miromodel, which is to make all map entities read-only and prevent access tools or editing features. This can ensure data consistency.

Yjs in system 300 provide a built in undo manager that uses a time based undo redo mechanism. When the UndoManager is initialized, a timeout is provided to create new items on the undo stack. Changes that happen together are thus batched together. The undo redo functionality can be in yjs directly. This means each client will have two states to manage undo redo: a stack of undo-redos uniquely identified by an id and a mapfrom entity id to undo redo ids. Each entity will also have a field identifying who made the last change to that entity. An example includes when it is supposed that the following scenario occurs: Alice draws a rectangle (identified by Rectangle) and Bob draws a circle (identified by Circle). Alice now has editor ownership over Rectangle and Bob has editor ownership over Circle. The undo stacks for Alice and Bob can include code found in the Appendix included herewith. Bob can then manipulate the circle to increase the radius so that Bob still has ownership over the circle and he can undo this action for example as implemented by code found in the Appendix included herewith. Alice can then start manipulating the Circle to decrease its radius so that now Alice has taken ownership over Circle that would be propagated to all replicas via server system 307. In which case, any replica (other than Alice) would have their undo stack for Circle cleared so that only Alice can use the undo feature relating to the Circle. Another alternative includes some or all of the stack of undo-redo from Bob are transferred over to Alice so that she can undo some of Bob's actions as well. Accordingly, the undo feature is only available to the user that created or modified an annotation last. The code included in the Appendix included herewith gives an example implementation of this functionality. This undo redo functionality can be achieved by creating a library that takes a snapshot of the project at predetermined times, intervals or user defined events.

The undo manager, which uses the time based undo redo mechanism of Yjs in system 300, provides advantages in the measurable Obliques user interface by allowing multiple users to interact with the same 3D geometry, each user having the ability to perform undo-redo while manipulating the geometry over their own choice of source photos or 3D viewpoint without disrupting each other's edits or views of the object. The measurable Obliques user interface uses OpenLayers ("OL") 2D line or polygon objects that handle displaying and manipulating polygons/lines in a project. OL objects are stored internally as ***Geometry*** data-structure, generated on the fly when a view is selected/changed, and manipulated by user in the active view. **Measurable Obliques** uses the following data structures to handle and store geometric information:
- ***photoGeometry*:** a 2D polygon defined by one image coordinate for each vertex of a *Geometry* object in a view. The *photoGeometry* of an active view is continuously updated during manipulation of the OL *Geometry* (***photoGeometry* of other views do not change)**
- ***ray*:** a ray (vector direction and sample position) corresponding to each *photoGeometry* coordinate of a view. The *rays* of an active view are continuously updated during manipulation of the OL *Geometry* based on the coordinates and pre-computed camera calibration parameters provided to the system. The camera calibration parameters may include intrinsic and extrinsic parameters that define the projection model of rays from the 3D world to the image space of the viewer. For example, the camera calibration parameters for a source image should define, among other things, the pose and position of the camera used to capture the photo and the geometry of the camera itself. ***(rays* data for other views do not change)**
- ***sourceGeometry*:** a 3D geometry with one 3D point per vertex generated by computation of median closest point of the set of *rays* from all views for that vertex. This is updated continuously as rays are updated.

Projects are stored in a server, serialized as json format to load/save by the user browser during a session (data managed in web browser by yjs system and not accessible without developer tools). Project data includes *photoGeometry, ray,* and *sourceGeometry* plus the OL *Geometry* data structure for the active view (at time of save).

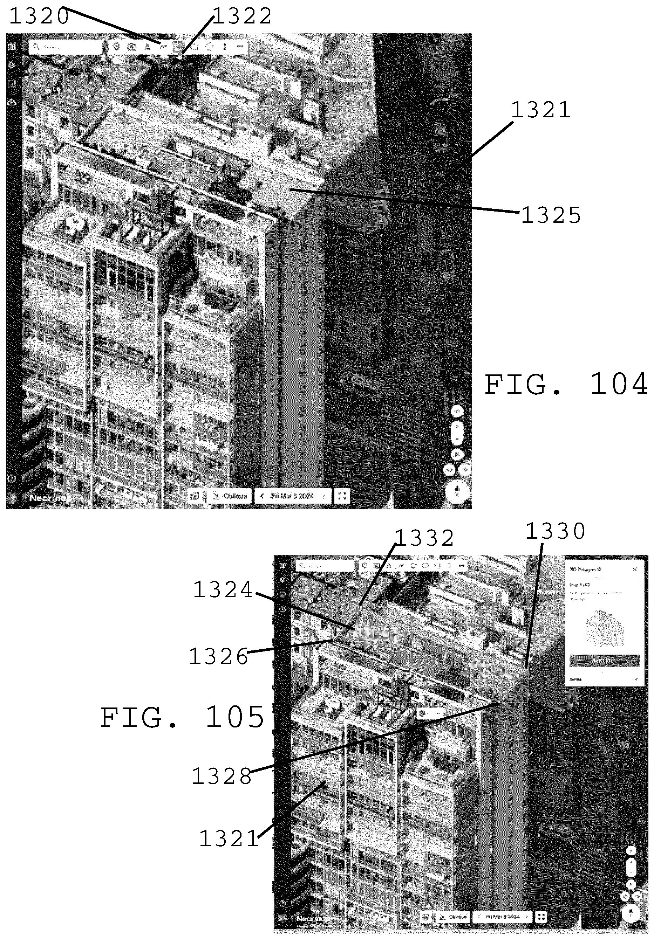

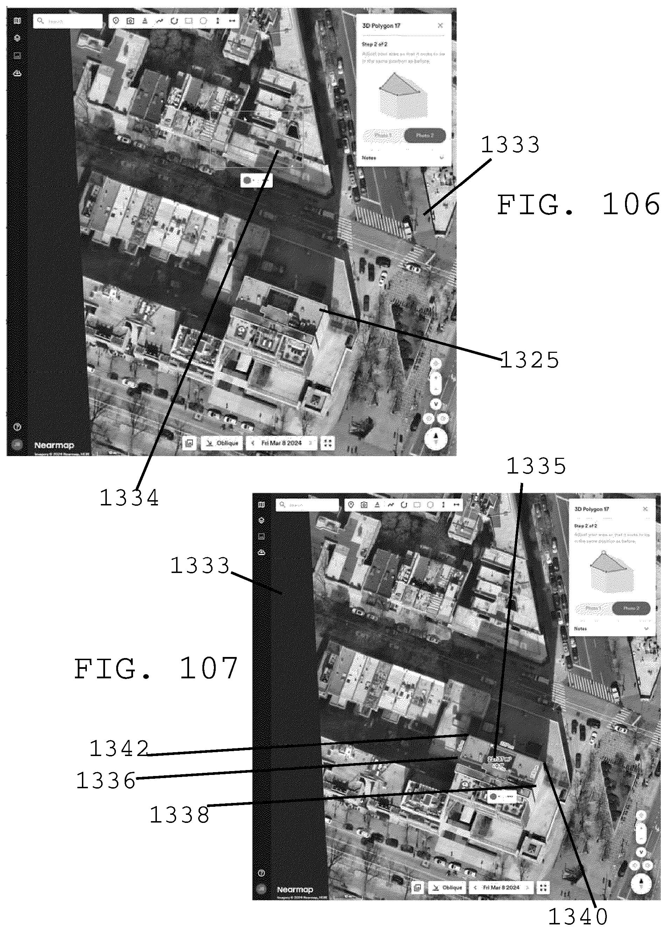

Referring to FIG. 104, a screenshot is shown of a first view 1321 of a project in Mapbrowser Oblique; however, other web-based imagery browsers can be used. Mapbrowser Oblique has a line tool 1320 and a polygon tool 1322. As shown in FIG. 105, a user can select the polygon tool 1322 and generate a first polygon 1324 having first vertices 1326, 1328, 1330, 1332 aligned with corners of a roof 1325 (FIG. 104) having a rectangular shape. First polygon 1324 has photoGeometry based upon the coordinates of each of first vertices 1326, 1328, 1330, 1332. An initial 3D sourceGeometry for the object can be generated based on the photoGeometry of the first image and the assumption that the object is found on the ground. Specifically, the system can use a precomputed digital elevation model (DEM) and define the 3D model as the set of 3D coordinates where the rays of the first image photoGeometry intersect with the DEM. Such a model is generated when the user selects a second view 1333 as shown in FIG. 106. A second 2D photoGeometry that forms a second polygon 1334 is then created from the sourceGeometry by projecting back to the second source image based on the camera calibration parameters of the second source image and then displayed in the second view. Then, as shown in FIG. 107, second vertices 1336, 1338, 1340, 1342 of second polygon 1334 can be manipulated by the user to align with roof 1325 as shown in the second view. The 3D sourceGeometry is updated continuously to match the updated locations of the vertices (photoGeometry) by triangulating the updated rays from the two views (1321 and 1333). Measurements 1335 of the 3D sourceGeometry are also continuously generated. Additional views including roof 1325 can be viewed and polygons generated so that each of their respective vertices additionally can be aligned with roof 1325 in each view. Each of first vertices 1326, 1328, 1330, 1332 and second vertices 1336, 1338, 1340, 1342 has a ray associated therewith. When there is a change of location of one of first vertices 1326, 1328, 1330, 1332 and/or second vertices 1336, 1338, 1340, 1342, then the respective ray associated therewith is also changed. It is noted that a direction of the ray corresponds to the direction of the camera to the location of the vertex in the photo when it is taken in the photogrammetry that is known from the data generated when the photo is taken. When one of first vertices 1326, 1328, 1330, 1332 or second vertices 1336, 1338, 1340, 1342 is changed, then the rays of the other vertices do not change and none of the points on the other images change either. The sourceGeometry is determined for each corner of roof 1325 as a point closest to both rays from each corresponding vertex, e.g., best fit, namely, a point between rays of each of vertex 1326 and 1336, a point between rays of each of vertex 1328 and 1338, a point between rays of each of vertex 1330 and 1340, and a point between rays of each of vertex 1332 and 1342. The accuracy of sourceGeometry will improve with additional views including roof 1325 and polygons generated so that each of their respective vertices can additionally be aligned with roof 1325 in each view. However, if only sourceGeometry is available undo and redo can be difficult because it incorporates all data, and then cannot determine where the original or previous vertices were of each polygon, e.g., first polygon 1324 and second polygon 1334. Additionally, it would be difficult to track all modifications users make to generate new sourceGeometry since it moves continuously.

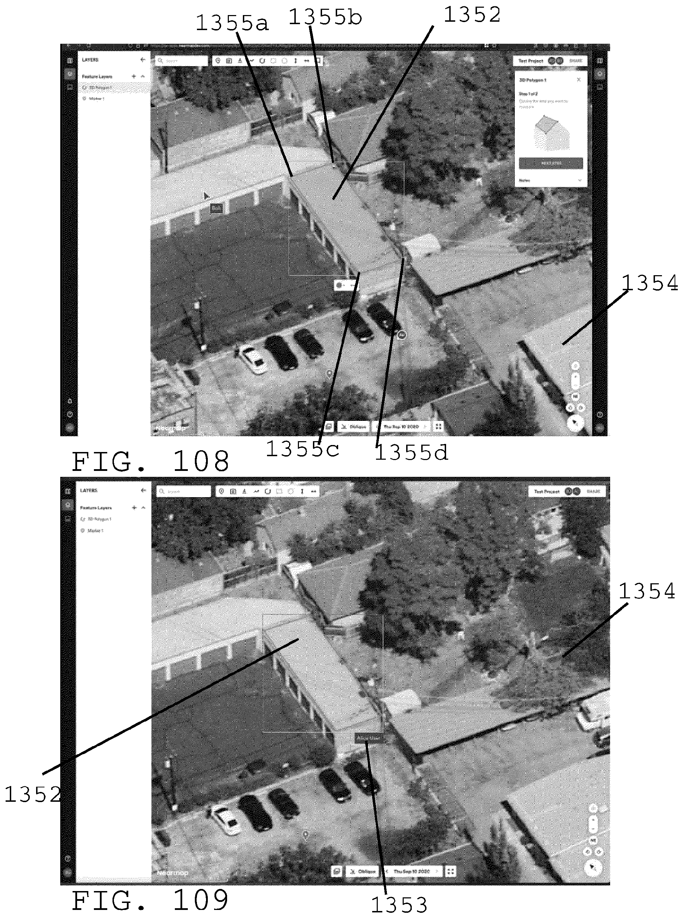

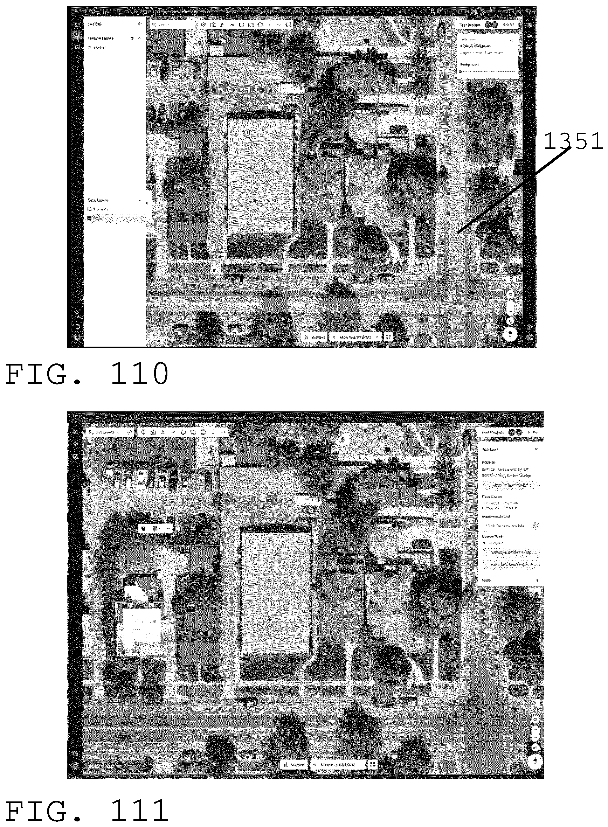

Referring to FIG. 108, another example includes Alice who is viewing an initial view 1354 of a project through a first user interface running on a first computer or other device. Referring to FIG. 109, Bob is viewing initial view 1354 of the same project as Alice on his separate second user interface running on a second computer or other device. Bob can navigate to the location of the project that Alice is viewing by copying and pasting the URL of initial view 1354 from Alice's user interface, searching for the location based on address, latitude and longitude coordinates, etc., a find or follow functionality available on the user interface, or other way for finding the location. The find or following functionality can be selected by a user, e.g., the second user Bob, through the second user interface that then displays the location on the second user interface that is being viewed by the first user, e.g., Alice, on the first user interface. When the second user follows the first user, then each of the first user and the second user can select different views of the same location and annotations will be displayed with different names on each of the first user interface and the second user interface. The first user, e.g., Alice, can also independently view different layers, e.g., roads 1351 as shown in FIG. 110, than the second user, e.g., Bob, that does not display the layer including roads as shown in FIG. 111. The following function will then continue to display the locations on the second user interface, e.g., viewed by Bob, that are being viewed by the first user, e.g., Alice, as the first user moves locations.

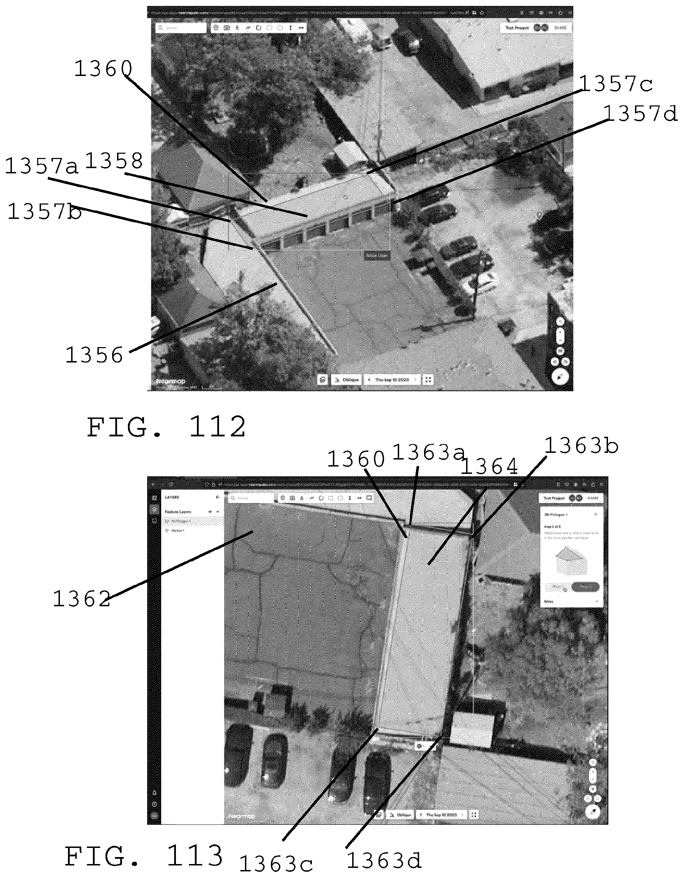

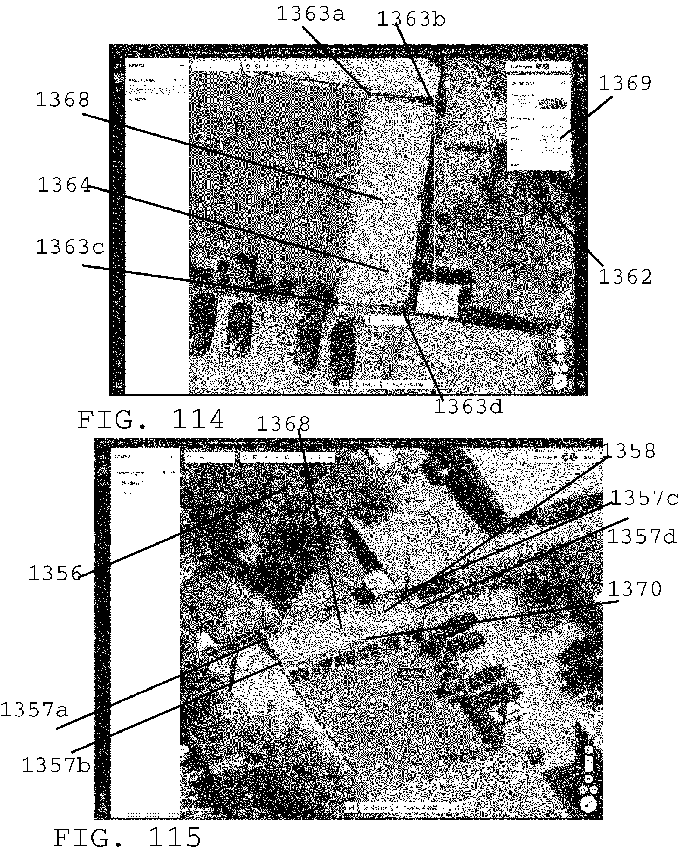

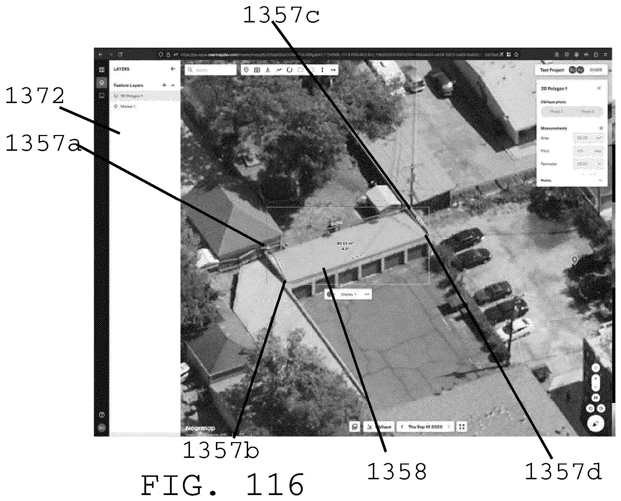

Referring back to FIGS. 108 and 109 that are 2D images that both display an initial photoGeometry forming an initial polygon 1352 in an initial view 1354 in first user interface and initial view 1354 is also displayed in the second user interface so that, similar to the discussion above, an initial 3D sourceGeometry for initial polygon 1352 can be generated based on the photoGeometry of initial polygon 1352 in initial view 1354 and the assumption that the initial polygon 1352 is found on the ground. As shown in FIG. 108, initial polygon 1352 displayed in initial view 1354 in the first user interface has initial vertices 1355a, 1355b, 1355c, 1355d. Initial view 1354 displayed in the second user interface includes indicia 1353 indicating that Alice has selected initial polygon 1352. As shown in FIG. 112, Bob selects a secondary view 1356 in the second user interface of the same location of initial view 1354 so that, based on the sourceGeometry of initial polygon 1352, a secondary polygon 1358 is generated and displayed in secondary view 1356 by projecting back to secondary view 1356 based on the camera calibration parameters of secondary view 1356 and then displayed in secondary view 1356. Due to the assumption that initial polygon 1352 is found on the ground, which it is not since it is a roof 1360, the sourceGeometry of initial polygon 1352 leads to secondary polygon 1358 that does not align with roof 1360 displayed in secondary view 1356 as shown in FIG. 112. Secondary polygon 1352 displayed in secondary view 1356 in the second user interface has secondary vertices 1357a, 1357b, 1357c, 1357d. Similarly, as shown in FIG. 113, Alice selects a third view 1362 in the first user interface of the same location of initial view 1354 so that, based on the sourceGeometry of initial polygon 1352, a third photoGeometry forming a third polygon 1364 is generated and displayed in third view 1362 by projecting back to third view 1362 based on the camera calibration parameters of third view 1362 and then displayed in third view 1362. Due to the assumption that initial polygon 1352 is found on the ground, which it is not since it is a roof 1360, the sourceGeometry of third polygon 1364 leads to third polygon 1364 that does not align with roof 1360 displayed in third view 1362. Third polygon 1364 displayed in third view 1362 in the first user interface has third vertices 1363a, 1363b, 1363c, 1363d. Moreover, since there is only a single set of rays, no measurements are displayed. As shown in FIG. 114, Alice can move one or more of third vertices 1363a, 1363b, 1363c, 1363d so that third polygon 1364 aligns with roof 1360 displayed in third view 1362 that then generates sourceGeometry having measurements 1368 and measurements 1369, for example, that include area, pitch, perimeter, that is updated from sourceGeometry of initial view 1354. A shown in FIG. 115, since Bob has not selected or clicked on secondary vertices 1357a, 1357b, 1357c, 1357d of secondary polygon 1358 with Bob's cursor 1370, there is no photoGeometry for secondary polygon 1358 and secondary polygon 1358 is moved to be displayed in secondary view 1356 so that it is also updated with sourceGeometry having measurements 1368 and measurements 1369 positioning secondary polygon 1358 closer to alignment with roof 1360. However, when Bob has selected or clicked on one or more of secondary vertices 1357a, 1357b, 1357c, 1357d of secondary polygon 1358 with Bob's cursor 1370, as shown in FIG. 116, secondary vertices 1357a, 1357b, 1357c, 1357d of secondary polygon 1358 become locked and movement of one more of initial vertices 1355a, 1355b, 1355c, 1355d of initial polygon 1352 and/or movement of one or more third vertices 1363a, 1363b, 1363c, 1363d of third polygon 1364 will no longer move secondary vertices 1357a, 1357b, 1357c, 1357d of secondary polygon 1358. Similarly, movement of secondary vertices 1357a, 1357b, 1357c, 1357d of secondary polygon 1358 does not move initial vertices 1355a, 1355b, 1355c, 1355d of initial polygon 1352 and third vertices 1363a, 1363b, 1363c, 1363d of third polygon 1364 as they are locked as well. However, movement of one more of initial vertices 1355a, 1355b, 1355c, 1355d of initial polygon 1352 and/or movement of one or more of secondary vertices 1357a, 1357b, 1357c, 1357d of secondary polygon 1358 and/or movement of one or more of third vertices 1363a, 1363b, 1363c, 1363d of third polygon 1364 will change sourceGeometry having measurements 1368 and measurements 1369 that are all the same values that will be displayed for initial polygon 1352, secondary polygon 1358, third polygon 1364 and any other views that have polygons generated therefrom. In addition when Alice and/or Bob change views, each view that was already displayed in the first user interface and/or the second user interface can be listed, for example, in text box 1372, so that Alice and/or Bob can then select one of the listed views in text box 1372 that will then be displayed in the respective first user interface or second user interface. In this example, Alice will be able to use the undo redo function until Bob has selected or clicked on one or more of secondary vertices 1357a, 1357b, 1357c, 1357d of secondary polygon 1358 in which case, Alice would have her undo stack for initial polygon 1352 and third polygon 1364 cleared so that only Bob can use the undo feature relating to the secondary polygon 1358 until Alice selects initial polygon 1352, secondary polygon 1358, third polygon 1364 and any other views that have polygons generated therefrom with her cursor 1374 subsequently.

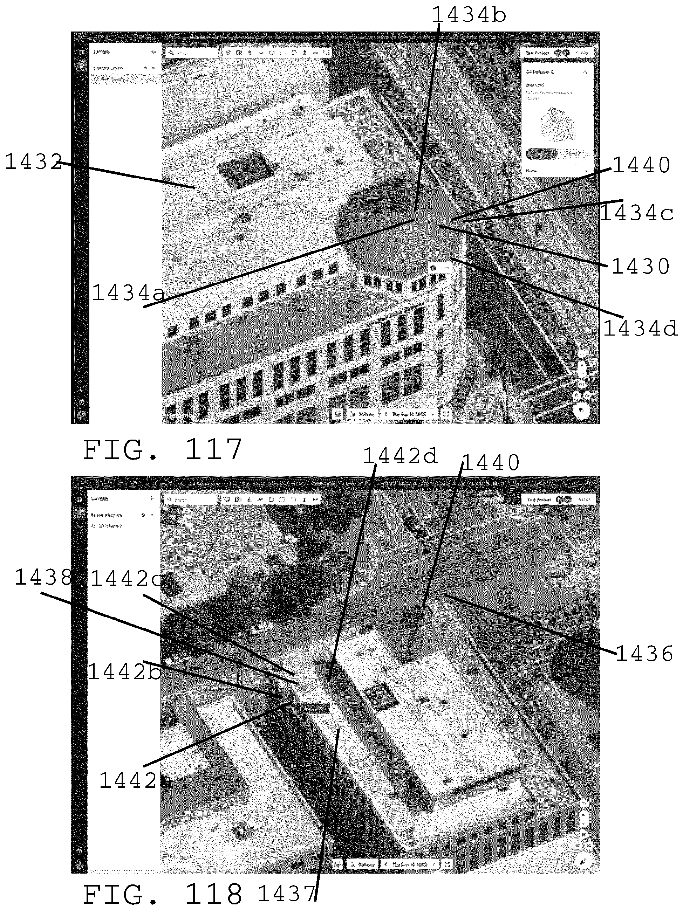

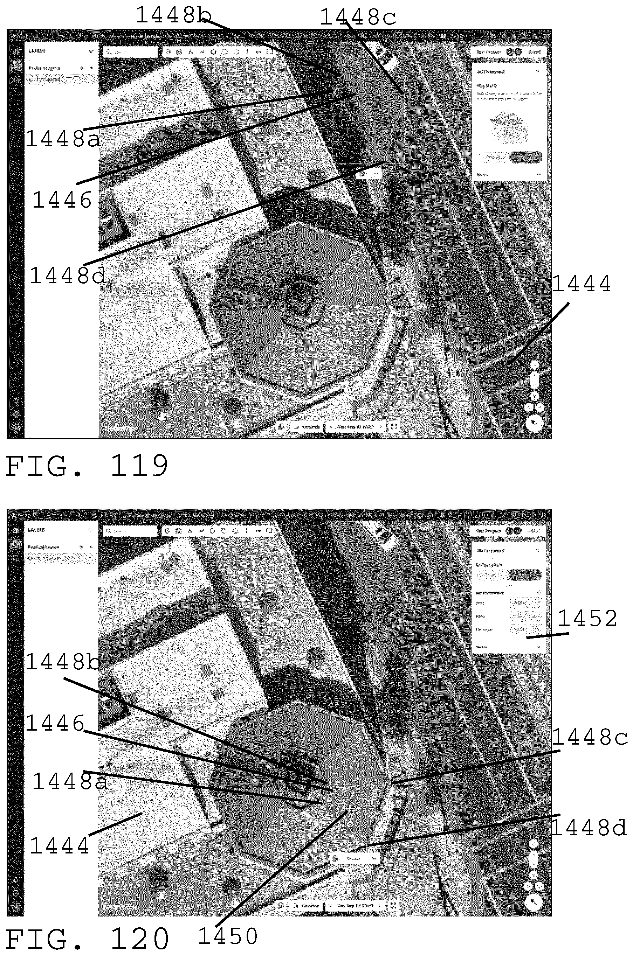

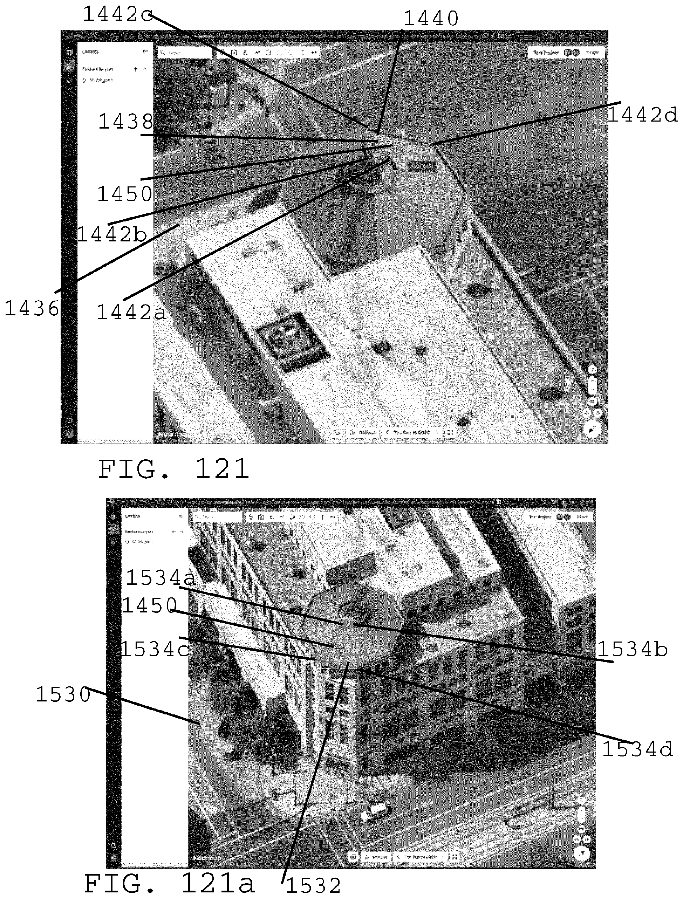

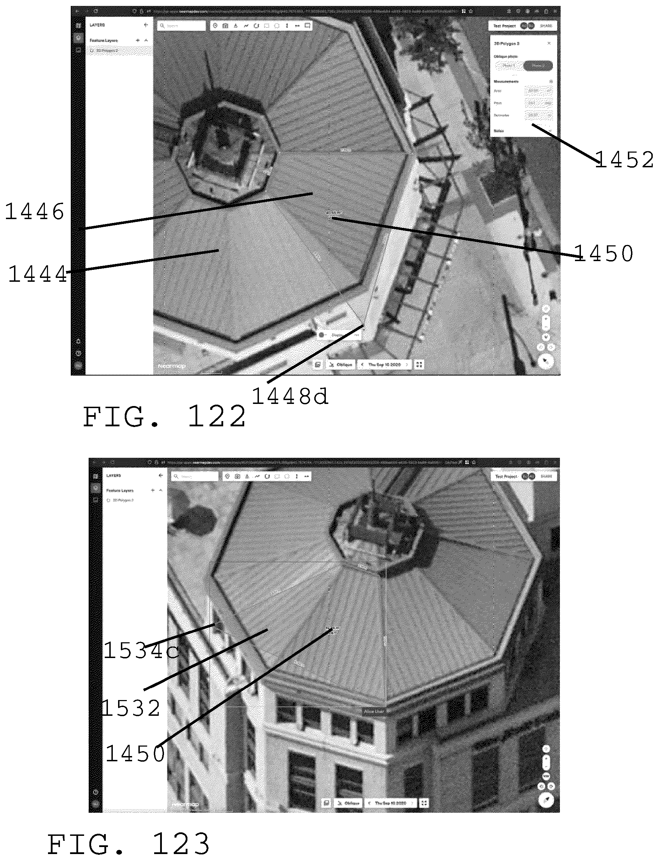

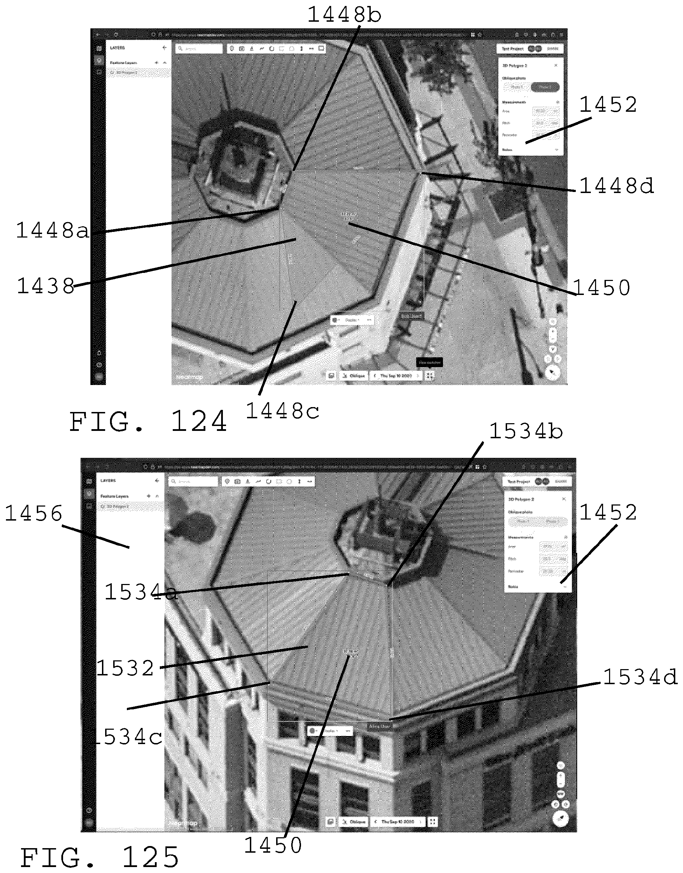

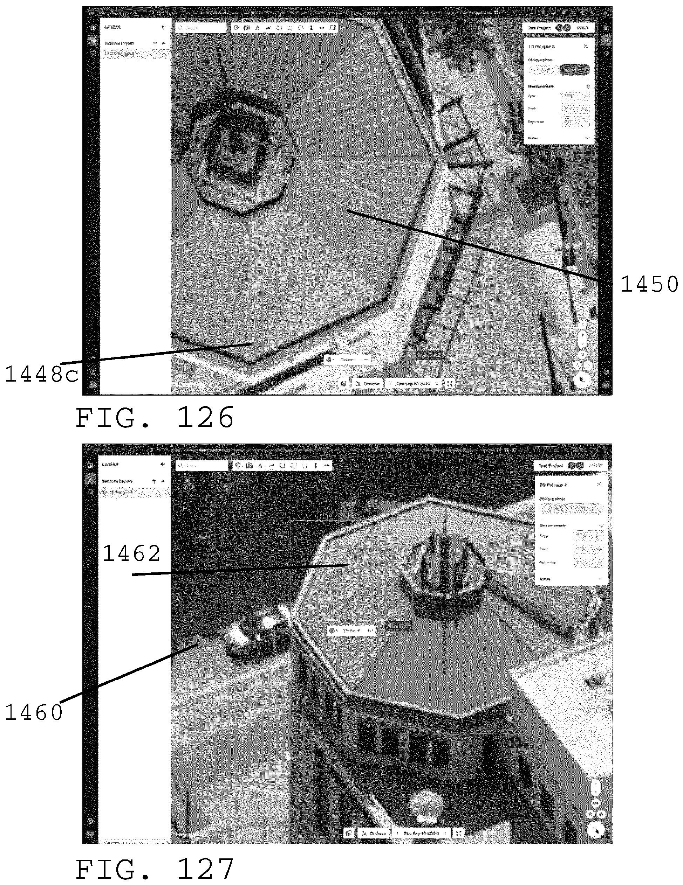

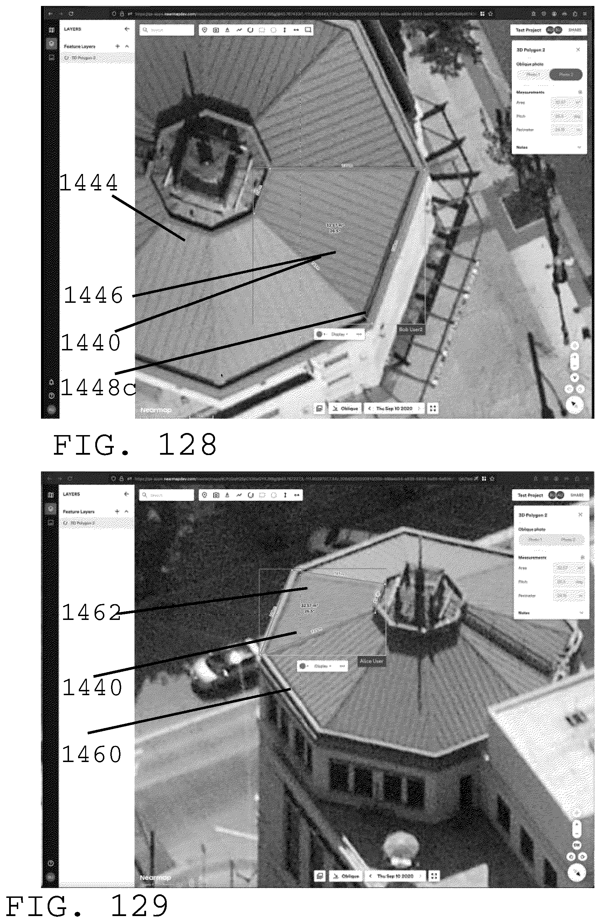

Another example is shown in FIGS. 117 and 118, that are 2D images that both display an initial photoGeometry that forms an initial polygon 1430 in an initial view 1432 in first user interface, as shown in FIG. 117, so that, similar to the discussion above, an initial 3D sourceGeometry for initial polygon 1430 can be generated based on the photoGeometry of initial view 1432 and the assumption that the roof facet 1440 is found on the ground. As shown in FIG. 117, initial polygon 1430 displayed in initial view 1432 in the first user interface has initial vertices 1434a, 1434b, 1434c, 1434d. As shown in FIG. 118, Bob selects a secondary view 1436 in the second user interface of the same location of initial view 1432 so that, based on the sourceGeometry of initial polygon 1430, a secondary polygon 1438 is generated and displayed in secondary view 1436 by projecting back to secondary view 1436 based on the camera calibration parameters of secondary view 1436 and then displayed in secondary view 1436. Secondary view 1436 displayed in the second user interface includes indicia 1437 indicating that Alice has selected initial polygon 1430. Due to the assumption that roof facet 1440 is found on the ground, which it is not since it is a roof facet 1440, the sourceGeometry of initial polygon 1430 leads to secondary polygon 1438 that does not align with roof facet 1440 displayed in secondary view 1436. Secondary polygon 1438 displayed in secondary view 1436 in the second user interface has secondary vertices 1442a, 1442b, 1442c, 1442d. Similarly, as shown in FIG. 119, Alice selects a third view 1444 in the first user interface of the same location of initial view 1432 so that, based on the sourceGeometry of initial polygon 1430, a third polygon 1446 is generated and displayed in third view 1444 by projecting back to third view 1444 based on the camera calibration parameters of third view 1444 and then displayed in third view 1444. Due to the assumption the roof facet 1440 is found on the ground, which as mentioned it is not since it is roof facet 1440, the sourceGeometry of third polygon 1446 leads to third polygon 1446 that does not align with roof facet 1440 displayed in third view 1444. Third polygon 1446 displayed in third view 1444 in the first user interface has third vertices 1448a, 1448b, 1448c, 1448d. Moreover, since there is only a single set of rays so far, no measurements are displayed. As shown in FIG. 120, Alice can move one or more of third vertices 1448a, 1448b, 1448c, 1448d so that third polygon 1446 aligns with roof facet 1440 displayed in third view 1444 that then generates sourceGeometry having measurements 1450 and measurements 1452 that include, for example, area, pitch and perimeter, that are updated from sourceGeometry of only initial view 1432. As shown in FIG. 121, since Bob has not selected or clicked on secondary vertices 1442a, 1442b, 1442c, 1442d of secondary polygon 1438 with Bob's cursor, there is no photoGeometry for secondary polygon 1438 and secondary polygon 1438 is moved to be displayed in secondary view 1436 so that it is also updated with sourceGeometry having measurements 1450 and measurements 1452 positioning secondary polygon 1438 closer to alignment with roof facet 1440. As shown in FIG. 121a, Bob can select a fourth view 1530 in the second user interface of the same location of initial view 1432 so that, based on the sourceGeometry having measurements 1450 and measurements 1452, a fourth polygon 1532 is generated and displayed in fourth view 1530 by projecting back to fourth view 1530 based on the camera calibration parameters of fourth view 1530 and then displayed in fourth view 1530. Since sourceGeometry having measurements 1450 and measurements 1452 is now based on initial polygon 1430 and third polygon 1446, fourth polygon 1532 has vertices 1534a, 1534b, 1534c, 1534d that are closer to alignment with roof 1440 and fourth polygon has sourceGeometry having measurements 1450 and measurements 1452 that is the same as initial polygon 1430, secondary polygon 1438 and third polygon 1446. As shown in FIG. 122, Alice can move vertex 1448d of third polygon 1446 in the first user interface in third view 1444, which moves vertex 1534c of fourth polygon 1532 in the second user interface, as shown in FIG. 123, which updates the sourceGeometry having measurements 1450 and measurements 1452 displayed in both fourth view 1530 in the second user interface, as shown in FIG. 123, and third view 1444 in the first user interface, as shown in FIG. 122. However, when Bob has selected or clicked on one or more of vertices 1534a, 1534b, 1534c, 1534d of fourth polygon 1532 with Bob's cursor, as shown in FIG. 125, vertices 1534a, 1534b, 1534c, 1534d of fourth polygon 1532 become locked and movement of one more of initial vertices 1434a, 1434b, 1434c, 1434d of initial polygon 1430 and/or movement of one or more third vertices 1448a, 1448b, 1448c, 1448d of third polygon 1446, as shown in FIG. 124, will no longer move vertices 1534a, 1534b, 1534c, 1534d of fourth polygon 1532, as shown in FIG. 125. Similarly, movement of vertices 1534a, 1534b, 1534c, 1534d of fourth polygon 1532 does not move initial vertices 1434a, 1434b, 1434c, 1434d of initial polygon 1430 and third vertices 1448a, 1448b, 1448c, 1448d of third polygon 1446 as they are locked as well. However, movement of initial vertices 1434a, 1434b, 1434c, 1434d of initial polygon 1430 and/or movement of secondary vertices 1442a, 1442b, 1442c, 1442d of secondary polygon 1438 and/or movement of third vertices 1448a, 1448b, 1448c, 1448d of third polygon 1446 and/or movement of vertices 1534a, 1534b, 1534c, 1534d of fourth polygon 1532 will change sourceGeometry having measurements 1450 and measurements 1452 that are all the same values that will be displayed for initial polygon 1430, secondary polygon 1438, third polygon 1446, fourth polygon 1532 and any other views that have polygons generated therefrom. In addition when Alice and/or Bob change views, each view that was already displayed in the first user interface and/or the second user interface can be listed, for example, in text box 1456 so that Alice and/or Bob can then select one of the listed views in text box 1456 that will then be displayed in the respective first user interface or second user interface. In this example, Alice will be able to use the undo redo function until Bob has selected or clicked on vertices 1534a, 1534b, 1534c, 1534d of fourth polygon 1532 in which case, Alice would have her undo stack for initial polygon 1430 and third polygon 1446 cleared so that only Bob can use the undo redo feature relating to the fourth polygon 1532 until Alice selects initial polygon 1430, secondary polygon 1438, third polygon 1446, fourth polygon 1532, and any other views that have polygons generated therefrom with her cursor 1458 subsequently. As shown in FIG. 126, Alice can move vertex 1448c so that it no longer aligns with roof facet 1440 that will change sourceGeometry having measurements 1450 and measurements 1452, but will not move vertices 1534a, 1534b, 1534c, 1534d of fourth polygon 1532. However, if Bob changes from fourth view 1436 to a fifth view 1460 in the second user interface as shown in FIG. 127, then a fifth polygon 1462 will be generated from sourceGeometry having measurements 1450 and measurements 1452 that reflects vertex 1448c that no longer aligns with roof facet 1440 so that fifth polygon 1462 also is out of alignment from roof facet 1440. Alice can then use the undo function of the undo redo functionality so that third polygon 1446 again aligns with roof facet 1440 in third view 1444, as shown in FIG. 128, in first user interface, which also moves fifth polygon 1462 more into alignment with roof facet 1440 as shown in FIG. 129 in fifth view 1460 in the second user interface. Polygons can be generated from sourceGeometry having measurements 1450 and measurements 1452 in other views and/or views in 2D or 3D. In particular, once measurements are taken in 3D space, e.g., of 3D mesh, then these polygons can be generated in different 3D views for many different views with greater accuracy. It is noted that accuracy of polygons when changing from view to view can also be improved based on the coordinate system used in the area of 3D imagery and renderings, e.g., for example, coordinate systems based on Local tangent plane coordinates (LTP) can be more accurate than coordinate systems based Universal Transverse Mercator (UTM).

Accordingly, a first method for undo in Mapbrowser Oblique or other oblique image browsers or other image browsers, includes fixing vertices, e.g., first vertices 1326, 1328, 1330, 1332 and second vertices 1336, 1338, 1340, 1342, in each image, e.g. the first view 1321 and the second view 1333, respectively, so the vertices will not change along with the new sourceGeometry. This can desirably work better for the undo function of the undo manager because the undo and redo will be based upon individual changes in each image, e.g. the first view 1321 and the second view 1333, because the vertices are fixed, so undo and redo is based off of the 2D of the viewed image where the changes are made. Undo and redo (undo/redo) is now tied to what the user is doing in the 2D image rather than the calculation of the sourceGeometry. SourceGeometry will be recalculated when there is an undo because it is generated on the current vertices. SourceGeometry will still be reflected in the measurements, e.g., measurements 1335, shown in each view. The user can go back to a previous view, e.g., the first view 1321, and the vertices, e.g., first vertices 1326, 1328, 1330, 1332, will not be changed based on changes to second polygon 1334, rather, vertices, e.g., first vertices 1326, 1328, 1330, 1332, stay the same. Implementation of undo/redo stores snapshots of yjs model and updates the yjs model to a previous snapshot. Thus, the undo function takes a time-based snapshot of a line or polygon in a project, e.g., first polygon 1324, and if a user activates the undo function, then the polygon or line goes back to the previous snapshot from the earlier time. This first method creates a new OL *Geometry* from *photoGeometry* of the yjs model when available and so the undo/redo is consistent both in internal state and the polygon/line render. The key of this first method is that UI defined locations are preserved when returning to a specific view. This means the computed geometry is only seen when selecting a new view without existing photoGeometry data. In collaboration mode the behavior is similar, but with the additional step of handing control of undo-redo to the latest operator to work on a 3D object, e.g., the last user to modify first polygon 1324/second polygon 1334. Alternatively, a first user can undo another user's change. Another alternative includes each polygon or line, e.g., first polygon 1324 and second polygon 1334, is its own entity allowing undo for each photogeometry in each image, e.g., first view 1321 and second view 1333. Still another alternative includes separate undo chains so that each user could have their own undo chain. An additional alternative includes separate chains for each property of a line or polygon, e.g., color, line change, and the like, so that each property could have an undo. A summary of this second method is as follows:
First view: [SAME]
   a. make new OL *Geometry* for view
   b. manipulate OL *Geometry* in UI, continuously updating the *photoGeometry* and *rays* of that view *AND sourceGeometry* (3D based on ground plane assumption)
Second/Change View:
   c. If OL *Geometry* object has previously been manipulated in this view so that view data has been stored perform option (i), otherwise perform (ii):
   i. make OL *Geometry* from existing view *photoGeometry* per vertex (i.e. **OL *Geometry same* as previous time view was** active); [CHANGE] OR
   ii. make OL *Geometry* object for view by projecting *sourceGeometry* back to current view using pre-computed camera calibration parameters [SAME]
Manipulate *Geometry* in UI, continuously updating the *photoGeometry* and *rays* of that view and source Geometry (3D by median ray intersections).

Using this method, one described above, generates a history of vertex edits of the 2D photoGeometries that is stored. Based on this history, undo-redo can be performed over each source photo independently without altering the appearance of the 3D object over any other source photo as the 2D photoGeometries are not updated. This allows multiple users to work independently over different source photos without causing any changes to each other's view of the 3D object. Depending on the specific implementation, each an independent undo-redo can be implemented over each source photo improving the workflow of users building a 3D model. It is noted that parameters calculated from the 3D sourceGeometry can update even though the view of the model does not, for example, pitch, area, perimeter length, and the like. Further to the undo-redo operation, a roll back operation may also be performed based on the history where the user can select from a plurality of previous states of the selected 2D photoGeometries from the history. In addition, the history of vertex edits of the 2D photoGeometries that are stored can be marked or tagged with version information. The version information can include user information, for example, the version information can include data identifying a user associated with each of vertex edits. A UI may be used for the selection of one or more history states in a roll back operation. The UI may present geometric information, measurement information, version information and/or user information for the user to select from. The UI may present information in a text format, a tabular or list format, or other suitable format such as a timeline, a time series or other plot or chart. The UI may provide sorting and/or filtering options (e.g. time based sorting, user based filtering, etc), and may further employ color coding and/or icons to enhance the user experience. The UI may further include geometric plots to illustrate the geometric data and options to pan, zoom, rotate or otherwise alter viewpoints to enhance the user experience.

Alternatively, a second method for undo in Mapbrowser Oblique or other oblique image browsers or other image browsers, includes when second polygon 1334 is moved, sourceGeometry is continuously changed. As second polygon 1334 is moved in the second image 1333, then second vertices 1336, 1338, 1340, 1342 are modified with new measurements and the original measurements are forgotten. Based on this new sourceGeometry in the second image 1333, when the user goes back to the first image 1321 then first polygon 1324 will also be different, e.g., first vertices 1326, 1328, 1330, 1332 will be in different locations, based on the new sourceGeometry and will continue to update with additional movement of second polygon 1334 and vice versa. Accordingly, an undo of a modification of a user of first polygon 1324 or second polygon 1334 would cause first polygon 1324 or second polygon 1334 to go back to a prior sourceGeometry, which would not necessarily correspond to the modification just made which can be undesirable. Any output values such as pitch and area are updated with the 3D geometry and the actual geometry of first polygon 1324 or second polygon 1334 is displayed whenever a user changes views, e.g., between the first view 1321 and the second view 1333, and thus polygons, e.g., first polygon 1324 or second polygon 1334, may not line up exactly with the points previously set on that view due to median ray intersection calculation. In summary this first method does the following:
1. First view:
   a. make new OL *Geometry* for view
   b. manipulate OL *Geometry* in UI, continuously updating the *photoGeometry* and *rays* of that view *AND sourceGeometry* (2D based on ground plane assumption)
2. Second/Change view:
   a. make OL *Geometry* object for view by projecting *sourceGeometry* back to current view using pre-computed camera calibration parameters,
   b. manipulate OL *Geometry* in UI, continuously updating the *photoGeometry* and *rays* of that view *AND sourceGeometry* (3D - by median ray intersections)

When using this method two described above, the 3D sourceGeometry would be updated when an edit to a 3D object vertex is made by the first user. This change would alter the geometry being presented to a second user who can also be editing the same object and the update may be unexpected and confusing for the second user. Furthermore, if the system stores a historical set of sourceGeometries and tries to perform an undo-redo operation based on this it may generate unintuitive results to the users. This is due to the fact that there is not a one to one relationship between changes to a 3D sourceGeometry vertex and changes to a set of 2D photoGeometries presented to the user. Depending on which change is selected, the appearance of the 3D geometry may change over different views when performing an undo or a redo operation.

As a further embodiment, the system can utilize different viewing modes for multiple users. For example, a first user may be viewing and editing geometries while viewing 3D mesh, while a second user is viewing and editing geometries while viewing Obliques. This method of operation has significant performance and usability benefits, due to the interaction of sourceGeometry with photoGeometry and rays. A first user editing geometries on 3D mesh may define a sourceGeometry by selecting points on the 3D mesh. 3D coordinates can be directly sampled from the 3D mesh geometry to create a sourceGeometry. A second user viewing Obliques will see the sourceGeometry displayed onto the Oblique imagery as photoGeometry, using the camera calibration parameters to calculate rays and photoGeometry from the sourceGeometry for the imagery. Similarly, sourceGeometries created by a first user from multiple source images may be viewed and edited by a second user viewing the sourceGeometries in 3D mesh.

Referring to FIG. 7, system 10 and 300 can be modified to system 700. This diagram is a simplified high level view of the structure and interactions of project collaboration when using the real time service to manage updates to project content. This architecture supports multi-user collaboration and even if only the owner of a document is able to access it, the owner could still do it through a single websocket connection to the real time engine.

System 700 has Apps system 702 that connect to Apps Services system 704 that is connected to API Services system 706. Apps system 702 is a user interface for a user. Apps system 702 can be more than one of Apps system 702 that are each separate, for example, a first application on a first computer and a second application on a second computer. Apps Services system 704 includes a projects hub system 708 and projects real time system 710. API Services system 706 includes a projects watcher system 712 and a document storage system 714. Apps system 702 communicates with both projects hub system 708 and projects real time system 710. Projects hub system 708 communicates with projects real time system 710. Projects hub system 708 also communicates with document storage system 714. Projects watcher system 712 communicates with both projects hub system 708 and projects real time system 710.

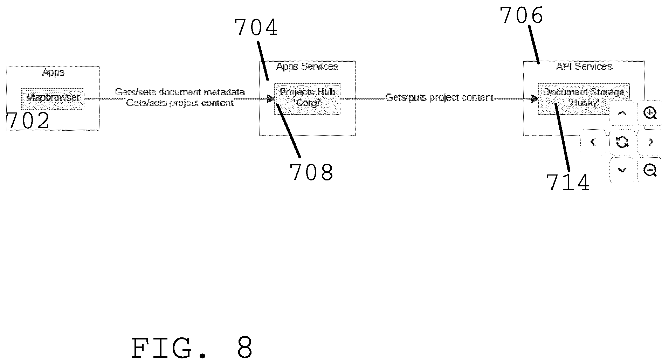

Referring to FIG. 8, system 700 runs in a "non-real time" mode where loading and saving is performed directly by Apps system 702 to projects hub system 708. This mode essentially bypasses projects real time system 710, and projects watcher system 712, resulting in the components of FIG. 8 being used. Projects hub system 708 can still communicate to document storage system 714 in this mode.

Document storage system 714 is a CRUD service used to store/retrieve project related data that is similar to storage service system 312, and stores document types in addition to projects.

Projects hub system 708 is similar to projects service system 304 but is also expanded to be a central coordinator of app-related business logic in the project collaboration system and has various responsibilities that include providing a graphQL API for querying document metadata and some limited content, and for modifying and performing actions on documents e.g. renaming, deleting; providing a REST endpoint for two distinct uses: /document/routes designed for use by projects watcher system 712 and other routes for use by Apps system 702 or other apps, for reading and writing data that is too large to transfer over graphQL; and handling data migration of legacy projects API data into the new system.

Projects real time system 710 is similar to real-time service system 306 since they both provide collaborative functionalities to projects using yjs, with a websocket server. Projects real time system 710 provides a REST API for other services to use: for projects hub system 708 to use to load new document content and for projects watcher system 712 to use to query for dirty projects and notify when they have been saved. Projects real time system 710 also allows websocket connections that are used to send and receive real time updates to documents in the form of yjs updates. This can be the only channel that Apps system 702 uses to interact with projects real time system 710. A redis channel can be used to coordinate between replicated pods where multiple users are collaborating on a single document but are connected to separate pods. Redis is remote Dictionary Server - is a source-available, in-memory storage, used as a distributed, in-memory key-value database, cache and message broker, with optional durability. System 700 can only use the message broker aspect of it to send data between pods.

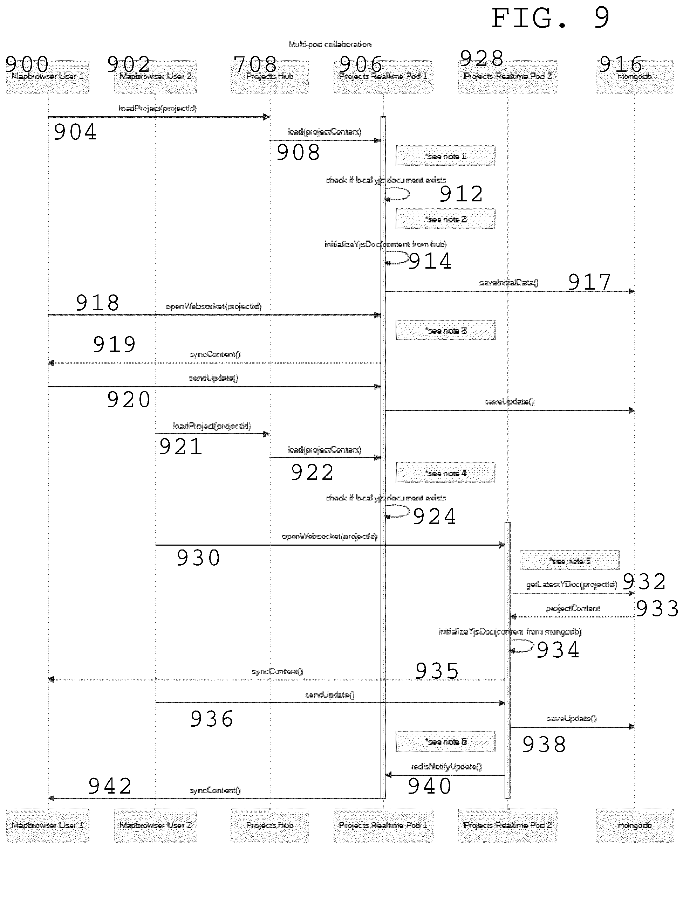

Referring to FIG. 9, a first user is using a first device 900 logged onto Apps system 702 and a second user is separately using a second device 902 logged onto Apps system 702 in system 700. First device 900 communicates a load project ID to projects hub system 708 at 904. Projects hub system 708 then communicates load project content data to a pod 1 906 of projects real time system 710 at 908. When load is called, pod 1 906 of projects real time system 710 will check if a project already has a yjs document in memory or not, at 912. If the project does not exist yet (as is the case at this point in the example), a new session and initialization at 914 will be done with the content sent from projects hub system 708. If the project does already exist, it means a new user is connecting to an existing session. The requesting user is flagged to allow access to the existing document, but the content sent from projects hub system 708 is not used. When pod 1 906 of projects real time system 710 checks if a project already has a yjs document in memory or not at 912, on initial load, one projects-real time pod will create a yjs document in memory with the project's content. The content will also be saved in the shared mongodb instance 916 or other database of projects real time system 710 so it will be available to other pods if/when needed at 917 after new session and initialization at 914. First device 900 communicates an open websocket based on the project ID to a pod 1 906 of projects real time system 710 at 918. When a client connects, if the client is routed to the same pod as the yjs document was initially loaded in, the server already has a yjs doc in memory so the client can sync from and update to at 919 and 920. The update can also be saved to the mongodb instance 916. Second device 902 communicates a load project ID to projects hub system 708 at 921. Projects hub system 708 then communicates load project content data to pod 1 906 of projects real time system 710 at 922. This is an example of a new user connecting to an existing document session. Note the content sent on the preceding load is not used. When load is called, pod 1 906 of projects real time system 710 will check if the project already has a yjs document in memory or not at 924. Second device 902 communicates an open websocket based on the project ID to a pod 2 928 of projects real time system 710 at 930. When a client connects but is routed to a different pod, the real timeservice of the pod being connected to has to create a new yjs document in memory, and populate it from the data currently in mongodb instance 916 at 932, 933 and 934. Pod 2 928 of projects real time system 710 syncs content with first device 900 at 935. Second device 902 communicates updates to pod 2 928 of projects real time system 710 at 936. Pod 2 928 of projects real time system 710 communicates updates for saving to mongodb instance 916 at 938. When multiple pods are involved in the collaboration of a single document, updates to that document need to be published over redis in order to update the yjs copy in other pods and send those updates to the users connected to those pods. This is the step where redis pub/sub is involved. In particular, Pod 2 928 of projects real time system 710 communicates updates to pod 1 928 of projects real time system 710 at 940 and pod 1 928 of projects real time system 710 syncs content with first device 900 at 942.

A mongodb instance 916 is a mongo persistence layer used by projects real time system 710 to:
Save incremental updates received over websocket connections Use those updates to reproduce the latest full document content, for:
   Other pods to get initial data from (see sequence diagram of FIG. 9)
   Getting full content for projects-watcher to save
Store metadata information about document sessions, including:
   Which users have access to which documents
   Timestamps of last user activity, to determine when sessions can be ended and memory cleaned up
   Information to determine which documents are dirty and need saving

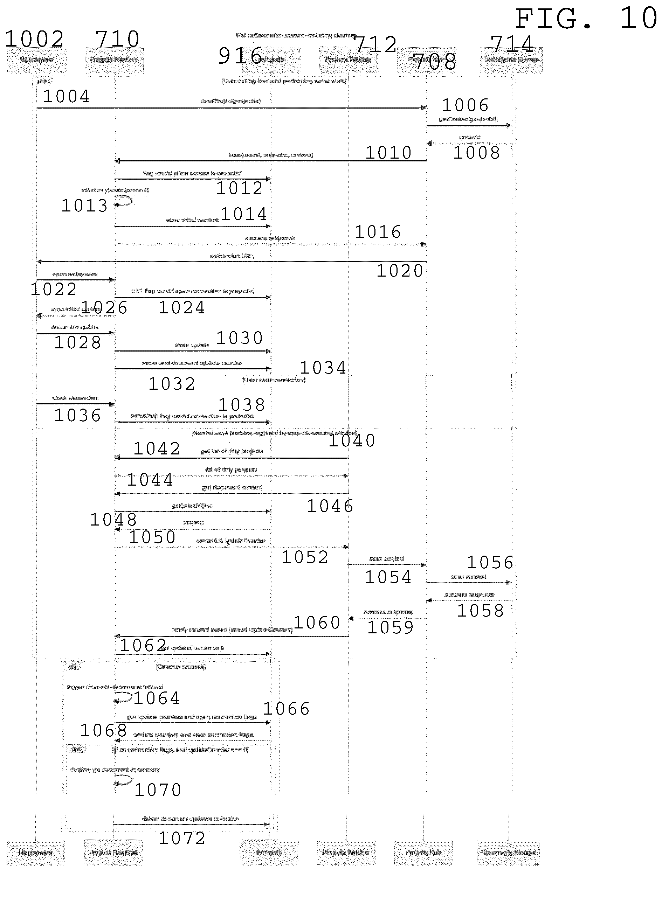

FIG. 10 shows an end-to-end load and clean up and the whole sequence of the following:
A user interface, e.g., first user interface 12, second user interface 14 and/or other user interfaces, loading a project into real time;
connecting to the project and making a change;
disconnecting;
letting the project be saved; and
cleanup session data from real time service.

FIG. 10 shows an exemplary workflow including a first user using a first device 1002 logged onto Apps system 702 communicates a load project with project ID to projects hub system 708 at 1004. Projects hub system 708 communicates data including a get content with project ID to document storage system 714 at 1006. Document storage system 714 communicates content to projects hub system 708 at 1008. Projects hub system 708 communicates data that includes load with user ID, project ID and content to projects real time system 710 at 1010. Projects real time system 710 communicates data to MongoDB instance 916 to flag if the user ID allows access to the project associated with the project ID at 1012. Projects real time system 710 checks if a project already has a yjs document in memory or not, and, if the project does not exist yet, a new session and initialization at 1013 will be done with the content sent from projects hub system 708. Projects real time system 710 communicates data to MongoDB instance 916 to store initial content at 1014. Projects real time system 710 communicates a success response to projects hub system 708 at 1016. Projects hub system 708 communicates a websocket URL to first device 1002 at 1020. First device 1002 opens the websocket connection to projects real time system 710 at 1022. Projects real time system 710 communicates with mongodb instance 916 to set a flag based user ID open connection to a project ID at 1024. Projects real time system 710 syncs initial content with Apps system 702 of first device 1002 at 1026. Apps system 702 of first device 1002 communicates documents updates to projects real time system 710 at 1028. Projects real time system 710 communicates updates to mongodb instance 916 for storage at 1030. Projects real time system 710 also increments a document update counter to mongodb instance 916 at 1032. The user then ends their connection to Apps system 702 of first device 1002 at 1034.

Still referring to FIG. 10, after the user then ends their connection to Apps system 702 of first device 1002 at 1034, Apps system 702 of first device 1002 closes the websocket connection between Apps system 702 of first device 1002 and projects real time system 710 at 1036. Projects real time system 710 then communicates with mongodb instance 916 to remove the flag user ID connection to the project ID at 1038. A normal save process is triggered by projects watcher system 712 at 1040. Projects watcher system 712 communicates a list of dirty projects or existing projects that include user modifications/annotations to projects real time system 710 at 1042. Projects real time system 710 communicates a list of dirty projects to watcher system 712 at 1044. Watcher system 712 communicates to projects real time system 710 to get document content at 1046. Projects real time system 710 communicates to mongodb instance 916 to get the latest yj document at 1048. Mongodb instance 916 communicates content to projects real time system 710 at 1050. Projects real time system 710 communicates content and a value of update counter to projects to watcher system 712 at 1052. Projects to watcher system 712 communicates content to projects hub system 708 at 1054. Projects hub system 708 communicates data content to document storage system 714 at 1056. Document storage system 714 then communicates a success response to projects hub system 708 at 1058. Projects hub system 708 then communicates a success response to projects watcher system 712 at 1059. Projects watcher system 712 then communicates a notification of content saved with saved update counter to projects real time system 710 at 1060. Projects real time system 710 communicates to projects watcher system 712 to set update counter to zero at 1062.

Still referring to FIG. 10, a clean-up process commences after projects real time system 710 communicates to projects watcher system 712 to set update counter to zero at 1062. Projects real time system 710 triggers a clear-old-documents interval at 1064. Projects real time system 710 communicates with mongodb instance 916 to get update counters and open connection flags at 1066. Mongodb instance 916 communicates update counters and open connection flags to projects real time system 710 at 1068 if there are no connection flags and update counter equals 0. Projects real time system 710 destroys yj documents in memory at 1070 and communicates to mongodb instance 916 to delete document updates collection at 1072.

The data in the memory of projects real time system 710 and mongodb instance 916 is only intended to be used for the duration of the real time "session". Once the data is stored in projects-storage the session is done, the data is cleared to avoid the memory and storage use of that service growing and becoming unmanageable. This cleanup only occurs when:
The document is clean (i.e. latest state has been saved via watcher to document-storage, or was never changed after load);
There are no active websocket connections to the document;
All flags allowing user access to the document have expired. This last point is necessary because at the point in time immediately after load is called, but before a websocket is opened, the project is clean and has no active websocket connections, so by the first two points would be considered safe to clear.

Projects watcher system 712 is responsible for triggering the saving/migrating data from projects real time system 710 to document storage system 714, via projects hub system 708. An integer counter that is incremented each time a user makes a change is used by real time system 710 and mongodb instance 916, so on saving it can easily tell whether:
On save if the counter is equal, the saved content is still latest and the document is now clean; or
On save if the counter is not equal, a modification was made since the snapshot of content to save and the document is still dirty.

Alternatively, a Boolean system can determine dirtiness. However, Boolean rather than a counter to determine dirtiness can undesirably have the issue where after saving it is impossible to determine whether the saved document had been modified between the document GET and the saved PUT.

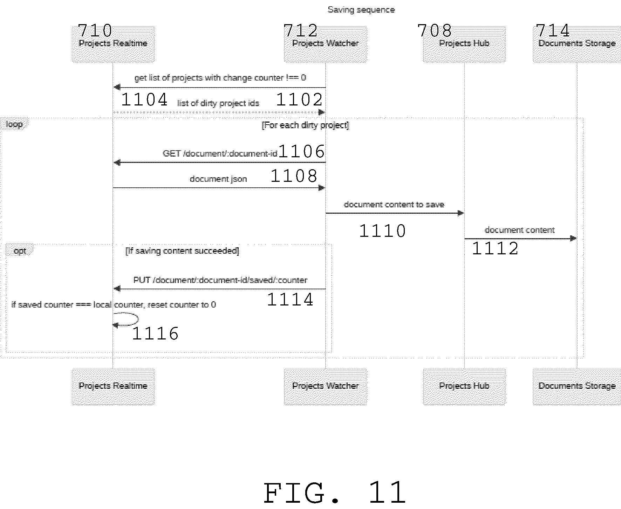

Referring to FIG. 11, projects watcher system 712 communicates to projects real time system 710 to get a list of projects with change counter that do not equal zero at 1102. Projects real time system 710 communicates a list of dirty project IDs to projects watcher system 712 at 1104. For each dirty project in a loop, projects watcher system 712 communicates to projects real time system 710 to get the document and a document ID at 1106. Projects real time system 710 communicates a document JSON file to projects watcher system 712 at 1108. Projects watcher system 712 communicates document content to save to projects hub system 708 at 1110. Projects hub system 708 communicates document content to document storage system 714 at 1112. Optionally, if saving content has succeeded, projects watcher system 712 communicates a PUT for each document having the document ID, that it is saved and the counter at 1114. If saved, projects real time system 710 then resets a local counter to zero at 1116. Thus, a server keeps a copy of projects that are being edited in real time by each user in short term memory, then a snapshot of the projects are communicated to long term memory. Watcher, e.g., projects watcher system 712, decides when to move to long term storage, e.g., take snapshots once every minute of everything for all users. Every time a change to a project happens counter is incremented. Watcher, e.g., projects watcher system 712, communicates to give all projects with counter greater than zero (determines when a document has been modified by the user, so it is dirty) to long term storage. When a project is saved to long term storage then it is considered clean again until modified further so that its counter equals zero again. These old versions in long term storage can be retrieved from the long term storage if needed. This could identify which users made changes during the time period between snapshots. This could also track changes per feature and by user. The timing for snapshots is a balance of how much storage used and how often want a revision available. Other ways to track how to identify which users made changes can also be used.

All of the above services can be replicated in multiple regions, for example, Asia Pacific (Sydney) ap-southeast-2, US East (N. Virginia) us-east-1. The main reason for this is to reduce latency of users accessing data and collaborating in real time. The following features may be advantageous when replicating services in multiple regions:
Requests to projects hub system 708 base URL (e.g. api.nearmap.com/projects-hub/...) will always be routed to the local services;
A document is only stored in one region, chosen by the region of the user when first created; and
A document can only be loaded into projects real time system 710 of the same region that owns the document.

This multi-region setup can be the same in both test and production environments. Where there are two replications of the infrastructure deployed, one for internal testing (QA) and one used by live users (prod).

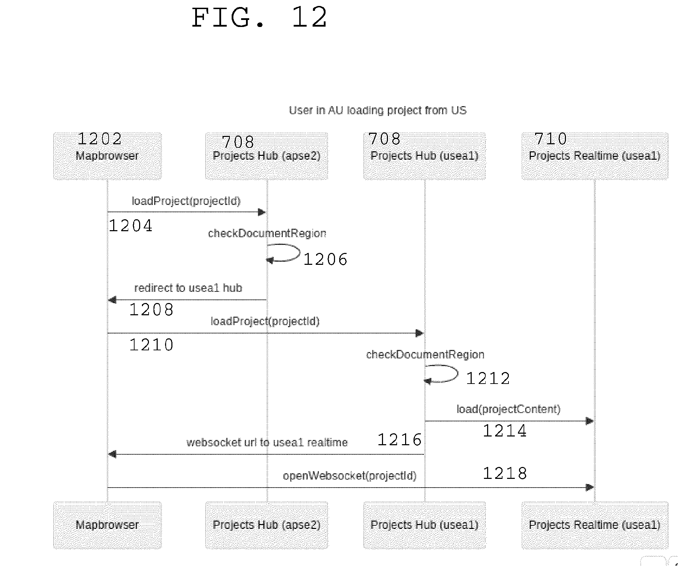

For cross-region loading, if a user attempts to load a document that is owned by a different region than they are currently in, the user will be redirected to the other region's hub to attempt the load there as set forth in FIG. 12. Apps system 702 of a user's device 1202 communicates with a first of projects hub system 708 to load a project based on a project ID at 1204. The first of projects hub system 708 checks the document's region at 1206. The first of projects hub system 708 communicates a redirect to a second of projects hub system 708 at 1208. Apps system 702 of the user's device 1202 then communicates with the second of projects hub system 708 to load the project based on the project ID at 1210. The second of projects hub system 708 checks the document's region at 1212. The second of projects hub system 708 communicates with a second of projects real time system 710 to load project content at 1214. The second of projects hub system 708 communicates a websocket url to Apps system 702 of a user's device 1202 at 1216. Apps system 702 of a user's device 1202 communicates to open a websocket based on the project ID to the second of projects real time system 710 at 1218.

For each document type stored in system 700, a set of typescript types are included and a json schema to is defined. These document types can include:
MapProject - Mapbrowser project content.
MapbrowserUserSettings - General user settings and state. Will be 1 document per user, and can contain the sort of data Mapbrowser currently stores in browser local storage.
BlobContent - Initially this will store raw KML data but can be a type to store any large atomic units of data, e.g., potentially kmz, geojson or shapefiles in the future.
These types are defined by typescript types as the main source of truth. It can then be used as ts-json-schema-generator to generate json schemas based on the typescript types that can be used by a json validator to verify data at runtime. This system is desirable because:
Both typescript types and JSON schema are desirable, as both are needed for different purposes;
Only writing one is desirable, and generating the other automatically, to ensure they never go out of sync;
The one written by hand will be neater and more readable than the other;
While developing and maintaining the code, developers will see and use the typescript types far more often than they would JSON schemas;
Therefore the TS types should be written by hand to make them the highest quality for readability, and generate the JSON schemas which people will not look at often.
Alternatively, the opposite of this (write JSON and generate types) could be used.

There are a number of pieces of code that can be shared between the different services and applications:
Document types and schemas. All packages need the shared typescript type definitions.
Code for converting between legacy project data to/from MapProject
   This is needed by Mapbrowser document-adapters 1302 package in order to do the adapting between document-service package 1304 which only works in new MapProject types, and the majority of mercury code which uses legacy types.
   Also needed by projects hub system 708 in order to migrate data stored in legacy projects API into MapProject objects.
Code for populating a yjs document with MapProject data, and for reading it back out. This code can be called yjs-bindings:
   This is needed by projects-real time in order to populate a server-side instance of a yjs document, and for reading data back out in order to save it.
   It is needed by document-service in order to read the data out of a yjs document after syncing with the server, and for updating it in the correct shape

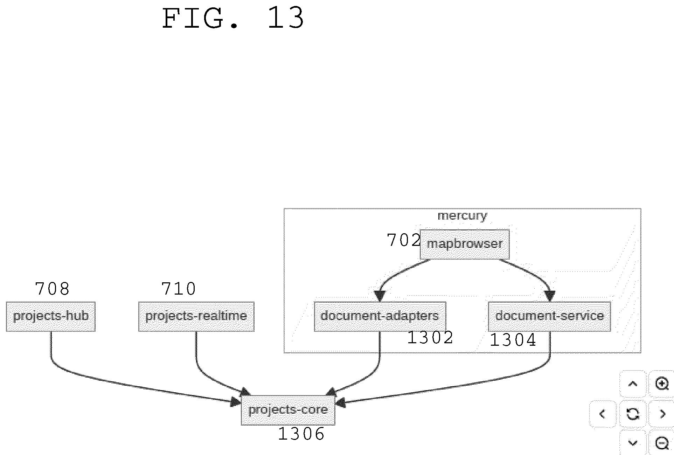

In order to allow this code sharing between repositories, a projects-core 1306 repository was created, which is published to an internal package repository that can be used as a dependency in other repositories. This is illustrated by code dependencies shown in FIG. 13.

System 700 uses the storing entries of UserID + DocumentID + Role where:
From perspective of document-storage, Role can be an arbitrary string with no meaning. It can be up to apps side(projects-hub) to define roles and implement necessary business logic;
document-storage will provide queries:
   Given a UserID return all DocumentID+Role - e.g. for getting list of projects to show in projects navigator;
   Given a DocumentID return all UserID+Role - e.g. for showing list of who has access to a document in the new sharing modal.

Roles can be as set forth in the table below:

| **Fine-Role** | **Description** |
|---|---|
| owner | Full control. Archive & delete only available to owner |
| editor | Read/write |
| viewer | Read-only |

New module in projects hub system 708 to encapsulate querying projects hub system 708 and performing access control checks are provided throughout app via configuration interface. An ownerld field identifier can be included on documents, but it may not be used for access control. A creatorld identifier can be used under the assumption that owner should be tracked through an ACL system instead, to avoid multiple sources of truth for a user's role.

To enable a "share with organization" via link feature, the same ACL storage method can be used where the "user ID" is a unique ID representing the "link-share group" of the user's organization. The same roles as defined for individual users can be used. User ID is also referred to as userlD herein.
Will be stored as a role in the same ACL system as individual user roles, but with a special ID for userld.
If a user loads a document flagged viewer for link-share access, fine-grained viewer access can be set for them at that time.
Storing the role in this way will allow us to query efficiently for "get all documents in the account allowing sharing via link".

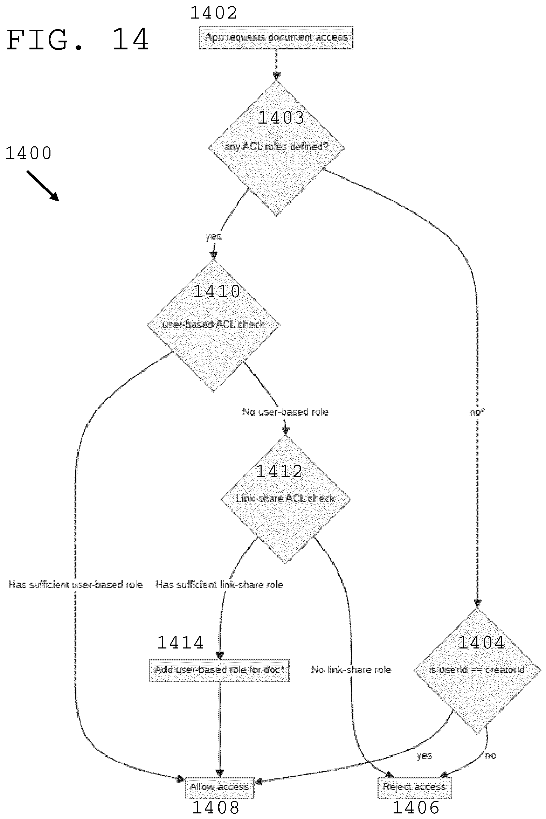

Referring to FIG. 14, a method for determining access to a project through system 700 is referred to as method 1400. When a user requests document access through Apps system 702 in step 1402, system 700 determines if any ACL roles are defined in step 1403. If roles are not defined, method 1400 determines whether a user ID equals a creator ID in step 1404. If a user ID does not equal a creator ID, access is rejected in step 1406. If a user ID does equal a creator ID, access is allowed in step 1408. If roles are defined in step 1403, then a user-based ACL check is determined in step 1410. If there is a sufficient user-based role, then access is allowed in step 1408. If there is a no user-based role, then there is a link-share ACL check in step 1412. If there is no link-share role, then access is rejected in step 1406. If there is sufficient link-share role, then add a user-based role for the document in step 1414 and access is allowed in step 1408. When no ACL roles are defined in step 1403, in order to support documents created before the ACL exists, keeping the equivalent is needed of the userld === document.ownerld. Adding user-based role in step 1414 allows a way to get a list of "shared documents" for a projects navigator that does not include everything available via link, e.g., only documents: That have been directly shared with another user by the user or have been shared via link and then opened by the user. This is also to allow users to retain access to documents after organization-wide sharing is turned off, e.g.: Owner shares via link; User1 opens link (and is granted user-based role); owner removes link share; User1 still retains their access (and they are listed by name in the dialog showing who has access to the document).

Example data sent/received to document-storage on GET/PUT queries of roles per document can be found in the appendix submitted herewith. In addition, example data including a "shared via link" account-wide role including an approach of using a V5 uuid based on mapbrowser-user-settings document IDs can also be found in the appendix submitted herewith.

Projects hub system 708 can include:
A query to get list of users with access to a project;
A query (or new parameter to userProjects query) to get list of all projects the user can access via shared permissions;
A query (or new parameter to userProjects query) to get list of all projects the user owns that are **not** shared;
A mutation to set role for a user on a doc if setting owner needs to handle unassigning owner from the previous owner;
A mutation to change link-share role of a doc;
Existing queries for document metadata (single or lists) will need to handle querying documents the user has access to via ACL permissions, not just ones they own;
Majority of project-related mutations (archive, rename, delete, and the like) will only allowed to editor/owner level;
   load mutation will need to be allow any level. Will need to send the user's role (or at least a flagindicating if read-only or read/write is allowed) to projects-real time. This is so real time can enforce that read-only users cannot make updates.
User settings queries/mutation can allow owner access only.

The REST of system 700 can also include GET project/blob content allowed to all roles, and PUT only allowed to editor/owner.

Projects real time system 710 can have on load that includes: assigning random color to user's Awareness; stores the user's access level (read or read/write) in mongodb instance 916; and if the same user ID is already connected in another session, then it may boot them out. When syncing, check if write is allowed, reject if not for sync message. These are behaviour the realtime system could do at the time of loading a project. e.g., 'onLoad' as in a function invoked after the main load process (setting up the in-memory copy from JSON) has been done.

Apps system 702 can include the following feature flags:

| **"stage-1" FF** | **realtime FF** | **stage-3 FF** | **Expectation** |
|---|---|---|---|
| false | any | any | Legacy projects API, non-collaboration mode |
| true | false | false | Stage 2 mode, saving & loading direct via projects-hub |
| true | true | false | Using realtime backend but no collaboration. (This permutation possible but unlikely to be used) |
| true | false | true | *Error, stage 3 without realtime is not possible* |
| true | true | true | Stage 3 mode, all UI listed below becomes active |

For each project of system 700 either from project metadata query response, or load response, it can be determined whether writing is allowed or not and a source of truth for whether to run in read-only or not can be via MapProjectlnterface. If a project is read-only, local yjs document may not be monitored for changes. If anything does actually need to persist still, e.g., user-keyed data layer state, an alternate set of MapProjectlnterface handlers can be used where all the setter functions are noop, or warnings when in development environments. The user interface of Apps system 702 can disable all drawing tools; disable modify tools; disable editing in inspector for all text boxes to show in disabled/greyed state, prevent ability to rename via title of inspector, and/or disable changing measurement units; disable editing toolbar (the toolbar shown over the map for changing color, font, and other features); disable all context menu operations except zoom-to; disable corresponding keyboard shortcuts; disable buttons for converting indicator to maker; and/or in layers navigator: disable delete/hide buttons on feature layer items, disable the + menu in features section, disable drag/drop reordering; and/or no renaming.

The user interface of Apps system 702 can include a location indicator that is considered in a "local state". Viewer users of system 700 can still create location indicators (via search and the like). Location makers can be stored in the data model side and can be moved out of the yjs document, for example, they may be stored in the user-project-settings document.

The document-sharing package used by system 700 can depend on the document-service package, for MapProjectlnterface access and graphql calls. A sharing toolbarNeeds of the user interface of Apps system 702 can have both desktop and tablet layouts and sharing dialog.

The user interface of Apps system 702 can include a "Shared with you" projects tab that includes "All Projects" (first tab) = projects the user owns and/or "Shared with you" (second tab) = projects the user has a non-owner role on.

A URL loader of system 700 can include when the initially requested URL is owned by someone in the same organization but the user does not have access to it, a new dialog can be shown about "request access or view location only" and on clicking "request access" a notification about the request can be sent to the owner and/or their last-loaded project can be opened, and the saved view is restored if possible. On clicking "view location only" that is shown, the user's last-loaded project can be shown, using the view from URL.

System 700 can include email notifications on certain events. Projects hub system 708 can trigger an email notification to be sent to users: to notify a user when their role is elevated on a project by another user's action, for example, this should cover scenarios of the user being initially invited to a project (permission change from none to something) and the user's role being increased (e.g. passing ownership is a change from something to owner). Projects hub system 708 can trigger an email notification to notify the owner(s) of a project when a user requests elevated role on the project (e.g. request for ownership or editor).

System 700 can include administrative ("admin") and support controls. The administrative and support controls can include a way for an account (organization) administrator to manage permissions for any document in the account particularly so they can re-assign owners if previous owners are deactivated. Admin users on the account are allowed to re-assign owners of projects. Support of system 700 can do similar either in MyAccount or as a function of the new projects-support tool.

System 700 can have user-specific data in settings documents. MapbrowserUserSettings document (which already exists) will contain any "global" data that has 1 value per user, regardless of what project is active and that includes recent search history and/or last color/measurement unit annotation state (used as default when drawing new features). A new "User Project Settings" document can contain any data that is per-user and per-project, e.g., last map view & data layer visibility state. This document can be keyed by a combination of user ID and projectID, e.g., uuidv5('${userId}-${projectId}', USER_PROJECT_SETTINGS_NAMESPACE). This can contain all data layer user-controllable state, including: Al layer visibility & styling, GDL visibility, Nearmap boundary/road visibility & styling; layers panel UI state; last map view state (for restoring when opening the project again later); black background opacity; and/or location indicator feature.

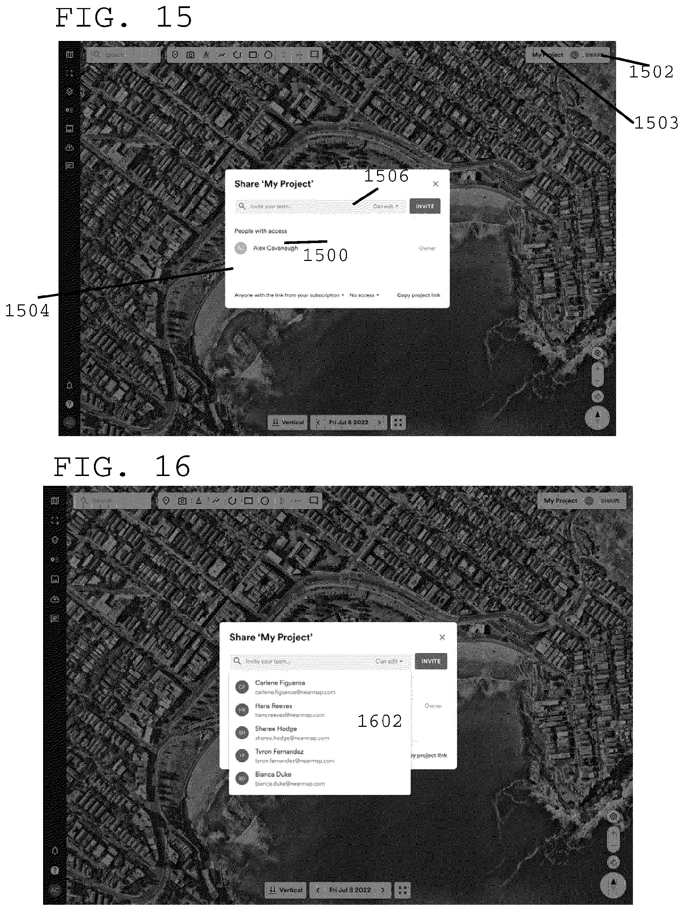

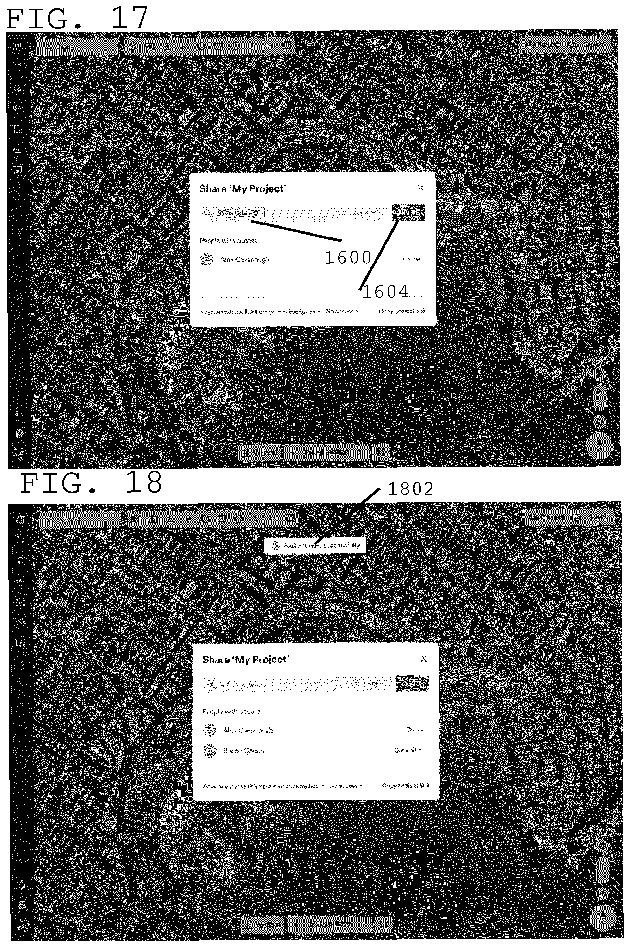

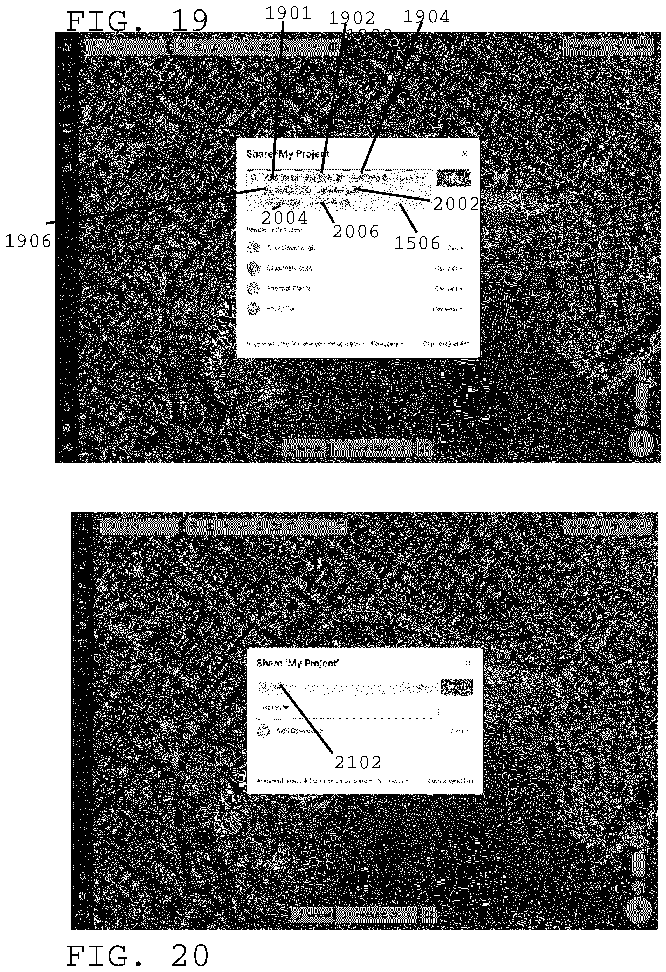

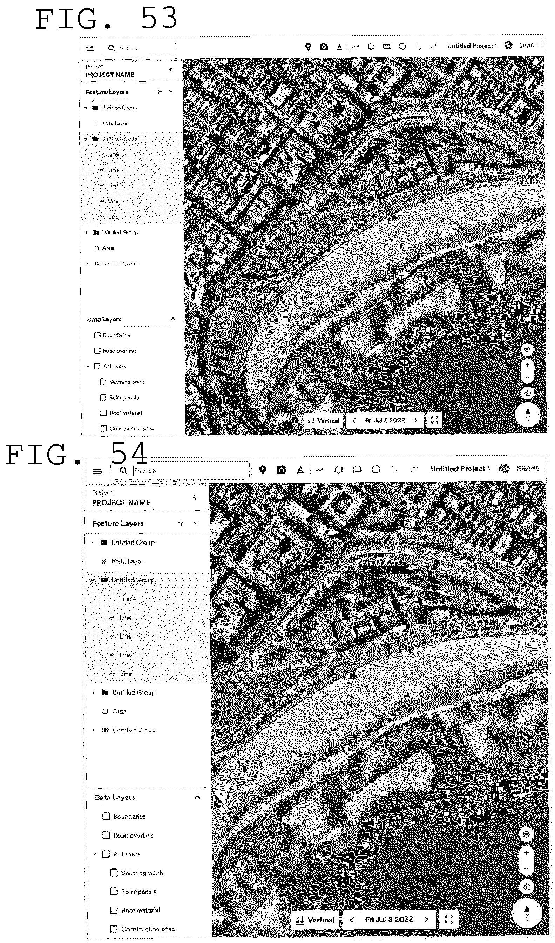

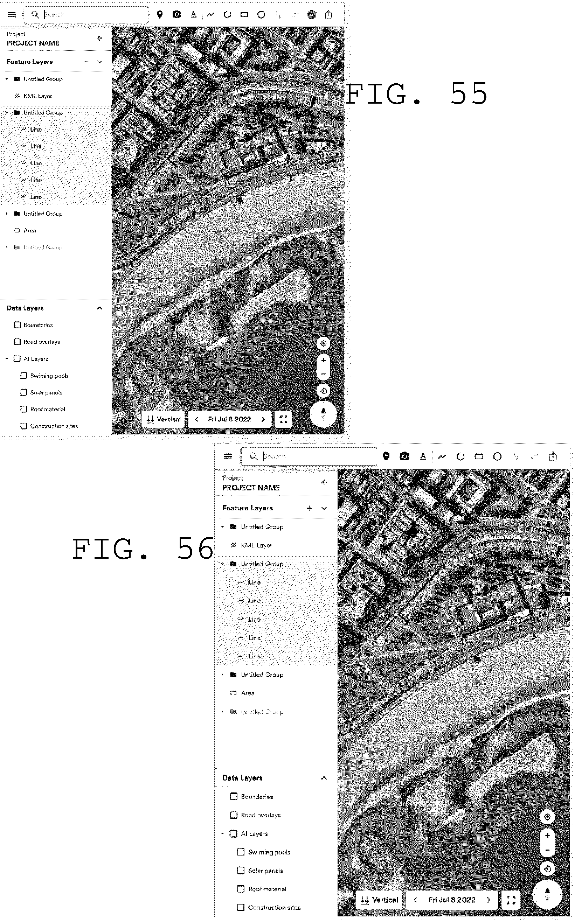

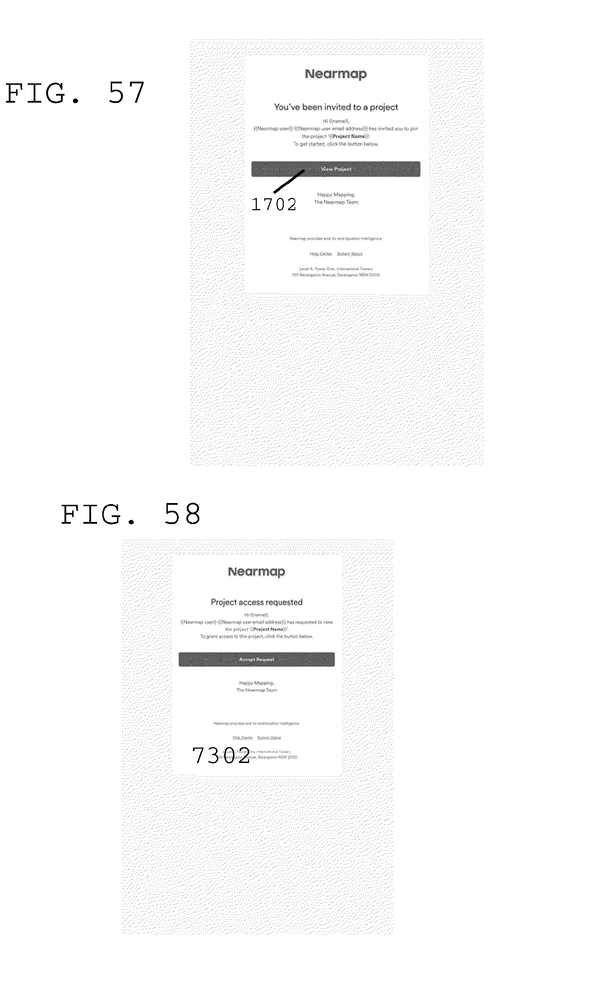

FIGS. 15-132 show screenshots of the user interface of Apps system 702. FIG. 15 shows an aerial image of a first project in the user interface of Apps system 702 that is accessed by a first user 1500 "Alex Cavanaugh". First user 1500 has selected the share link text 1502 in a share bar 1503 that displays share screen 1504 that includes an invite field 1506. Referring to FIG. 16, the first user 1500 has placed the cursor in invite field 1506 that displays invite list 1602. Invite list 1602 can be limited to permitted users within an organization that is predetermined, for example, based upon a subscription. The first user selects a second user 1600 "Reese Cohen" from invite list 1602 as shown in FIG. 17 and selects invite button 1604 giving second user 1600 access to the first project as shown in FIG. 18 as indicated by the success message 1802 without second user 1600 needing to accept the invitation. Alternatively, as shown in FIG. 57, a message, such as an email, can also be sent to second user 1600 with a message notifying second user 1600 that they have been given access to the first project with a view project icon 7202 that if selected by second user 1600 would direct second user 1600 to the first project in a separate user interface. A further alternative is an email can also be sent to second user 1600 with an invitation for second user 1600 to join the first project with a link to accept the invitation in which second user 1600 then has access to the first project. Another alternative is when the first user 1500 has placed the cursor in invite field 1506 that displays invite list 1602, the first user 1500 can choose or select multiple additional users, such as first user 1500 selects a second user 1901 "Colin Tate", a third user 1902 "Israel Collins", a fourth user 1904 "Addie Foster", fifth user 1906 "Humberto Curry", a sixth user "Tanya Clayton" 2002, a seventh user "Bertha Diaz" 2004 and/or an eighth user "Pasquale Klein" 2006 as shown in FIG. 19.

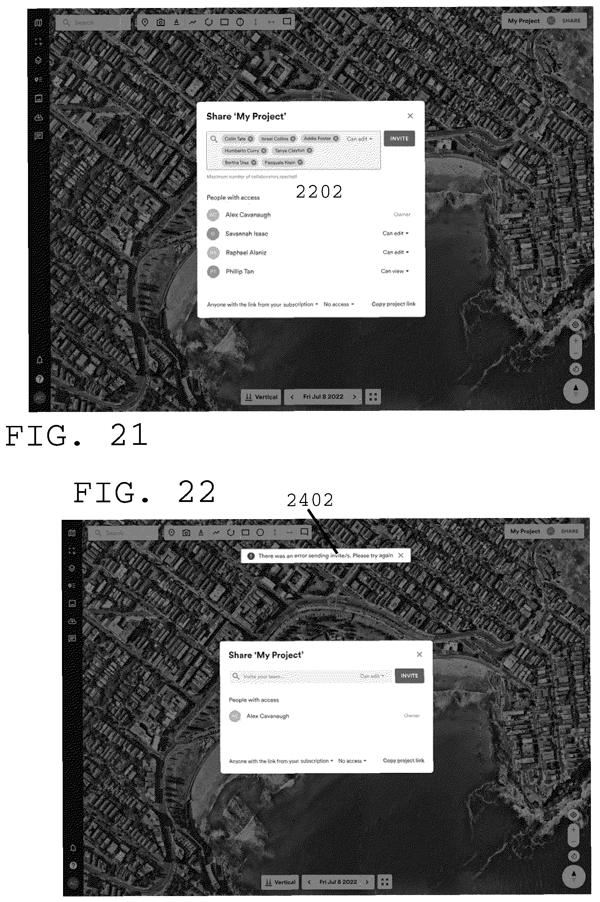

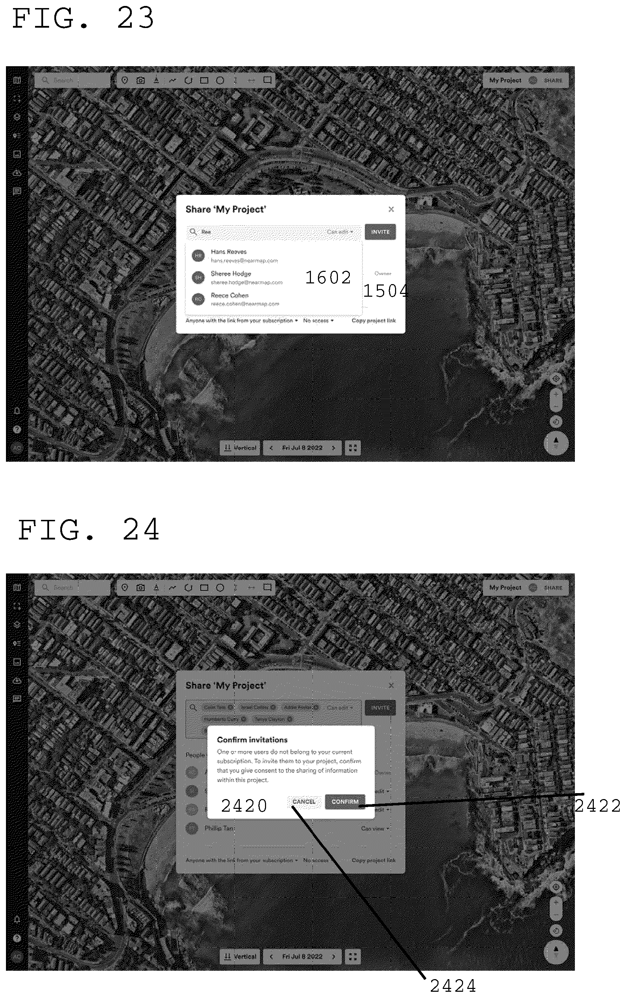

Referring to FIG. 20, the first user 1500 can proceed to type in invite field 1506; however, if the characters 2102 that the first user types does not match a user in invite list 1602, a message can be displayed that there are no results based on characters 2102 that the first user types so that no invitation can be sent based thereupon. System 700 can have a predetermined number of users that can share a project, as shown in FIG. 21, so that if a number of users exceeding the predetermined number of users that can share a project is selected a message 2202 can be displayed advising the first user 1500 as well as invite button 1604 can be deactivated. If first user 1500 selects invite button 1604 and the invitation cannot be sent, then a message 2402 can be displayed indicating that there was an error sending the invites and first user 1500 can try again as shown in FIG. 22. Referring to FIG. 23, share screen 1504 has list filters when searching for a user name to invite_that includes a filtered list of names based on the search query. For example, if first user 1500 types 'Ree' in invite field 1506, then only users including 'Ree' in their name will be displayed in invite list 1602. Referring to FIG. 24, prior to allowing access to additional users to the first project, if one or more of the additional users selected include a user outside of the current subscription, a text box 2420 is displayed over share screen 1504 with a message asking first user 1500 to confirm first user 1500 would like to include users outside of the current subscription and displays a button 2422 that can be selected to confirm adding the additional users or a button 2424 that can be selected to cancel the request to add the additional users outside of current subscription, e.g., a subscription that is a purchase for a certain period of access to or use of an online service.

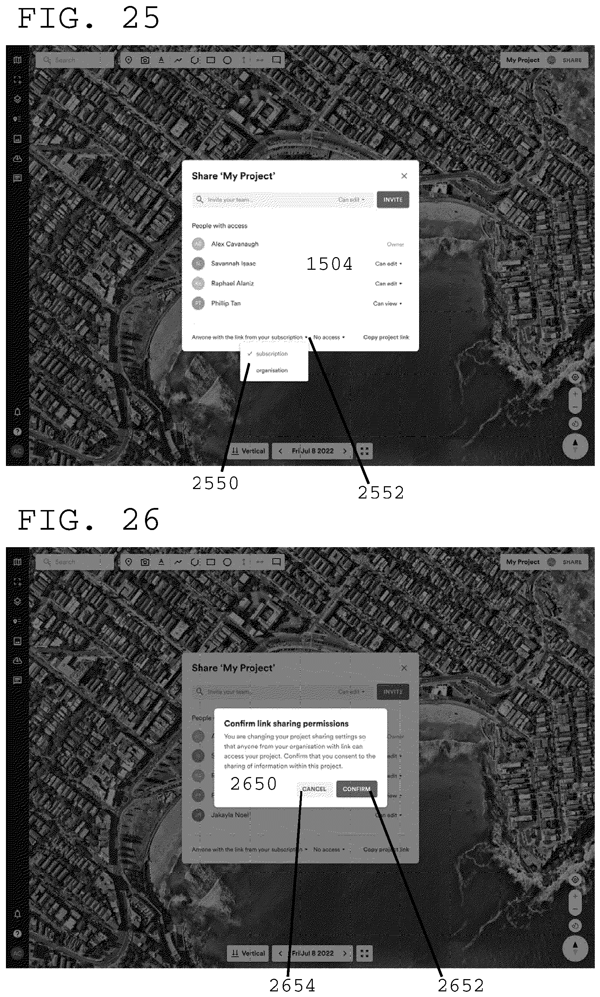

Referring to FIG. 25, a link sharing dropdown 2550 is displayed when first user 1500 selects arrow 2552. First user 1500 can filter users who can access the first project through a link, e.g., to users in a subscription or users in an organization, from link sharing dropdown 2550. Referring to FIG. 26, a confirmation modal 2650 is displayed over share screen 1504 when changing link sharing permissions from subscription to organization wide asking first user 1500 to confirm first user 1500 would like to include users outside of the current subscription and displays a button 2652 that can be selected to confirm the change or a button 2654 that can be selected to cancel the change.

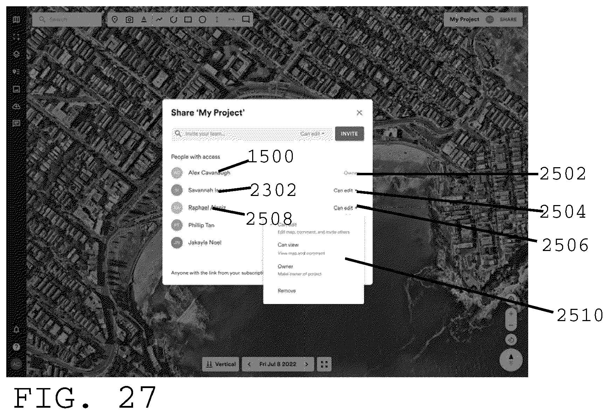

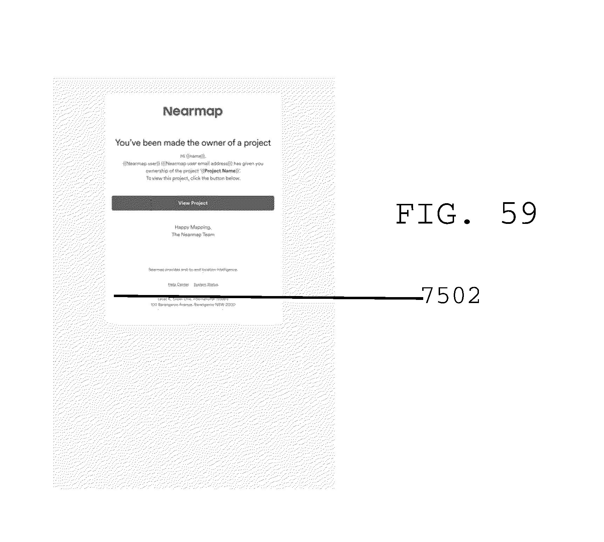

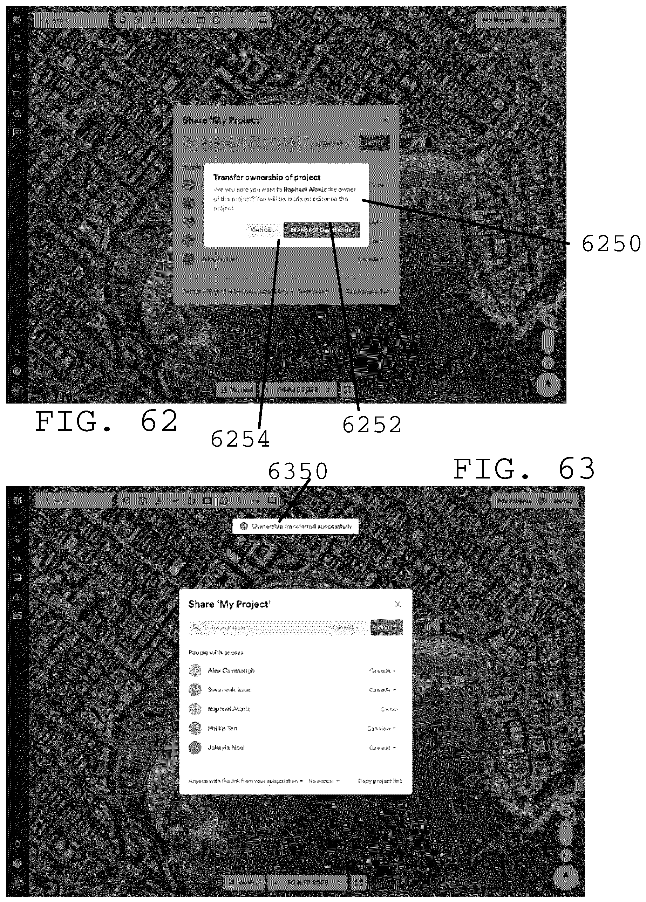

As shown in FIG. 27, share screen 1504 displays a first role 2502 of first user 1500, a second role 2504 of a second user 2302, and a third role 2506 of a third user 2508. Roles are predetermined permissions assigned for each role as discussed herein, for example, as owner a user has more permissions than a user that can edit also referred to as an editor. First user 1500 who owns the first project can select third role 2506 that displays role list 2510 allowing first user 1500 to select or modify the role for third user 2508. Roll list 2510 includes three rolls: viewer, editor and owner. If first user 1500 selects the role of owner for third user 2508, then, as shown in FIG. 62, text box 6250 is displayed to confirm that first user 1500 would like to assign third user 2508 as owner so that first user 1500 can select a confirm button 6252 to assign third user 2508 as owner or a cancel button 6254 to assigning third user 2508 as owner. An email can also be sent to third user 2508 that includes a message that ownership has been transferred and a view project icon 7502 can be selected to go to the project as shown in FIG. 59. As shown in FIG. 63, when ownership has been transferred, e.g., third user 2508 is assigned as owner, then a message 6350 is displayed in the user interface of Apps system 702 of first user 1500.

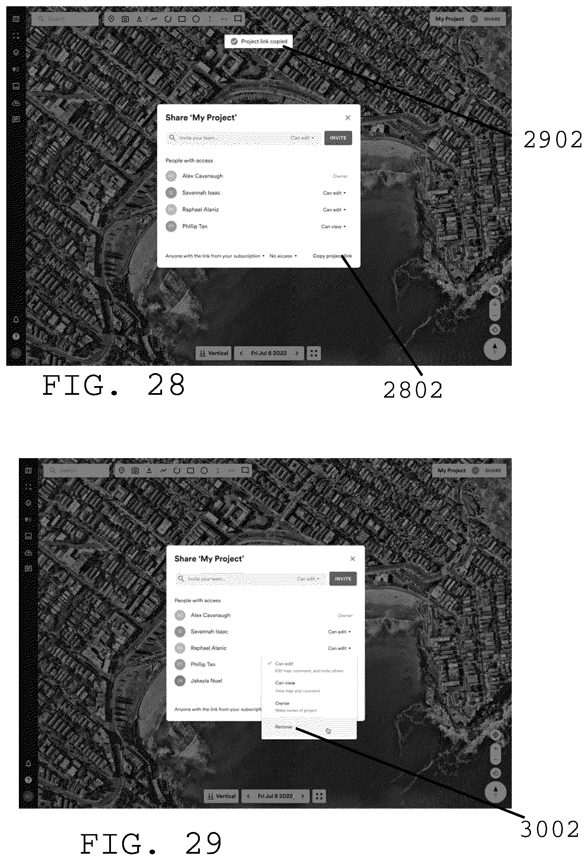

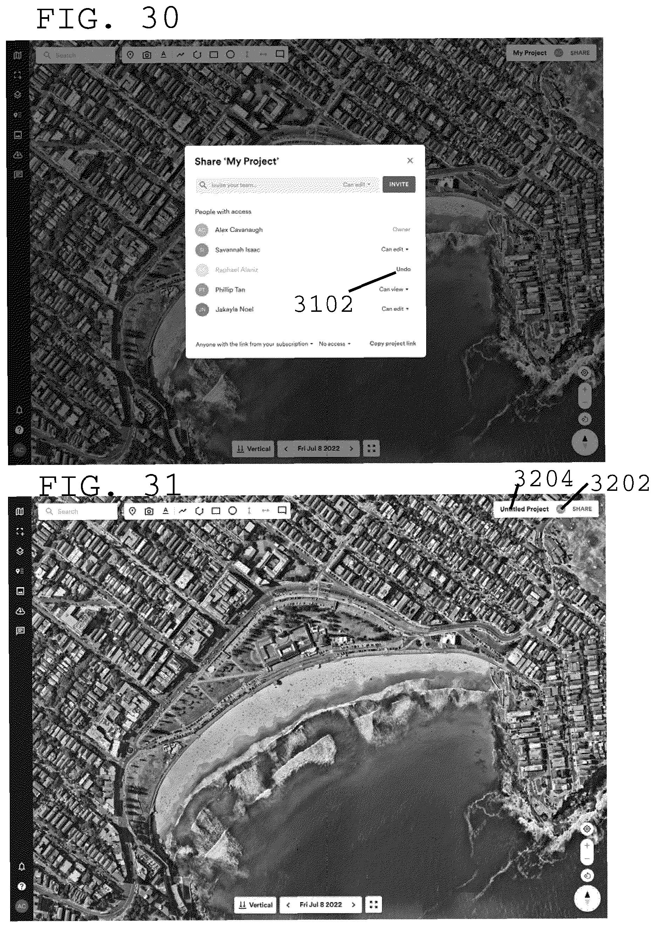

First user 1500 can select a copy project link 2802, and, as shown in FIG. 28. This link can then be shared to provide other users with access to the first project. As the owner, first user 1500 can remove users for the first project as shown in FIG. 29. First user 1500 who owns the first project can select third role 2506 that displays role list 2510 allowing first user 1500 to select the role for third user 2508 or select remove 3002. When first user 1500 selects remove 3002, as shown in FIG. 30, share screen 1504 can display third user 2508 in a different color and include undo 3102 allowing first user 1500 to undo the removal of second user 1600.

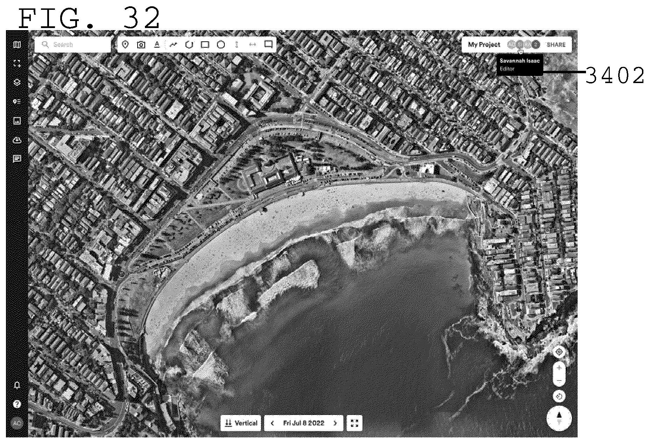

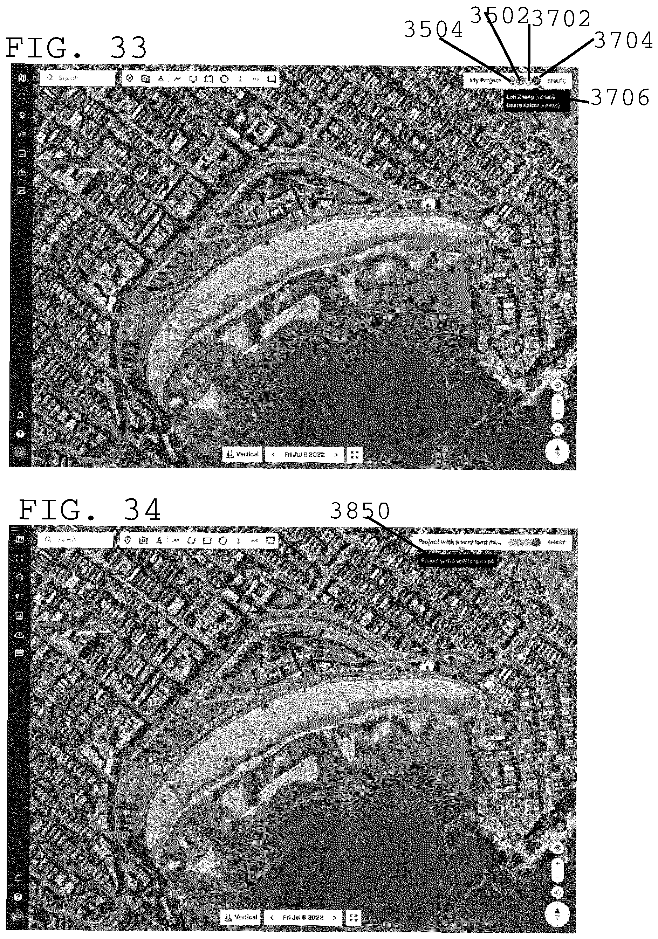

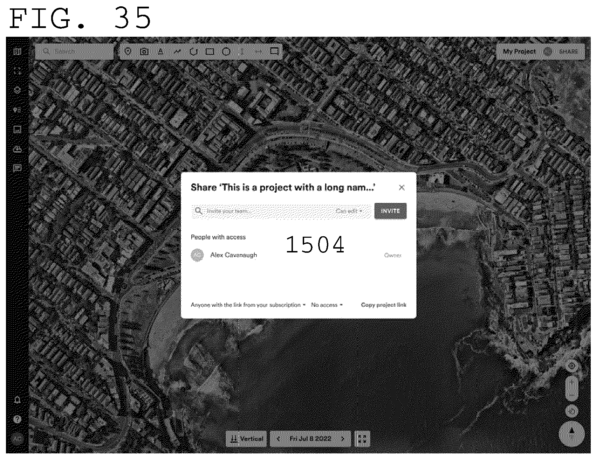

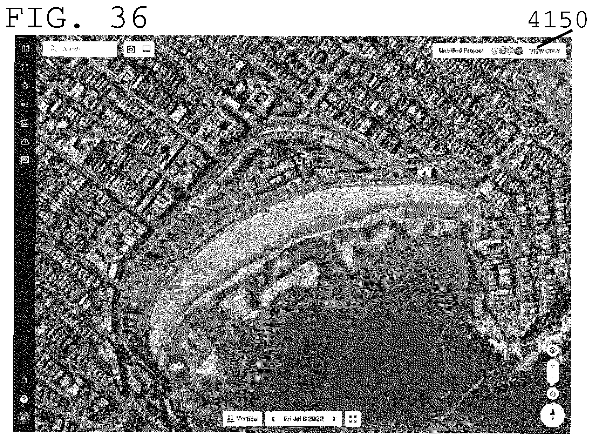

As shown in FIG. 31, when first user 1500 is working on the first project, share bar 1503 displays share link text 1502, symbols 3202 for each user of the first project, and name of the project 3204. As shown in FIG. 32, if the cursor hovers over one of symbols 3202 to show the role of the user, for example, if the cursor hovers over a symbol of second user 2302 it can indicate that the second role 3402 of second user 2302 is as editor. As shown in FIG. 33, there are five users shown by symbols 3202 including symbol 3704 that represents multiple users so that when the cursor of first user 1500 hovers or symbol 3704 a text box 3706 shows the name and role for each user represented by symbol 3704. As shown in FIG. 34, if the title of first project is long, then the name of the project 3204 can show a portion of the name ending with an ellipsis after a predetermined number of characters and when the cursor of first user 1500 hovers or selects name of the project 3204, then a text box 3850 shows the complete name of the project 3204. As shown in FIG. 35, if the title of first project is long, then share screen 1504 can show a portion of the name ending with an ellipsis after a predetermined amount of characters. When a user, as shown in FIG. 36, having the role of viewer or "can view" shown in role list 2510, views the first project in their user interface of Apps system 702 that is separate from the user interface of Apps system 702 of first user 1500, share bar 1503 displays view only link text 4150, symbols 3202 for each user of the first project, and name of the project 3204.

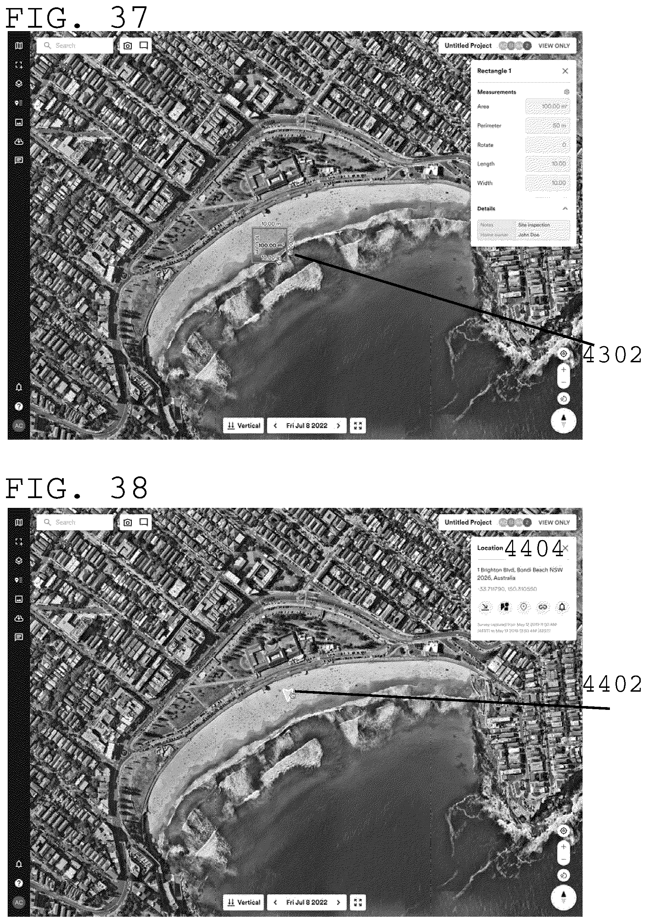

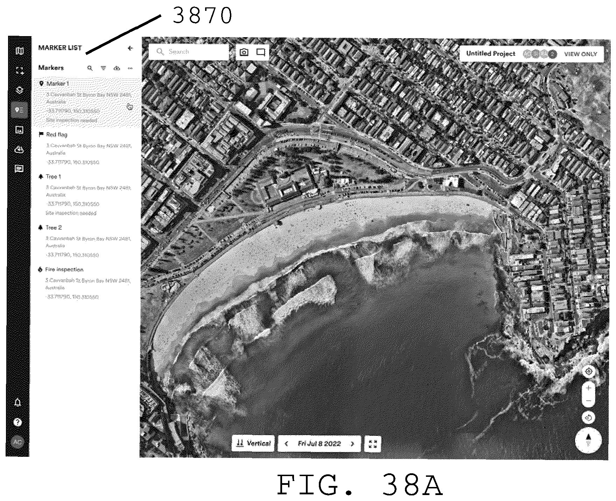

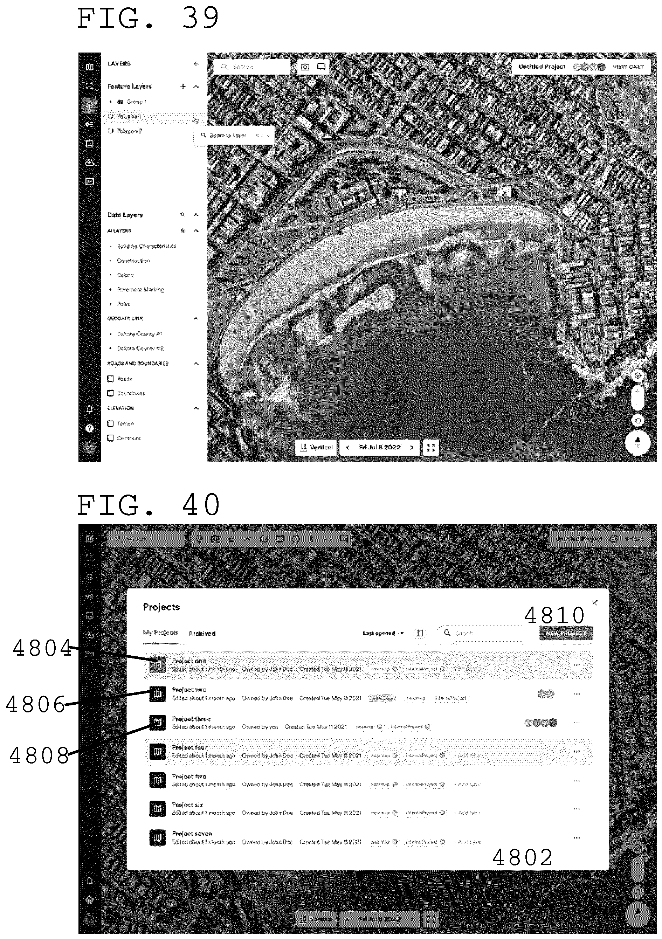

Referring to FIG. 37, first user 1500 having the role of owner can use the polygon tool or line tool to draw a shape and take measurements, for example, as shown by shape 4302. When a user having the role of viewer or "can view" shown in role list 2510, views the first project in their user interface of Apps system 702 that is separate from the user interface of Apps system 702 of first user 1500, the user having the role of viewer can select shape 4302 that was drawn by first user 1500 in their user interface of Apps system 702, however, the user having the role of viewer cannot move or edit shape 4302. Shape 4302 can be selected by the user having the role of viewer while first user 1500 is editing. In user interface of Apps system 702 of the user having the role of viewer, shape tool box will have measurement settings still enabled, however, measurement fields will be disabled. Referring to FIG. 38, the user having the role of viewer can select and delete a location pin 4402. Additionally, as shown in FIG. 38A, in user interface of Apps system 702 of the user having the role of viewer includes a view only marker list interaction 3870. In addition, in a location box 4404 that displays information about the location of location pin 4402, the user having the role of viewer cannot convert location pin 4402 into a marker and cannot edit location pin 4402. Referring to FIG. 39, the user having the role of viewer can still select shape 4302 and zoom to layer on right click, however, the user having the role of viewer cannot delete or hide, group/ungroup or reorder shape 4302.

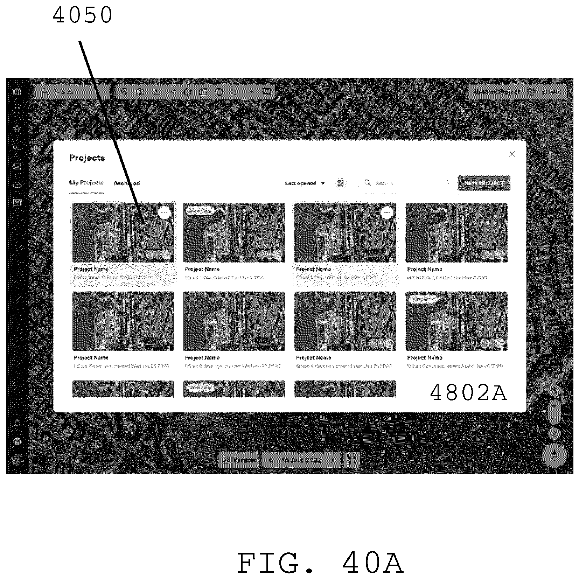

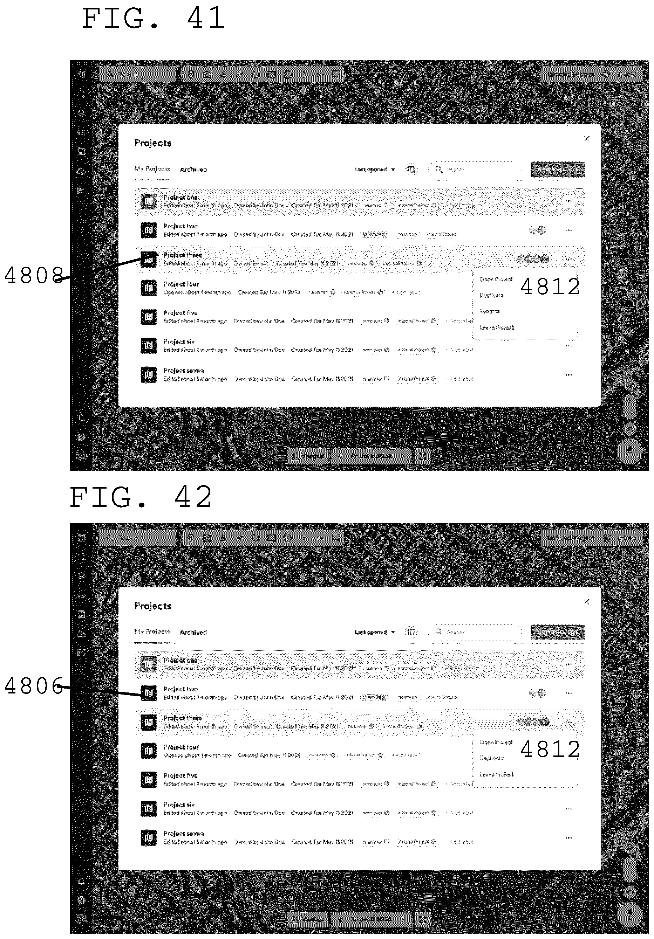

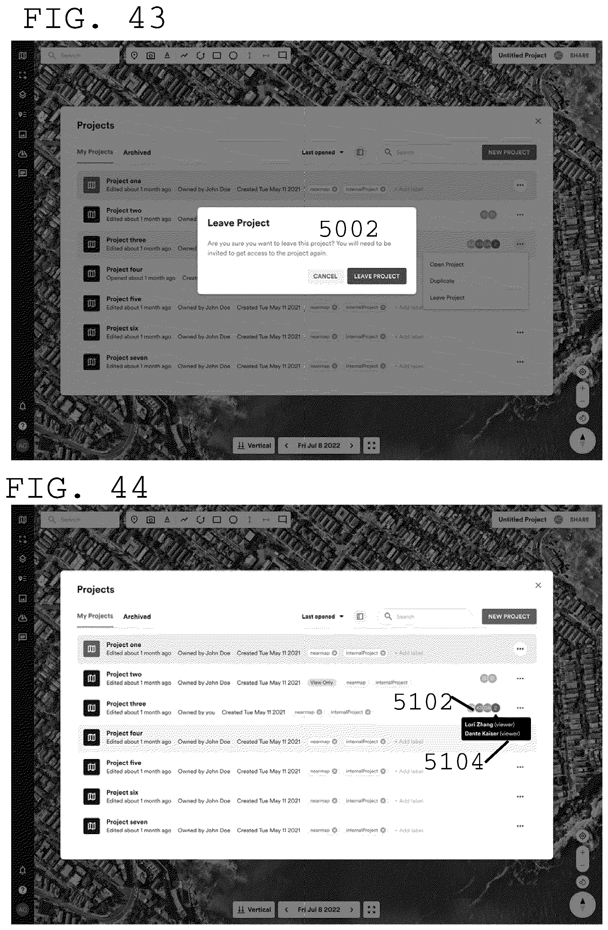

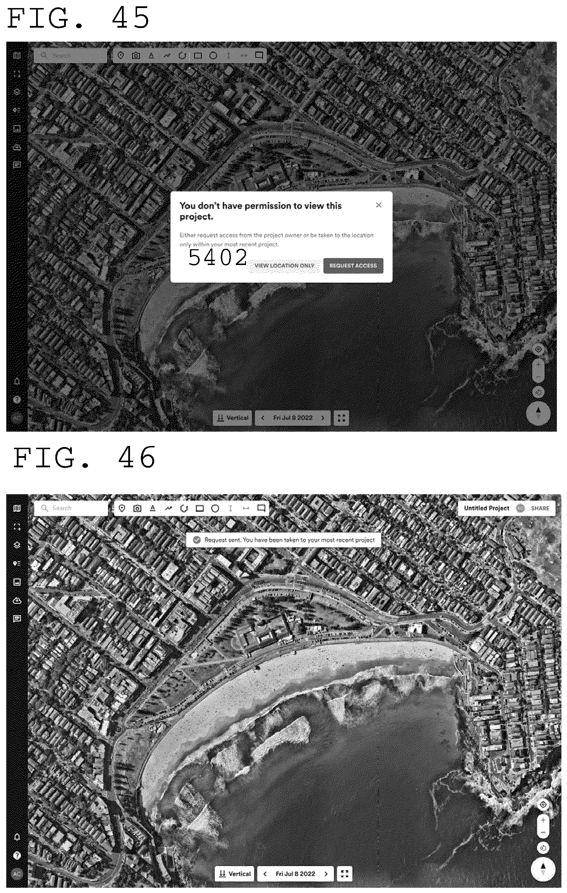

Referring to FIG. 40, first user 1500 can view a list of projects in a projects box 4802 that indicates information about each project that first user 1500 is included as a user. Referring to FIG. 40A, first user 1500 can view a list of projects in a projects box 4802A that displays a thumbnail view 4050 of projects modal for each project that first user 1500 is included as a user. Referring back to FIG. 40, projects box 4802 includes data about each project, for example, the last time the project was edited, who owns the project, when the project was created, and an existing project icon to select each project. Projects box 4802 can list all projects and archived projects and allow first user 1500 to create a new project by selecting new project icon 4810. When first user 1500 selects a project icon, for example, project icon 4806, then a project list 4812 is displayed as shown in FIG. 41. As shown in FIG. 42, when first user 1500 selects a project icon, for example, project icon 4806 in which first user 1500 has a view only role, then project list 4812 displays less options than when first user 1500 selects project icon 4808 in which first user 1500 has an owner role as shown in FIG. 41. When first user 1500 selects leave project from project list 4812, then a text box 5002 is displayed as shown in FIG. 43 to confirm the selection of first user 1500 to leave so that first user 1500 will no longer have access to the selected project that can also include a message that to regain access to the selected project, then another invitation will be needed. As shown in FIG. 44, projects box 4802 can show all users associated with each project by symbols 5102 and when first user 1500 hovers or selects one of symbols 5102, then the name and role of the user can be displayed in a text box 5104. When a user does not have access to a project, the user can select the project from projects box 4802 and, as shown in FIG. 45, a permission text box 5402 is displayed allowing the user to request access from the user having the role of owner of the project. As shown in FIG. 58, an email can be sent to the project owner that allows the project owner to accept the request by selecting the accept request icon 7302.

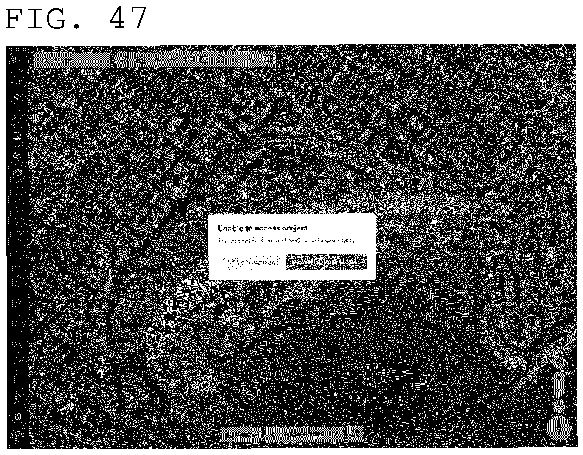

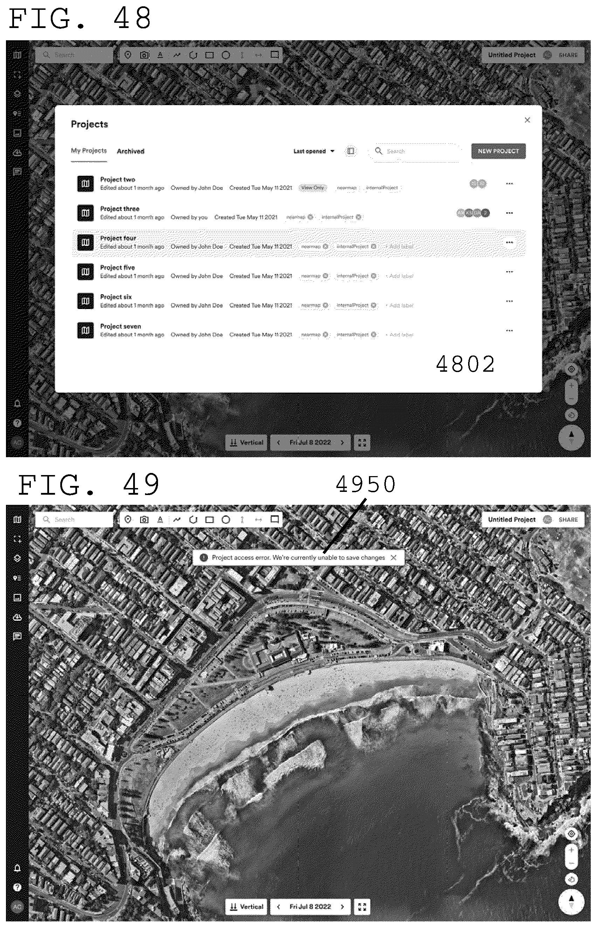

Referring to FIG. 46, after access is requested, then a message is displayed that the request has been sent and the user is then displayed their most recent project. When system 700 cannot access a project, then, as shown in FIG. 47, a text box is displayed including a message that the project could not be accessed. When system 700 cannot save a project, then a text box is displayed including a message that the project could not be saved, and, as shown in FIG. 48, project list 4802 can be displayed where it may be possible to save the project under a different name. As shown in FIG. 49, if system 700 cannot save changes to a project a message 4950 is displayed indicating the changes to the project were not saved.

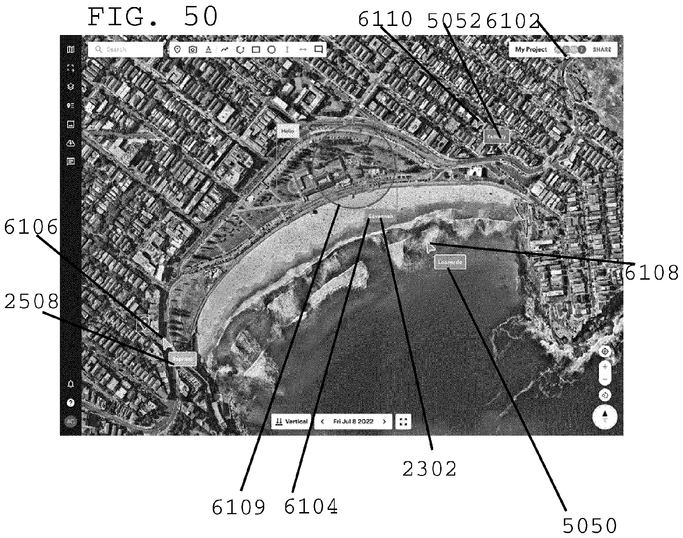

FIG. 50 shows first user 1500 in their user interface of Apps system 702 when four other users, namely, second user 2302, third user 2508, a fourth user 5050, and a fifth user 5052, are also accessing the same first project as first user 1500. Each of first user 1500, second user 2302, third user 2508, fourth user 5050 and fifth user 5052 have a first cursor 6102, a second cursor 6104, a third cursor 6106, a fourth cursor 6108 and a fifth cursor 6110, respectively, shown on the user interface of Apps system 702 of first user 1500.

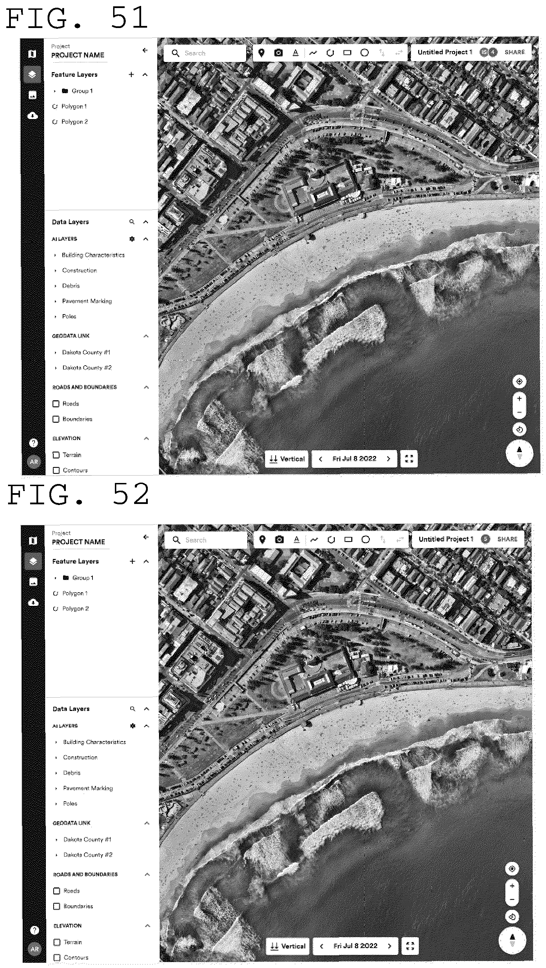

Referring to FIGS. 51-56, shown user interface of Apps system 702 displayed on screens having different sizes.

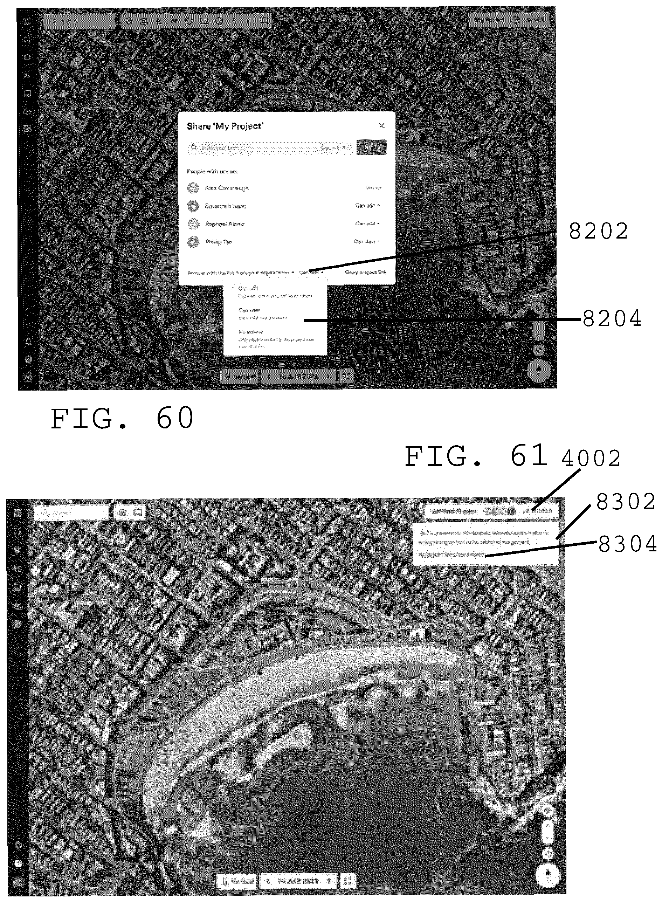

Referring to FIGS. 60 and 61, first user 1500 can select permission text link 8202 to display permission list 8204. First user 1500 can select "can edit", "can view" or "no access" from permission list 8204 so that when first user 1500 selects a copy project link 2802, the selected permission will be associated with the project link copied. Each of "can edit", "can view" or "no access" has different permissions associated therewith. As shown in FIG. 61, user can select view only link text 4002 and text box 8302 can be displayed. Text box 8302 allows the user to select text link 8304 to request editor rights from the owner of the project. First user 1500 can change access between those in organization or those on subscription.

Referring back to FIG. 50 that shows first user 1500 in its user interface of Apps system 702 when second user 2302, third user 2508, fourth user 5050, and fifth user 5052 are also accessing the same first project as first user 1500. If each first user 1500, second user 2302, third user 2508, fourth user 5050, and fifth user 5052 can edit with editor rights and permissions, first user 1500 can draw an annotation 6109, e.g., a circle, in their user interface of Apps system 702 that is also shown in each user interface of Apps system 702 for second user 2302, third user 2508, fourth user 5050, and fifth user 5052 so that annotations are shared. However, each of first user 1500, second user 2302, third user 2508, fourth user 5050, and fifth user 5052 can separately modify their view so their view of the image or map is personal in their respective user interface of Apps system 702, for example, each first user 1500, second user 2302, third user 2508, fourth user 5050, and fifth user 5052 can separately zoom, pan, turn data layers on/off, and the like. Further, if first user 1500 has an annotation that first user 1500 would like to share, but does not want to share the entire project with another user, then first user 1500 can copy and paste the annotation into another project. System 700 can include a modification that allows users to generate an annotation that is not shared with the other users with access to the project until further action is taken to share the annotation. System 700 has views of geographic locations in images in 2 dimensions ("2D") and images/models in 3 dimensions ("3D") and an ability to switch between different views of the same geographic location. System 700 allows first user 1500 to be in a first 2D view, for example, a 2D view in the Nearmap Mapbrowser Vertical, and second user 2302 to be in a second 3D view that is, for example, a 3D view in the Nearmap Mapbrowser 3D, of the same geographic location so that when first user 1500 draws annotation 6109 in the first 2D view, annotation 6109 is also shown in the second 3D view that is viewed by second user 2302. Accordingly, system 700 allows annotations to be shared across different layers by sharing the data models and synchronizing them between the 2D views and the 3D views. This synchronizing can cause a lag between the user that originates the annotation, in this case first user 1500 that draws annotation 6109, and the other user who views the annotation, in this case second user 2302 who views annotation 6109 in their separate user interface. The lag depends, among other things, on the timing of the synchronization and internet speeds.

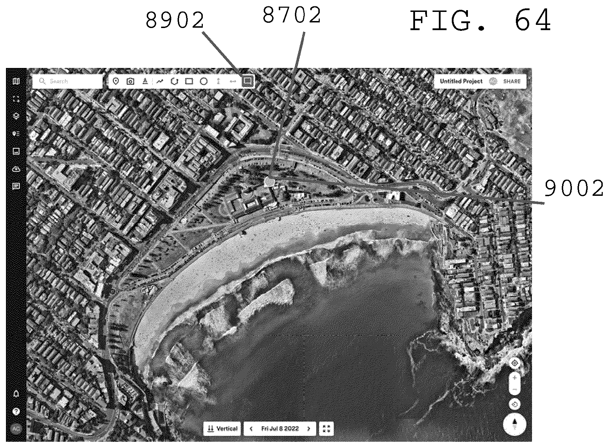

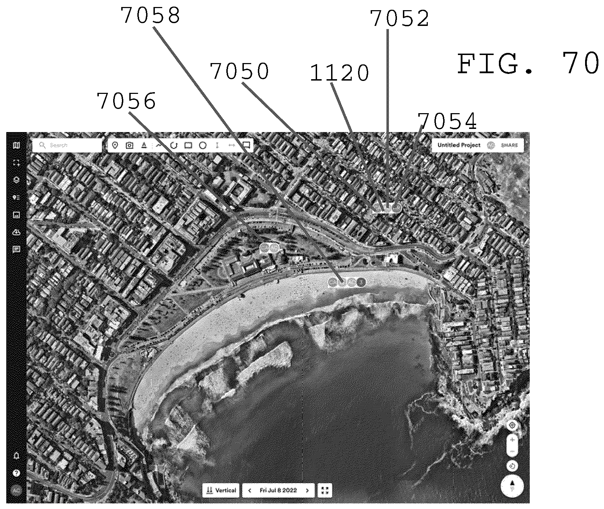

Referring to FIGS. 64-102, system 700 includes a commenting feature. This commenting feature allows comments to be added in one of Nearmap Mapbrowser Vertical, Panorama, 3D, Oblique or other web-based imagery browser in a geographical location and then displayed when that geographical location is viewed in all of Vertical, Panorama, 3D and Oblique or other web-based imagery browser. As shown in FIG. 64, first user 1500 can add first comment 8702 through their user interface of Apps system 702 and other users can add comments, for example, as shown by a comment icon 1120 in FIG. 70, through their separate user interface of Apps system 702.

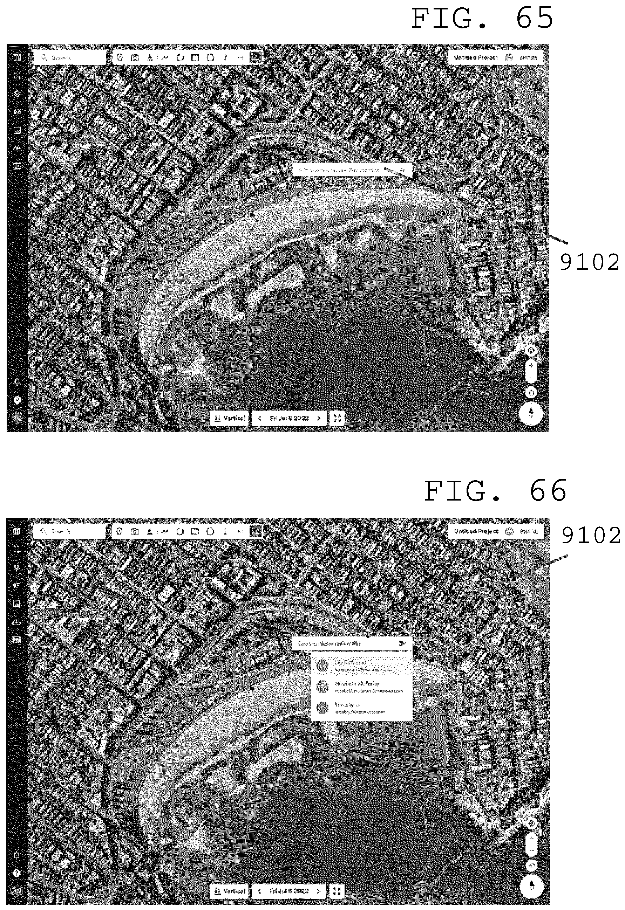

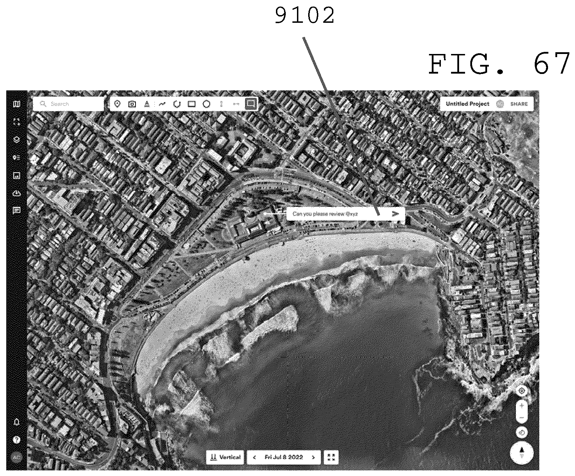

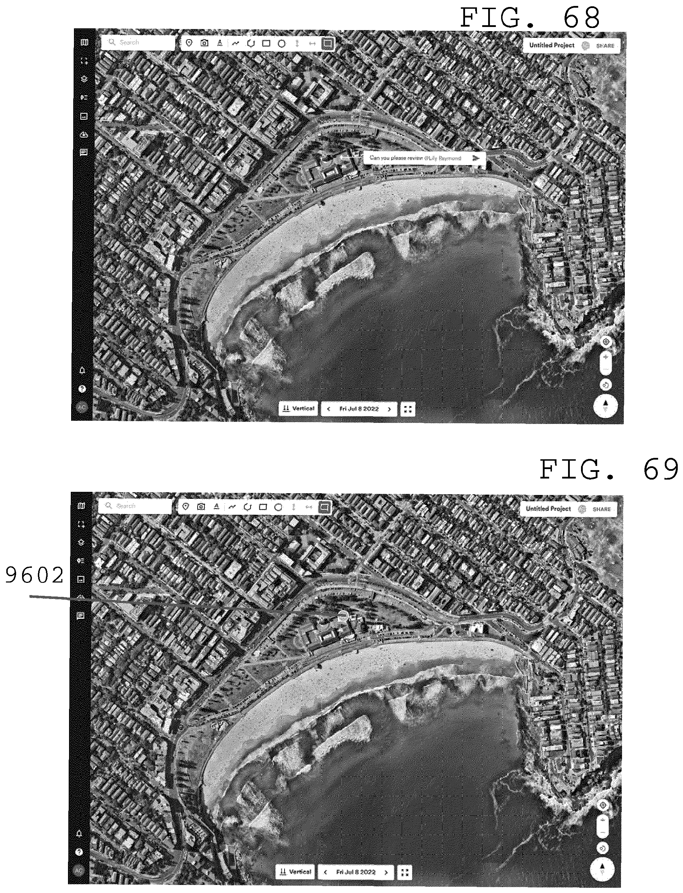

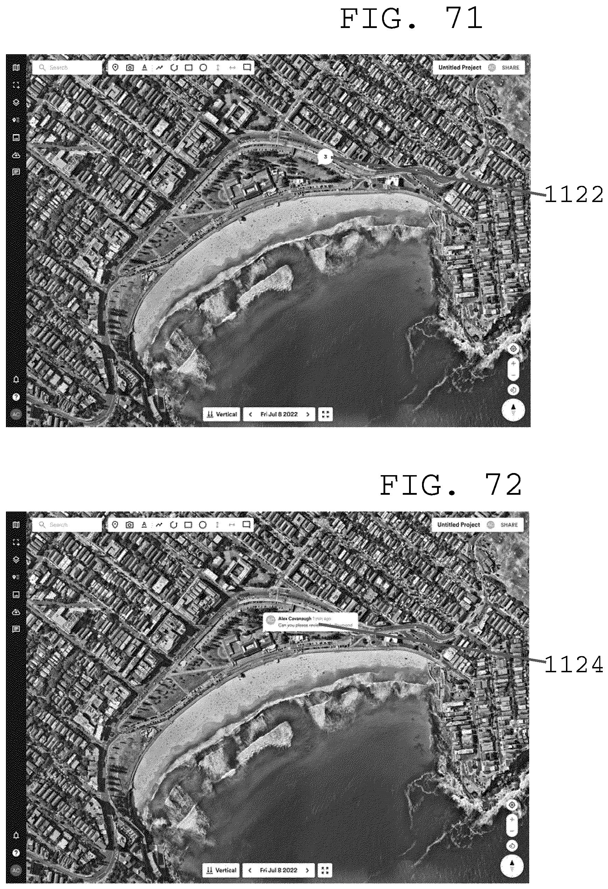

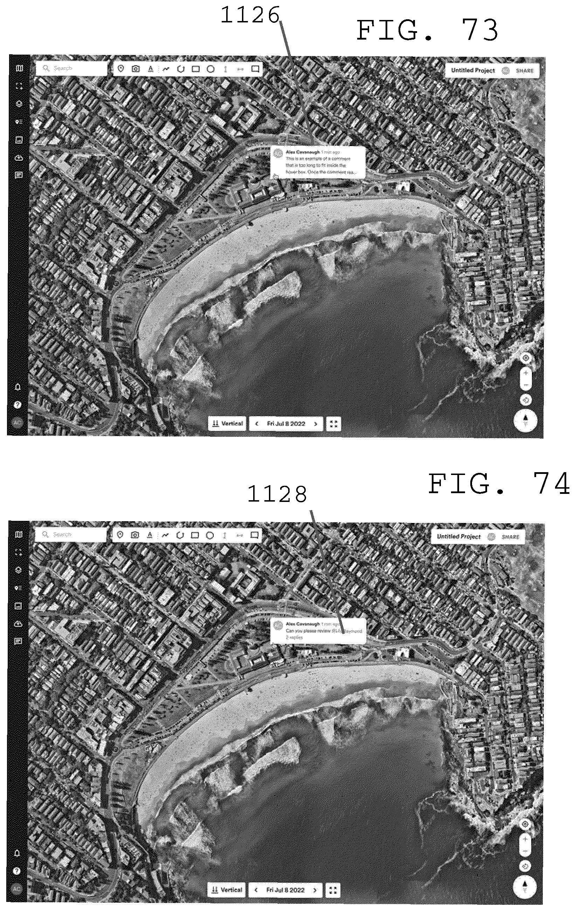

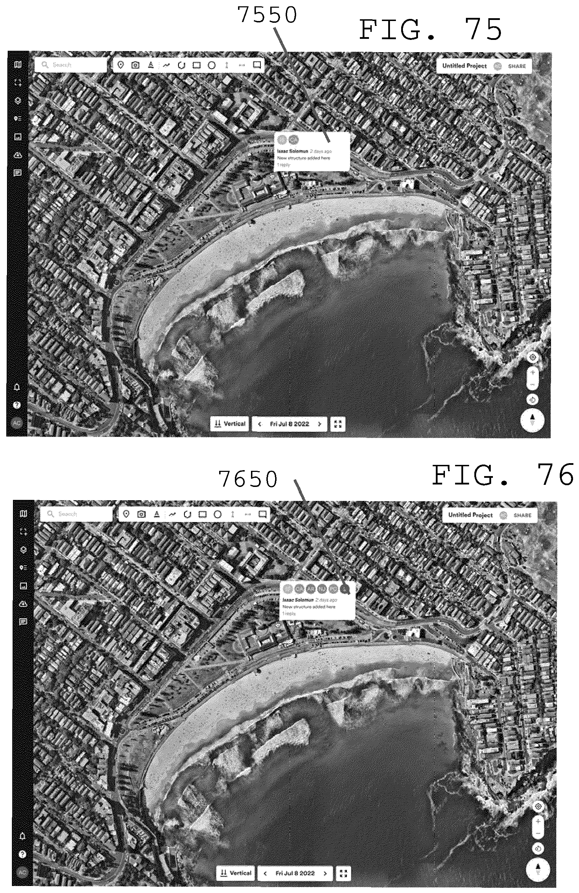

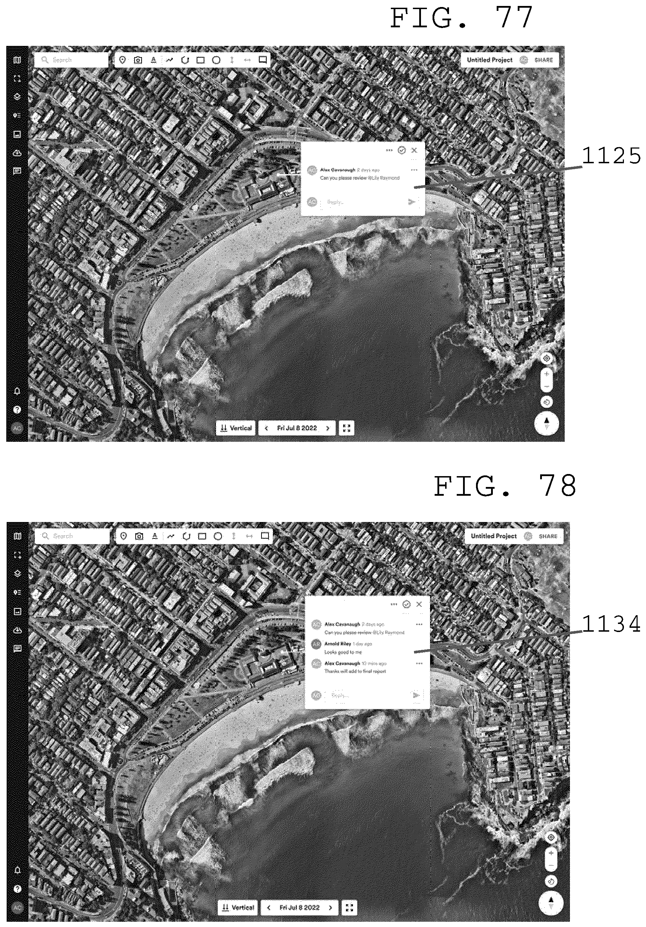

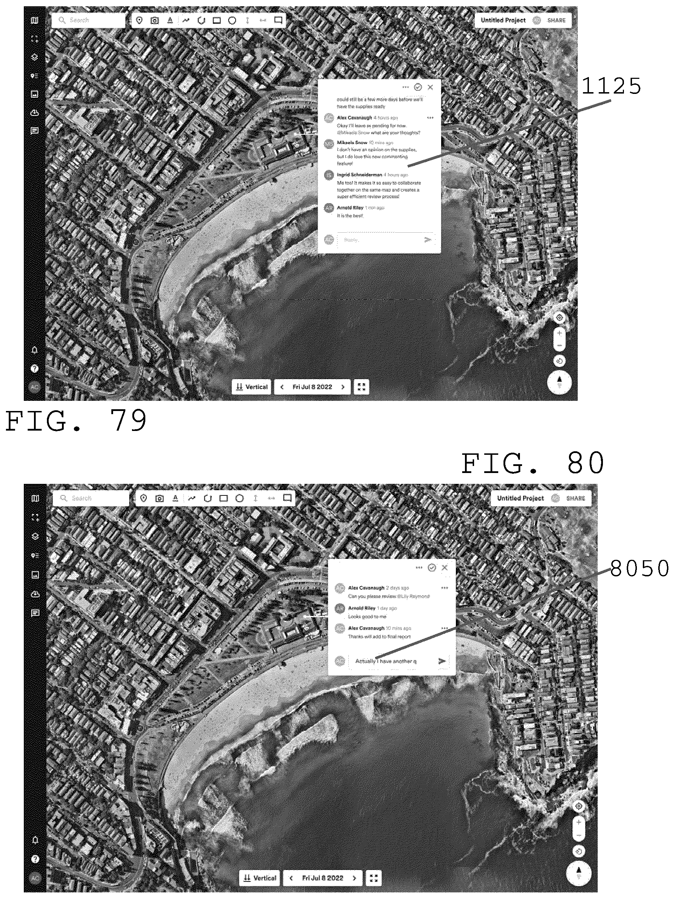

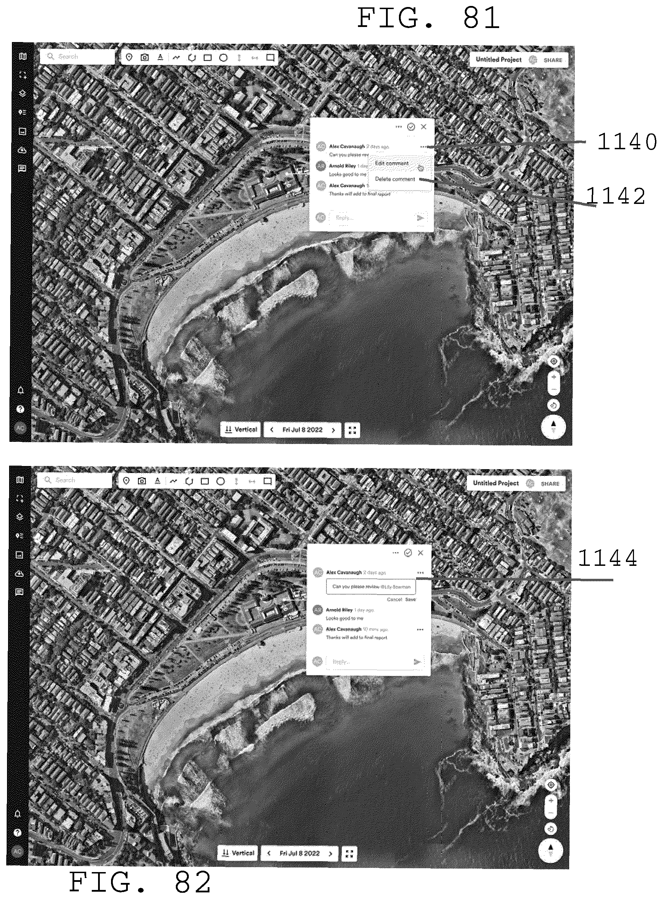

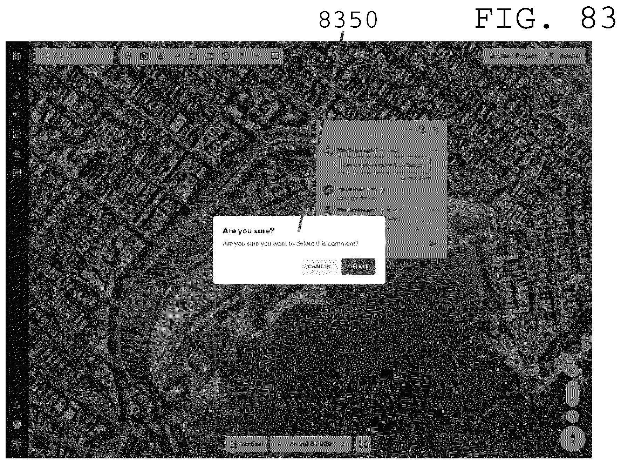

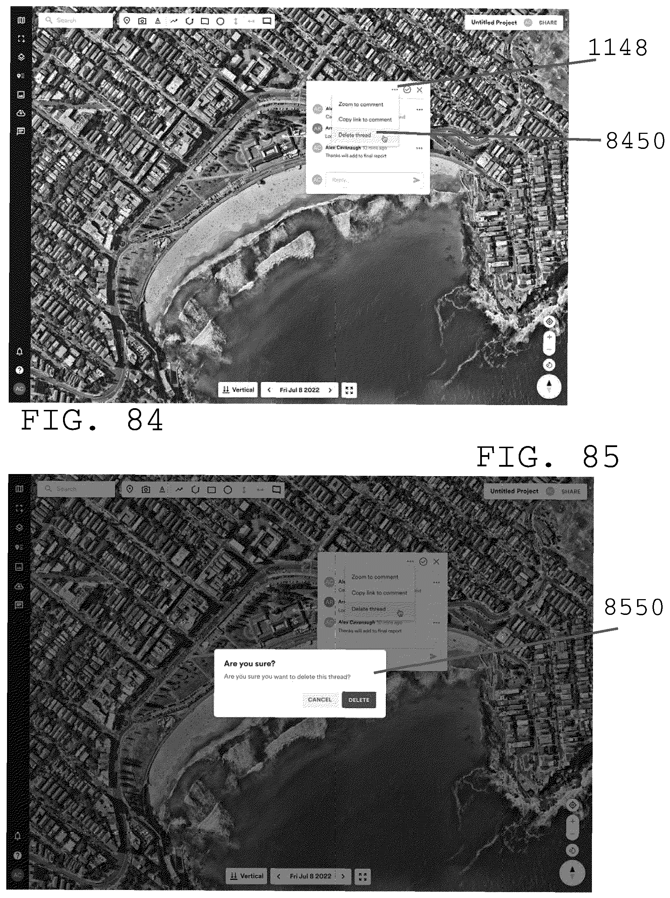

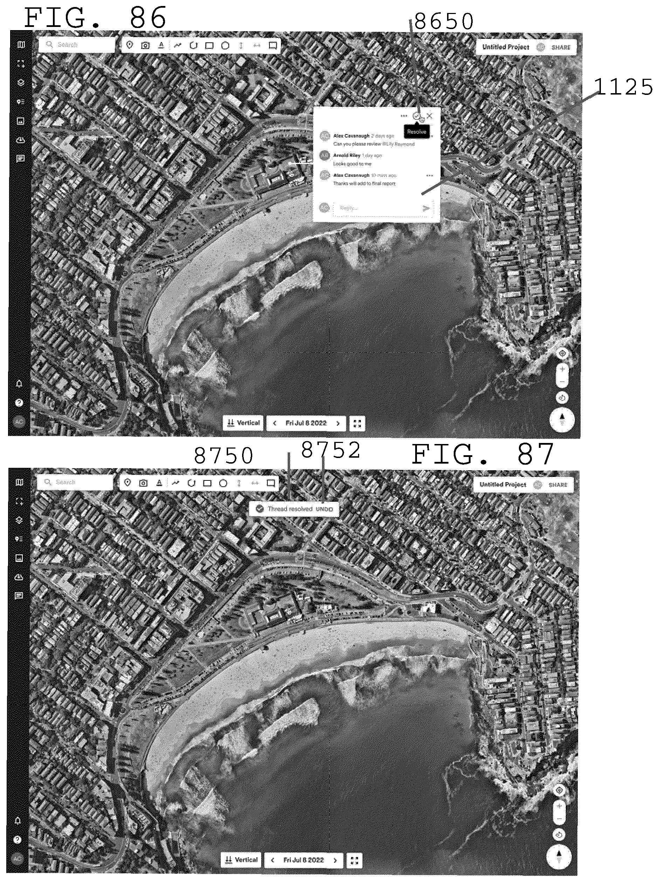

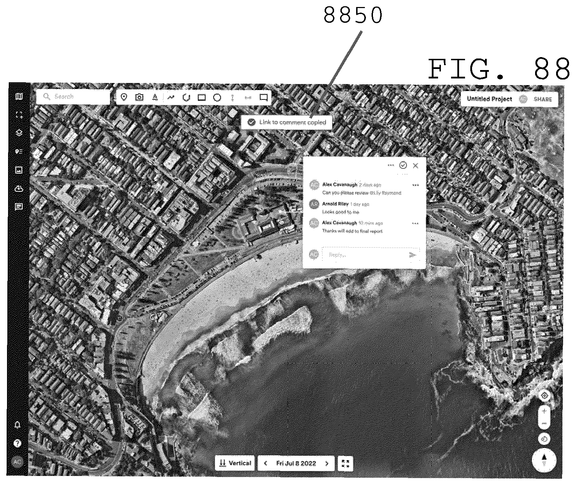

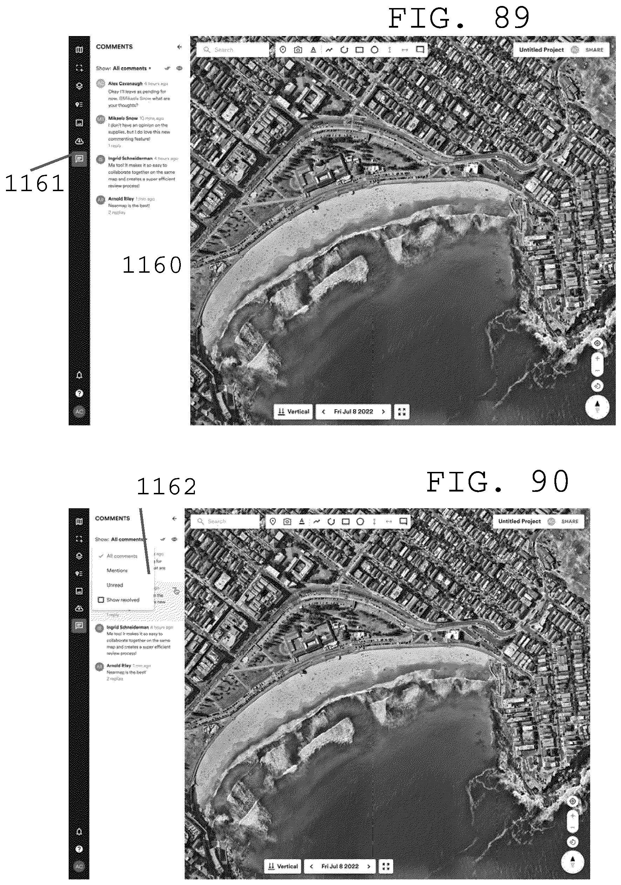

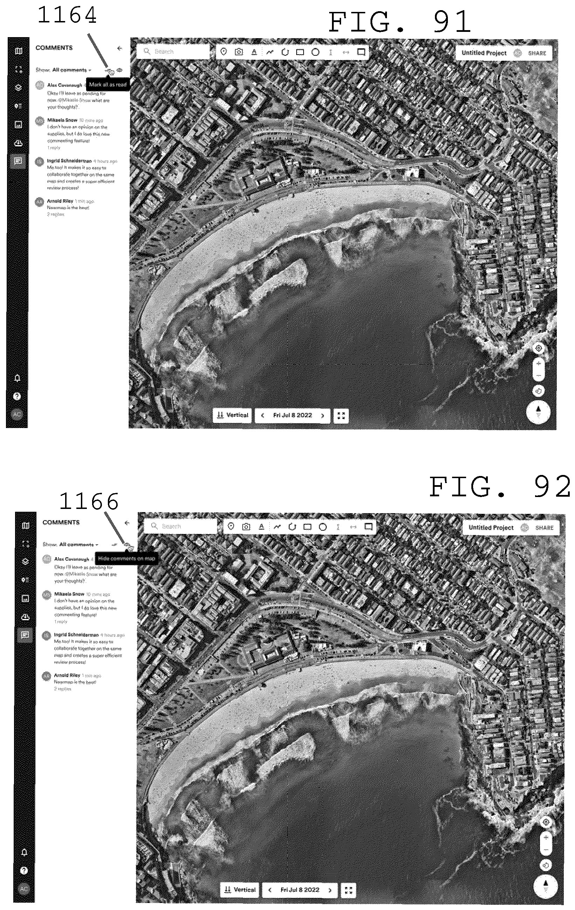

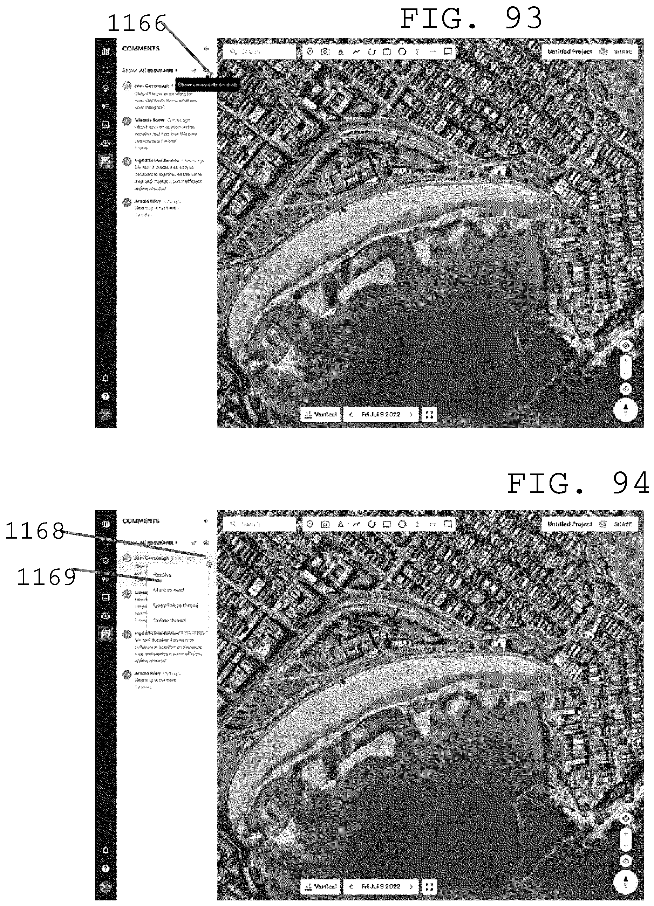

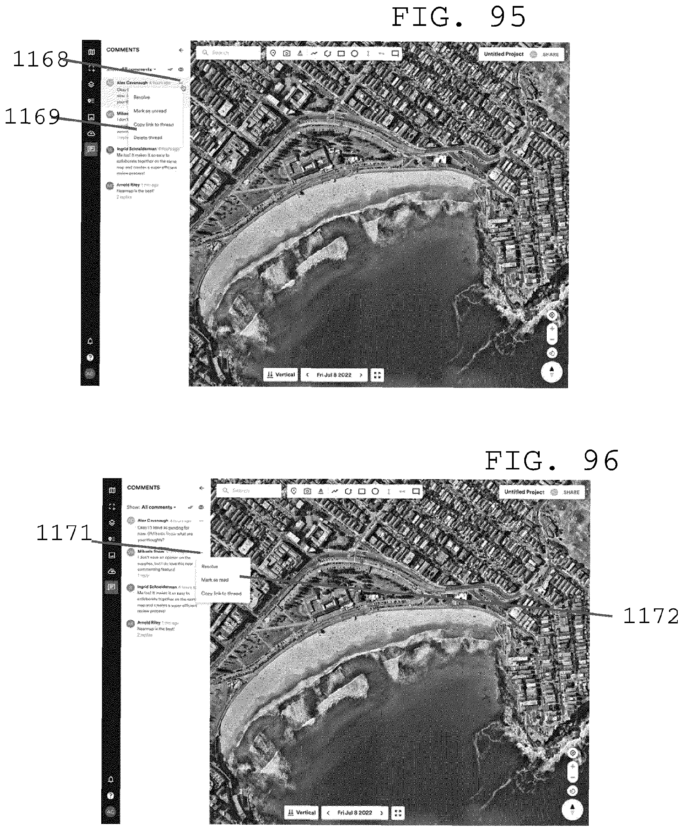

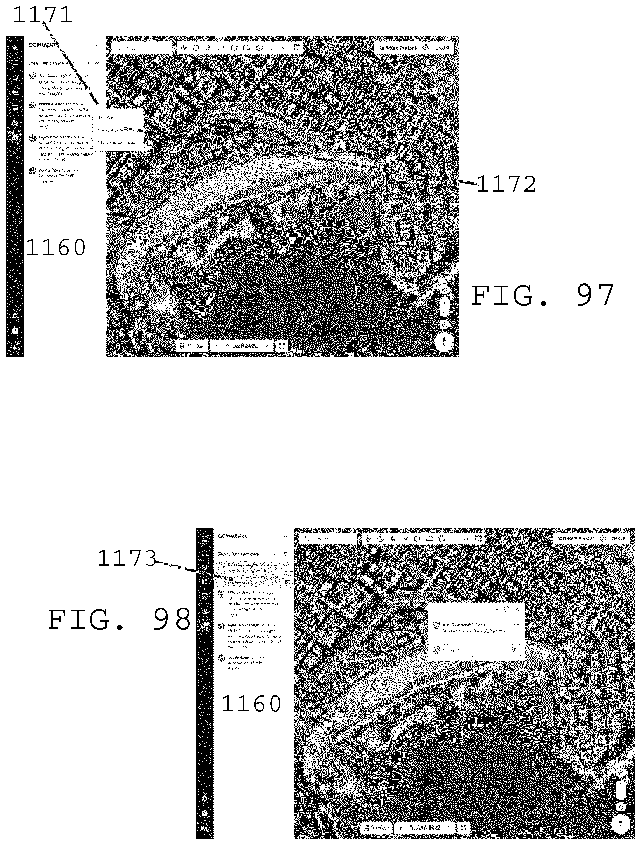

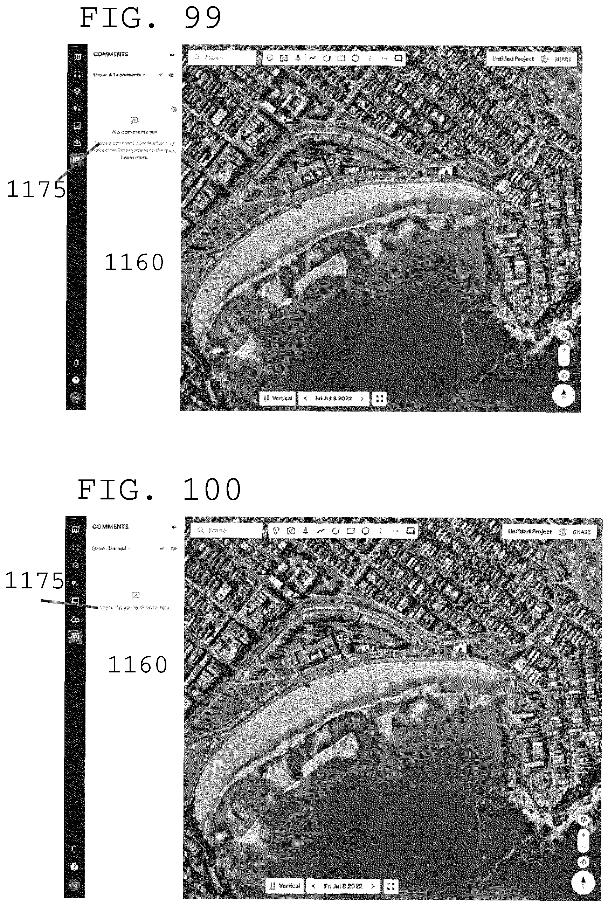

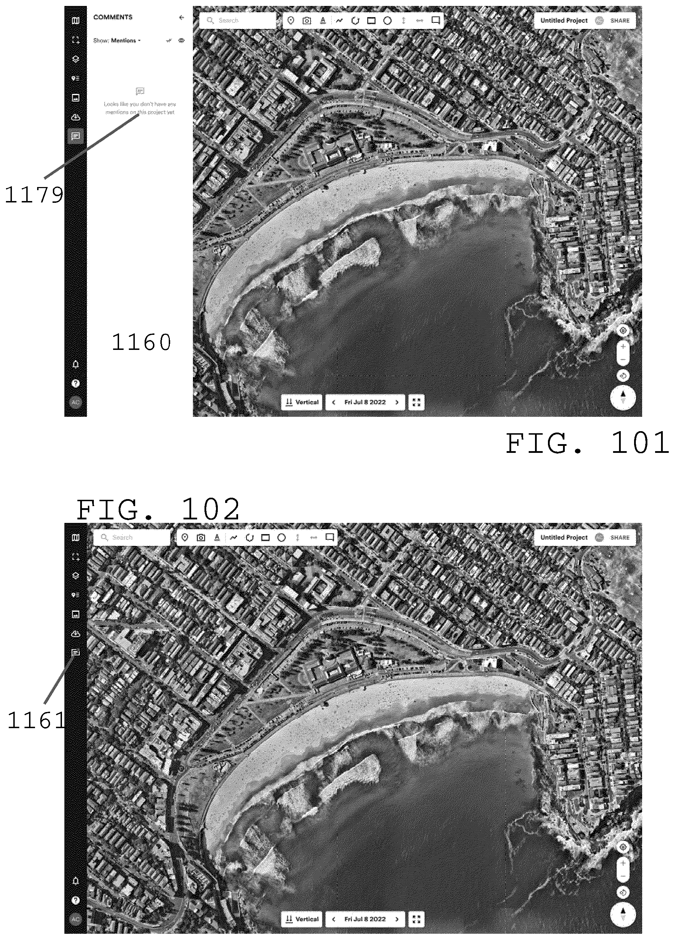

FIG. 64 shows a commenting icon 8902 that a user can select to add comments. A comment cursor 9002 is displayed when the user selects commenting icon 8902. The comment cursor 9002 is used to add comments to the project by clicking on the project image to bring up a comment field 9102 to type comment in as shown in FIGS. 65 and 66. As show in FIG. 67, the "@" character can be typed to display a tag list that can be selected to tag, as show in FIG. 68, the selected user, e.g., "@Lily Raymond", that has access to the project in the comment. When first user 1500 is done typing the comment, then the enter key can be pressed and a comment icon 9602 can be displayed in the project to indicate there is are comments as shown in FIG. 69. As shown in FIG. 70, comment icon 1120 indicates a three user thread where first user 1500 is shown by a first symbol 7050, another user is shown by symbol 7052, and still another user is shown by symbol 7054 that have made comments. Comment icon 7056 indicates a two user thread and comment icon 7058 indicates a six user thread. As shown in FIG. 71, a third comment cluster icon 1122 indicates a three user thread. When first user 1500 hovers or selects comment icon 9602, e.g., comment icon 1120, third comment cluster icon 1122, comment icon 7056, comment icon 7058, then comment content 1124 can be displayed as shown in FIG. 72. When comment content 1124 is longer than a predetermined character length, then a portion of the comment is displayed with an ellipsis as shown in FIG. 73 by partial comment content 1126. When the comment content includes multiple comments and a single author then the comment content can be displayed as multiple content 1128 as shown in FIG. 74. When the comment content includes multiple comments and authors then the comment content can be displayed as multiple authors content 7550 as shown in FIG. 75. When the comment content includes multiple comments and authors that are greater than a predetermined amount of authors then the comment content can be displayed as greater multiple authors content 7650 as shown in FIG. 76. When a user selects comment icon 9602, then comment content can be displayed as shown in FIG. 77 in a comment text box 1125. When first user 1500 selects comment icon 9602, e.g., comment icon 1120, comment icon 7056, comment icon 7058, then comment content 1124 can be displayed as shown in FIG. 77 in comment text box 1125. When first user 1500 selects comment icon 9602, e.g., comment icon 1120, comment icon 7056, comment icon 7058, then comment content 1134 can be displayed as shown in FIG. 78 in comment text box. When first user 1500 selects comment icon 9602, e.g., comment icon 1120, comment icon 7056, comment icon 7058, then comment content can be displayed as shown in FIG. 79 that allows first user 1500 to scroll through all of the comments in comment text box 1125. When first user 1500 selects comment icon 9602, e.g., comment icon 1120, comment icon 7056, comment icon 7058, as shown in FIG. 78, then, as shown in FIG. 80, comment content 1134 can be displayed in comment text box 1125 having a field 8050 allowing a user to input another comment. Comment text box 1125 includes an icon 1140 for each comment that can be selected by first user 1500 to display an edit text box 1142 where edit comment or delete comment can be selected as shown in FIG. 81. If edit comment is selected, then a field 1144 is displayed for editing the respective comment as shown in FIG. 82. If delete comment is selected from edit text box 1142, then a text box 8350 is displayed to confirm the selected comment should be deleted as shown in FIG. 83. Comment text box 1125 includes a box icon 1148 for all comments that can be selected by first user 1500 to display a box edit text box 8450 that includes zoom to comment, copy link to comment and delete thread as shown in FIG. 84. If delete thread is selected, then a text box 8550 is displayed to confirm the selected thread should be deleted as shown in FIG. 85. Comment text box 1125 includes a resolve icon 8650, as shown in FIG. 86, that the user can select to resolve and remove the thread as shown in message text box 8750 that includes an undo text link 8752 that if first user 1500 selects, then the thread will display again as unresolved as shown in FIG. 87. If zoom to comment is selected from box edit text box 8450, then the user interface of Apps system 702 zooms in the image of the project to a predetermined zoom and displays the content of the comment. If copy link to comment is selected from box edit text box 8450, then a message 8850 displays a message that the link to comment has been copied as shown in FIG. 88. This copied link can then be sent to predetermined users in a subscription and/or organization. Alternatively, this copied link can then be sent to users outside of the subscription or organization, and, if this is the case, the user receiving the link can have limited permissions. Users outside of the subscription or organization may have their own data, e.g., locations of fire hydrants in a predetermined geographic area, that they can upload to the project. Referring to FIG. 89, comments can be displayed in side box 1160. Side box 1160 is displayed when a user, for example, first user 1500, selects comment viewing icon 1161. Comments inside box 1160 can be filtered by drop down menu 1162 as shown in FIG. 90. Side box 1160 can include a mark icon 1164 that can mark comments as read or resolve all as shown in FIG. 91. Side box 1160 can include a hide icon 1166 that can hide comments on the image or map as shown in FIG. 92 or show comments on the image as shown in FIG. 93. Side box 1160 includes icon 1168 for each comment that can each be selected by first user 1500 to display an edit text box 1169 where resolve, mark as read, copy link to thread or delete thread can be selected as shown in FIG. 94 for each unread comment made by first user 1500 who authored the comment, and, as shown in FIG. 95, for each read comment made by first user 1500 who authored the comment. When first user 1500 selects icon 1171 for comments that are unread and authored by other users, then an edit text box 1172 is displayed where resolve, mark as read, or copy link to thread can be selected as shown in FIG. 96 for each unread comment made by another user, and, as shown in FIG. 97, for each read comment made by another user. As shown in FIG. 98, each comment can be selected in side box 1160 that is then highlighted at 1173 on the image shown in the user interface of Apps system 702 of first user 1500. As shown in FIG. 99, if there are no comments, then a message 1175 is displayed in side box 1160 indicating that there are no comments. As shown in FIG. 100, if there are no unread comments, then a message 1177 is displayed in side box 1160 indicating that the user is up to date and/or there are no unread comments. As shown in FIG. 101, if there are no comments that include or mention a user, e.g., first user 1500, then a message 1179 is displayed in side box 1160 indicating that there are no mentions for the user for the project yet. As shown in FIG. 102, comment viewing icon 1161 is replaced with unread comment viewing icon 1163 that is displayed when there are unread comments that include the user, e.g., first user 1500.

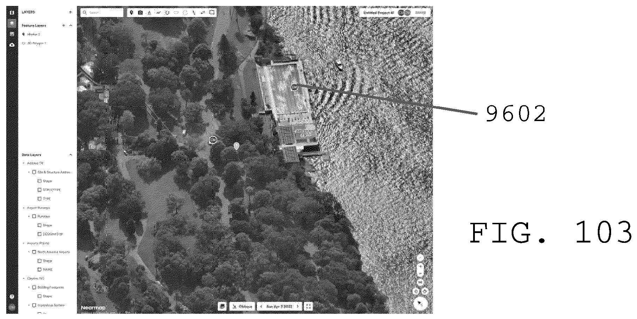

As discussed above, this commenting feature allows a comment to be added in one of Nearmap MapBrowser Vertical, Panorama, 3D, Oblique or web-based imagery browser in a geographical location and then this comment is displayed in each of Vertical, Panorama, 3D and Oblique web-based imagery browser when the geographical location is viewed. Each comment icon 9602 of the comments is placed based on latitude and longitude so that the icon is at the same latitude and longitude in both 3D and 2D views. In a 3D view, for example, as shown in FIG. 103 showing an image from Oblique, a ground height for the z direction is obtained from metadata in a photo of the image displayed that includes a vertical measurement of where the ground is located, e.g., an average elevation of the whole photo can be used as the measurement of where the ground is located, so that comment icon 9602 is placed in the same latitude and longitude and a z measurement taken from the metadata of the photo for the ground. In a 2D image, for example, images shown in Vertical, a z measurement does not need to be considered because the image is in 2D so that comment icon 9602 is placed in the same latitude and longitude. When viewing a 3D model, for example, the 3D mesh of MapBrowser 3D, comment icon 9602 is placed in the same latitude and longitude and a z measurement is taken from the 3D mesh 10 meters above the ground of the 3D mesh to place comment icon 9602. It is advantageous to place the icon above the ground so as to improve visibility by a user (for example to avoid occlusions in 3D), but not too far above the ground so that the actual ground location (latitude and longitude) is intuitive to the user. When a user selects comment icon 9602, then comment content can be displayed as shown in FIG. 78 in comment text box 1125, as shown in FIG. 78, that includes smart positioning, so comment text box 1125 is moved based on the user moving in the user interface so that comment text box 1125 is always displayed in its entirety. In addition, when first user 1500 hovers or selects one of these comment icons 9602, a link can be displayed so that first user 1500 can further select to take first user 1500 to the original view where the comment was generated, for example, first user 1500 could select the link of comment icon 9602 so that then the user interface displays the view of FIG. 69. This can be helpful because in one view the characteristic being commented on maybe visible, but the characteristic is not visible in another view, so the link in the comment can take first user 1500 to the view that the comment was originally generated on that shows the characteristic as well as a view from a particular date. Further, a view can be tagged so as not to just have the comment be based on latitude and longitude coordinates. Another alternative includes first user 1500 clicking on one of symbols 3202 of each user of the first project (FIG. 32), and the user interface would then display a location of the user associated with the selected symbol of symbols 3202.

### Appendix

Code relating to a project for collaboration and ACL

```
           Projects
            {
              id!: string;
              version!: string;
              owner: string;
              created_at: string;
              labels: string[];
              name: string;
              properties: {
                <<<
                 ...projectProperties
                >
              }
              featureLayers: {
                <<<
                orderHierarchy: Tree;
                 <<<<
                entities: Entity[ ];
              };
 }
```

Example code of a model that is tracked on the real time server

```
              {
                sessionId: string;
               <<<
                navigationState: {
                 user Id: string;
                }[ ];
               >>>
 }
```

### Example project nodes

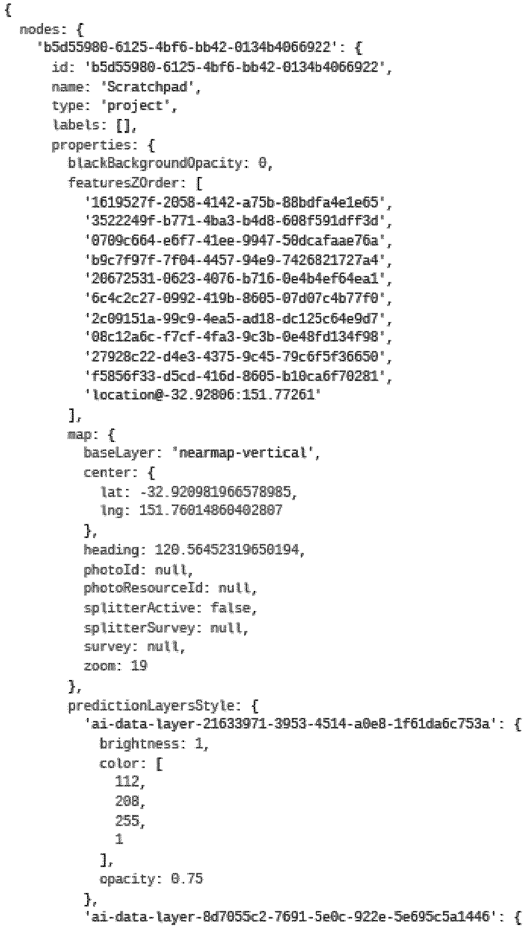

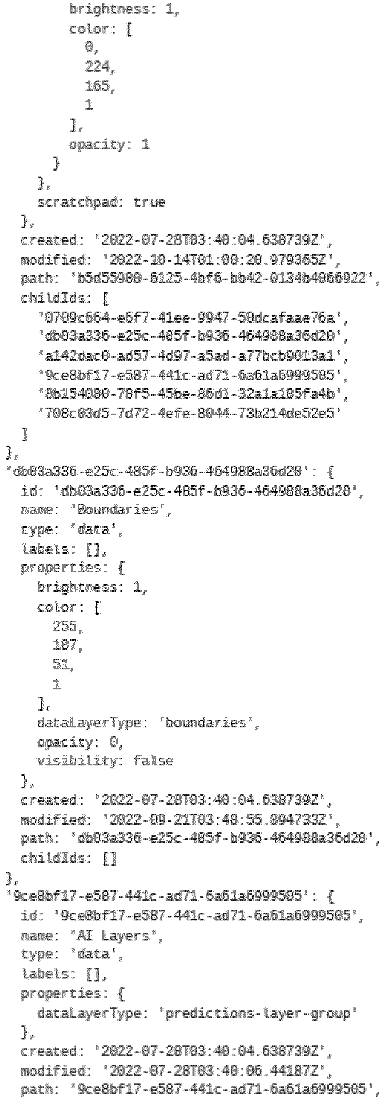

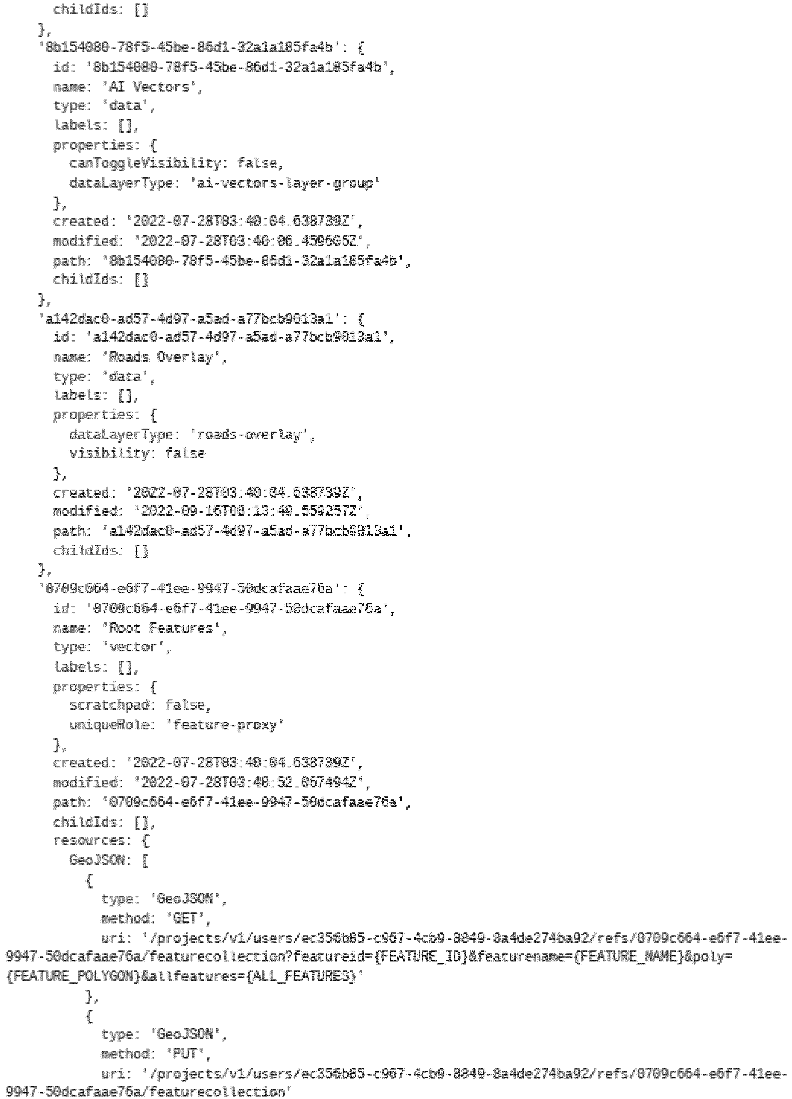

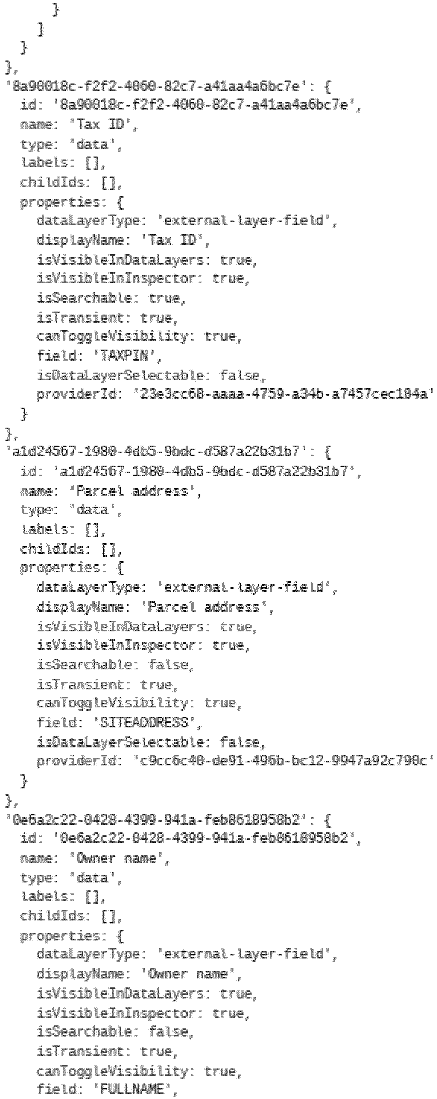

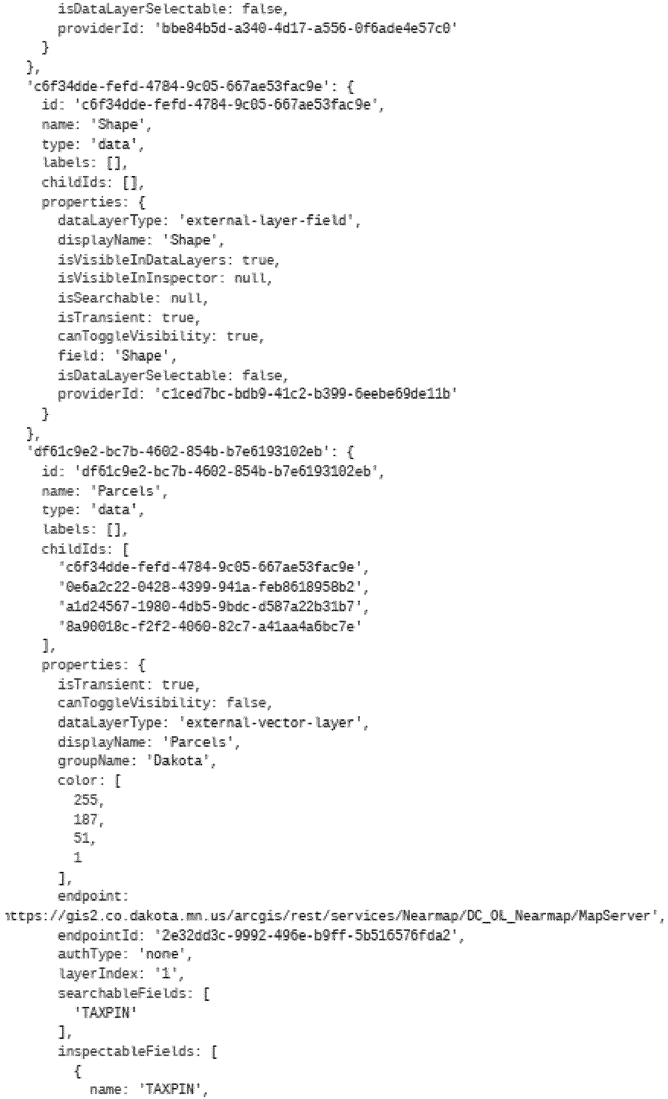

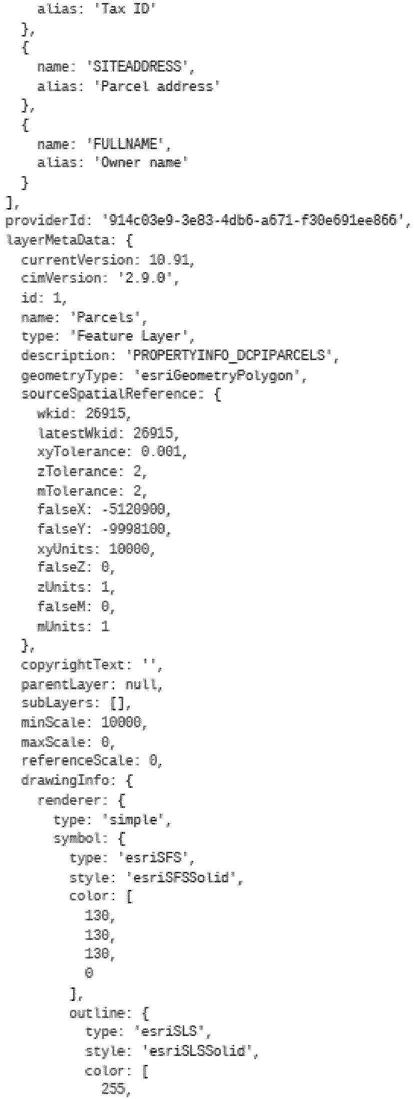

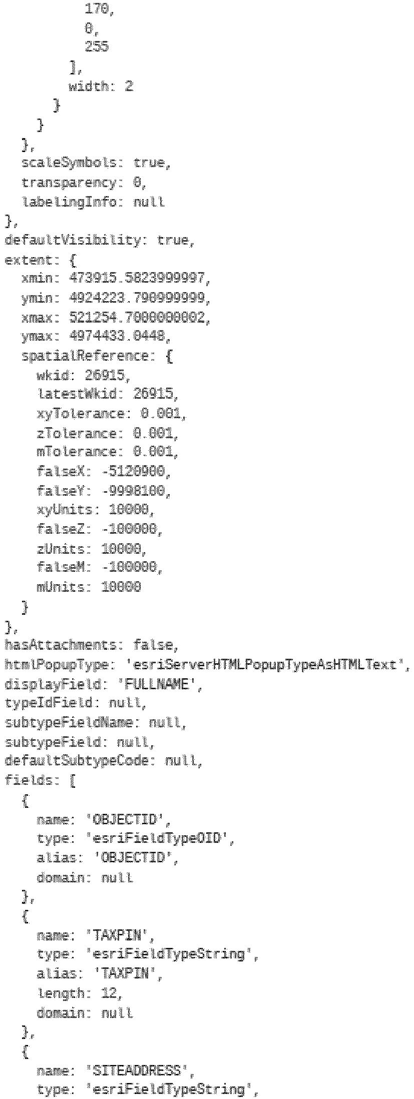

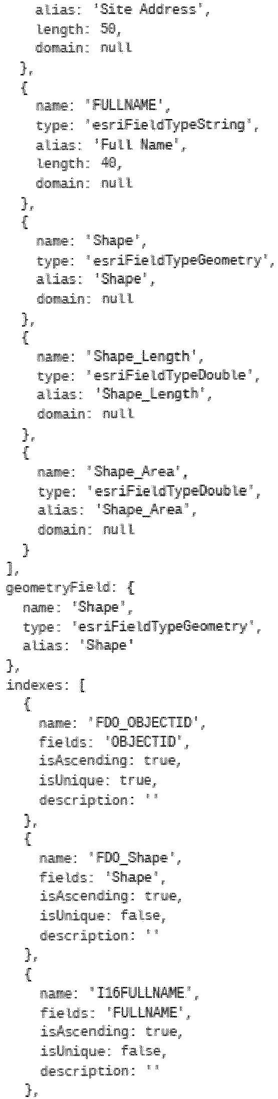

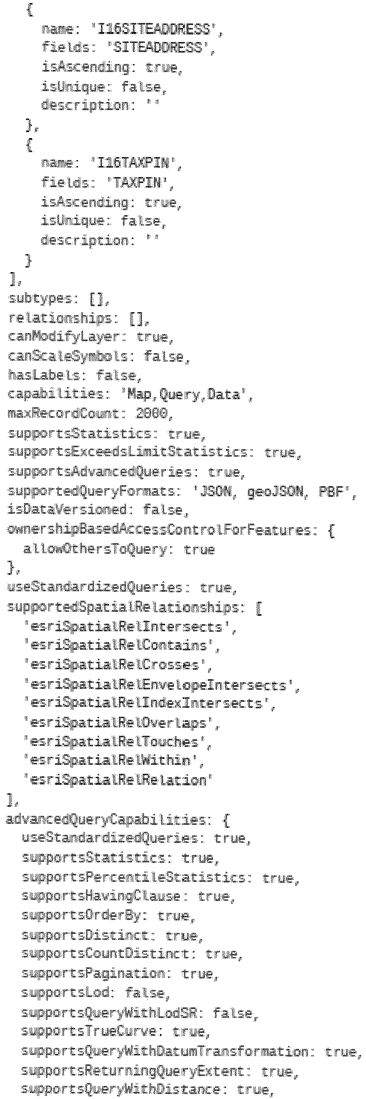

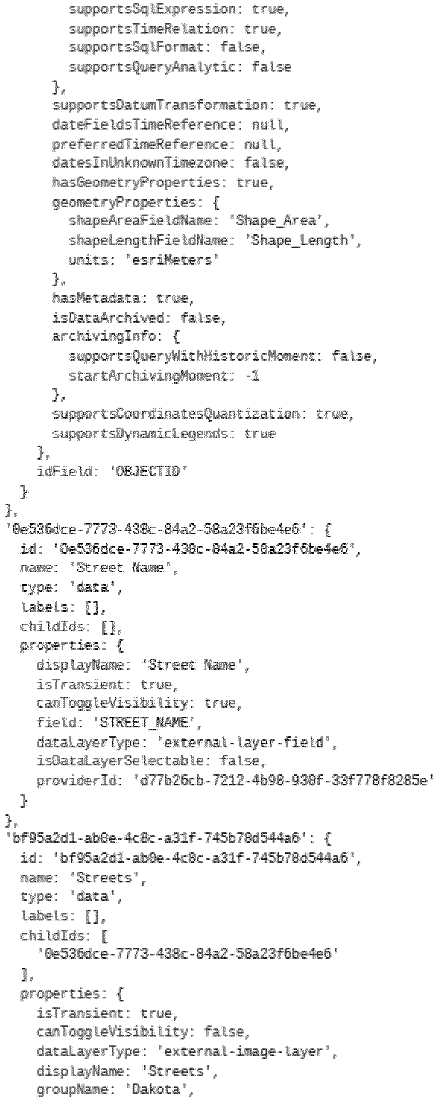

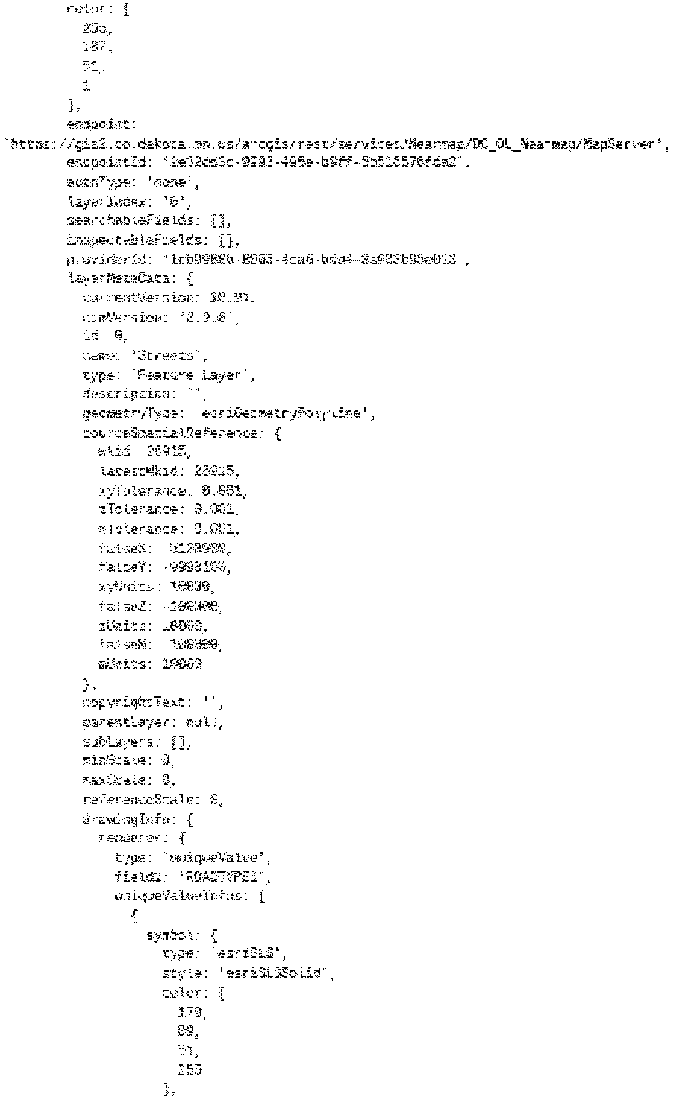

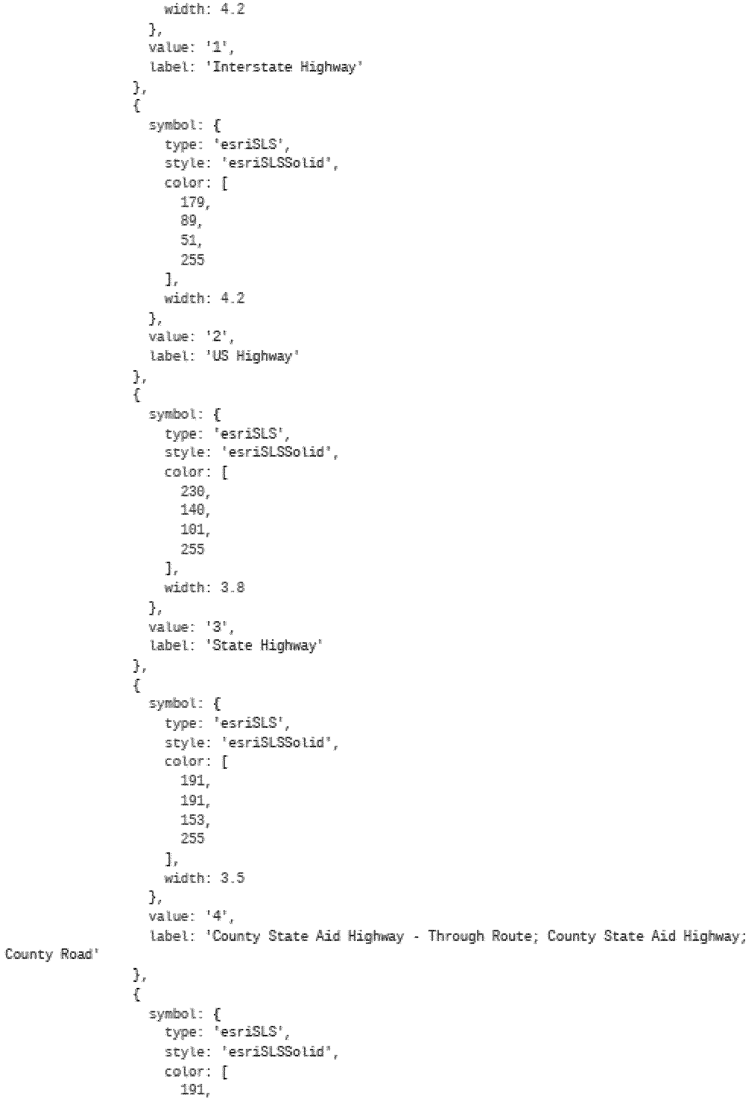

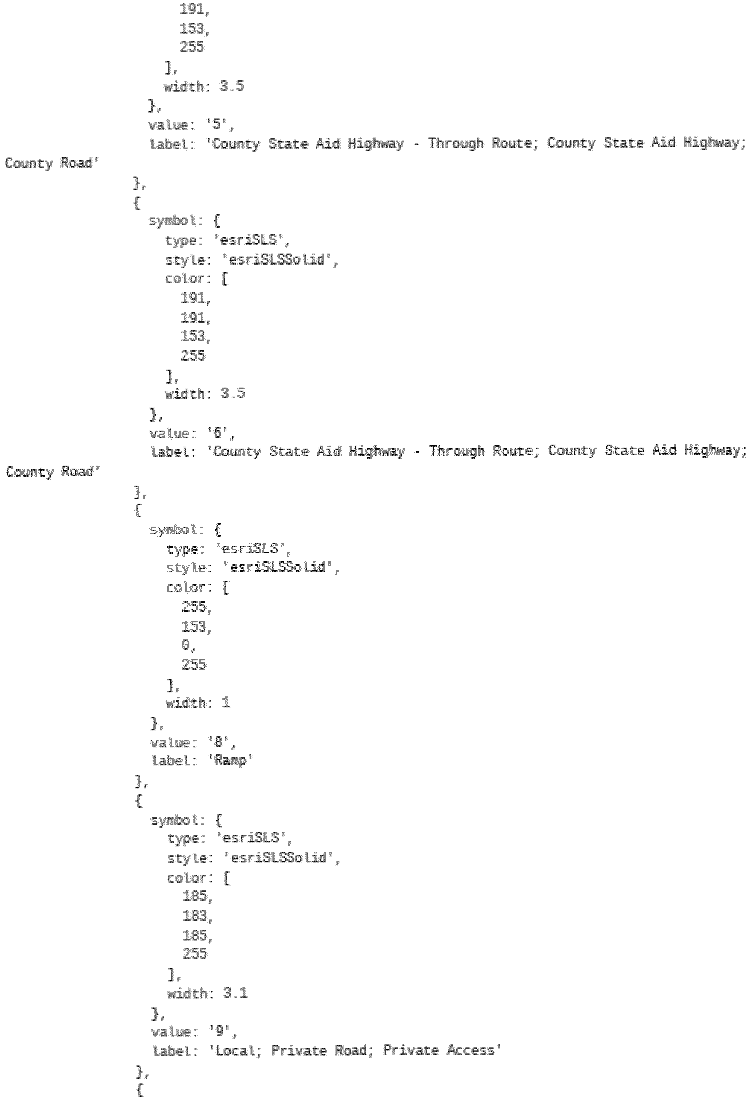

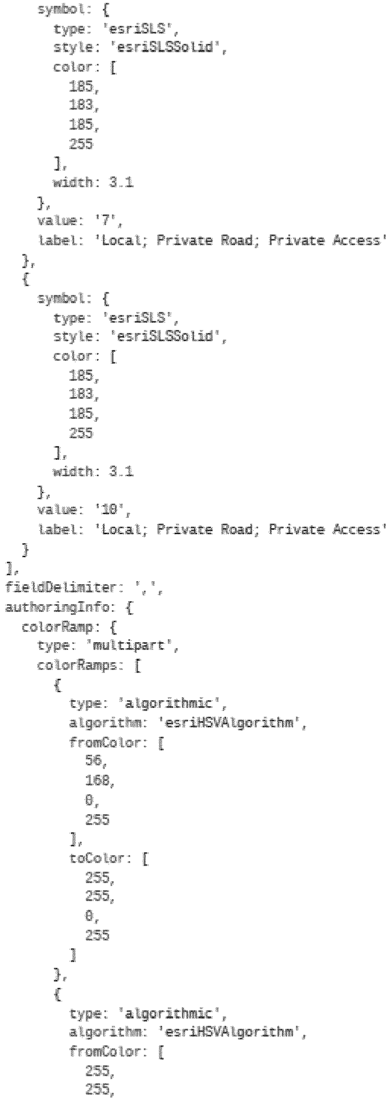

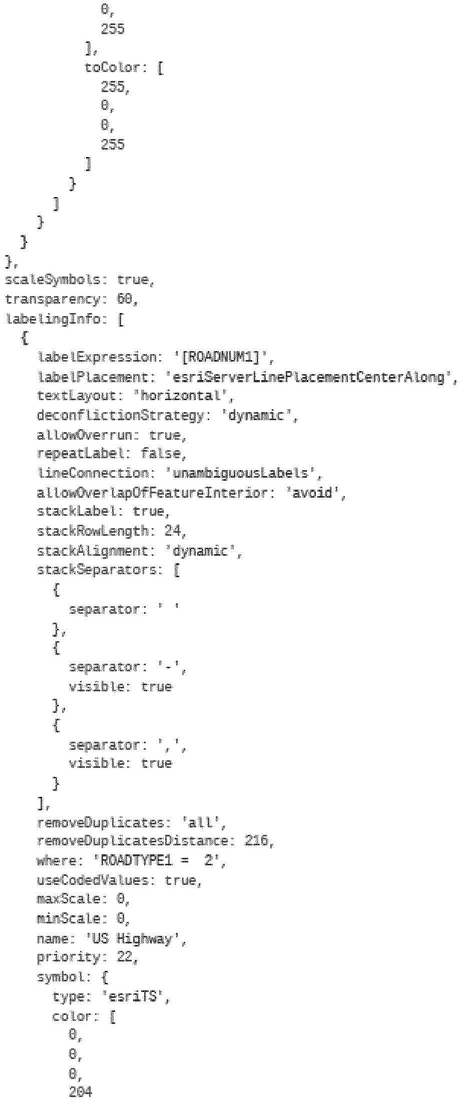

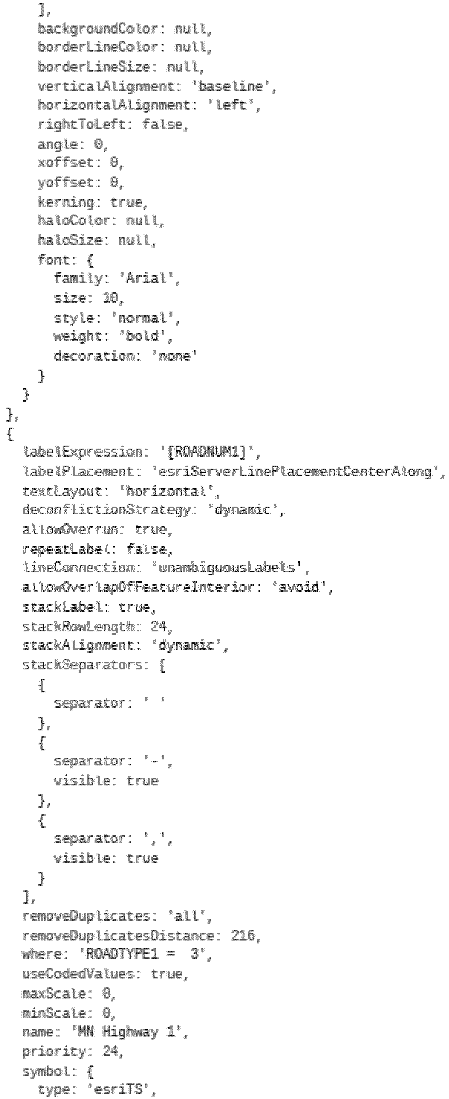

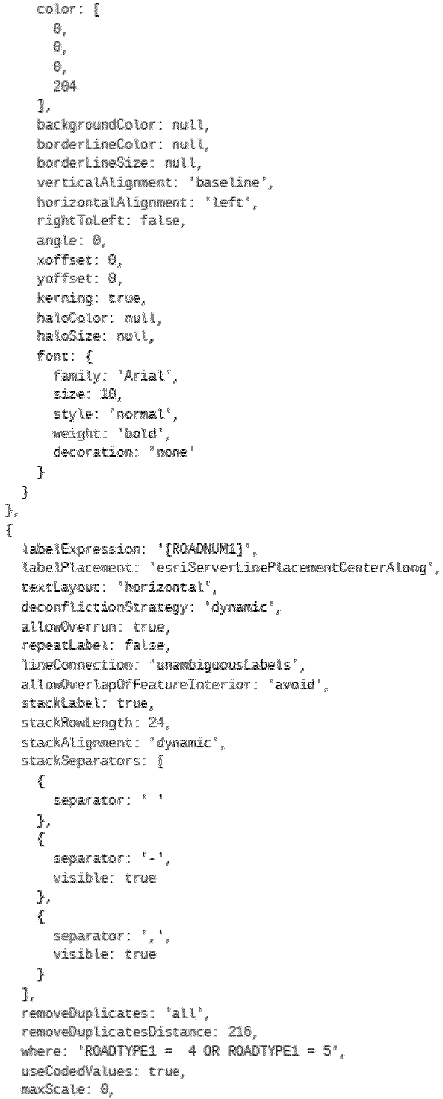

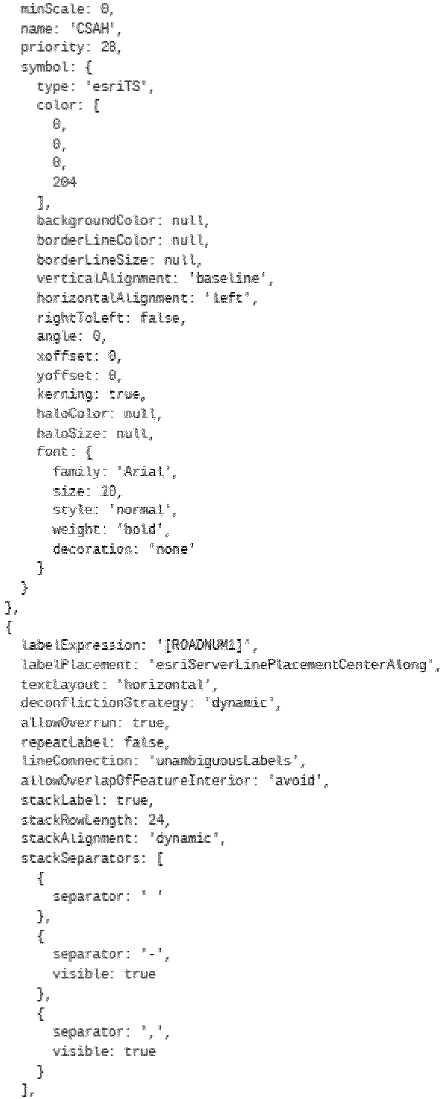

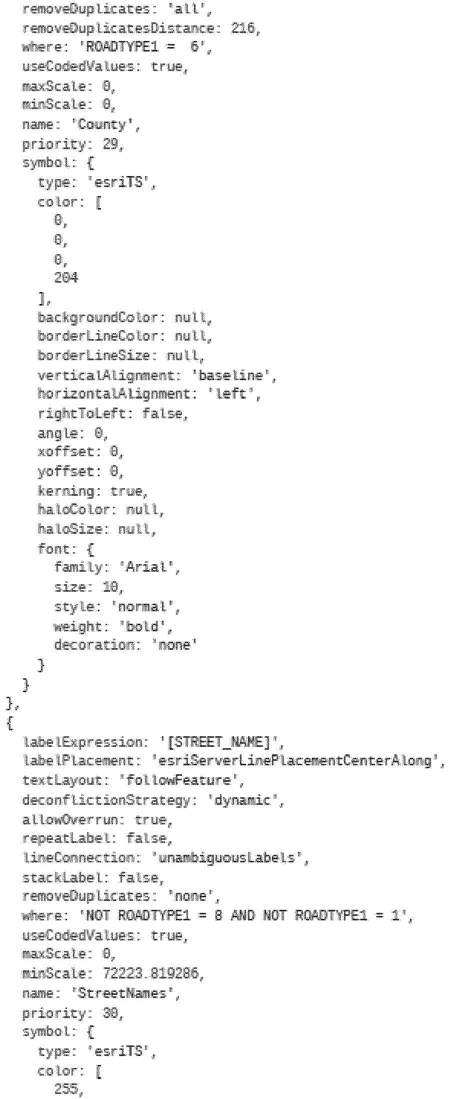

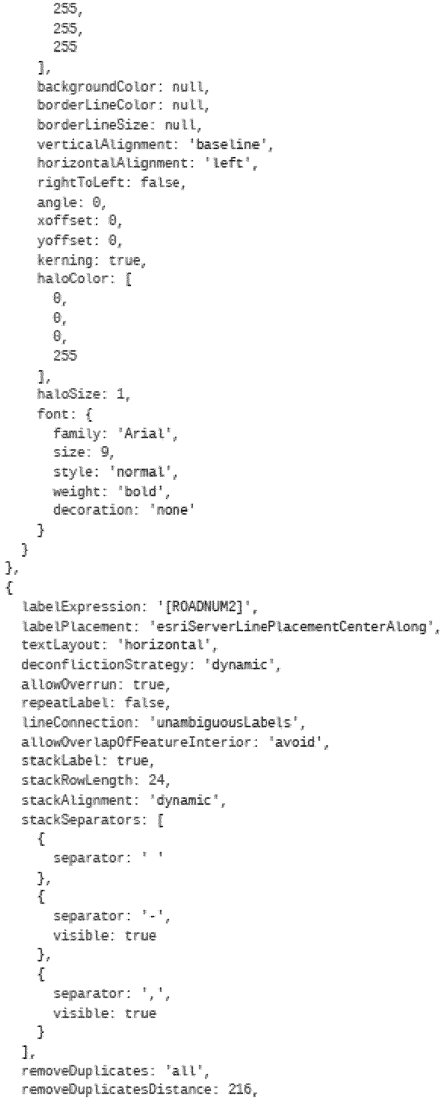

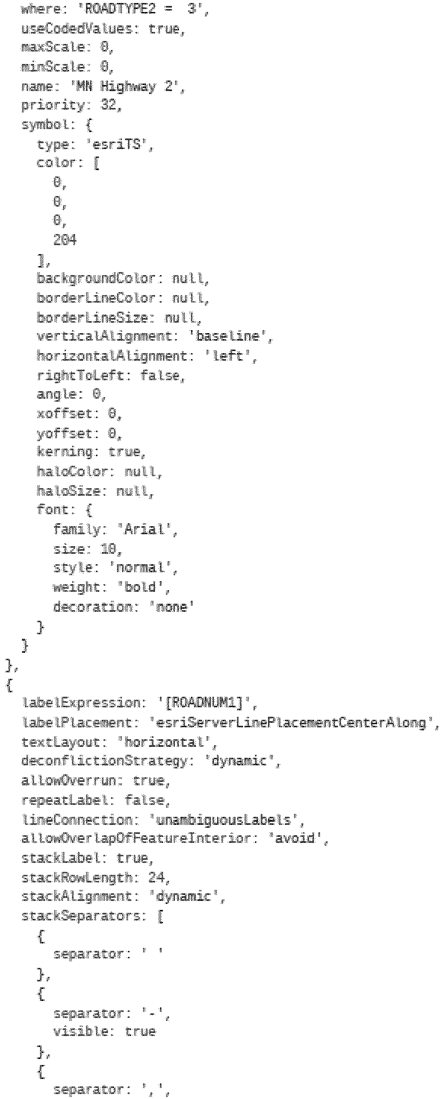

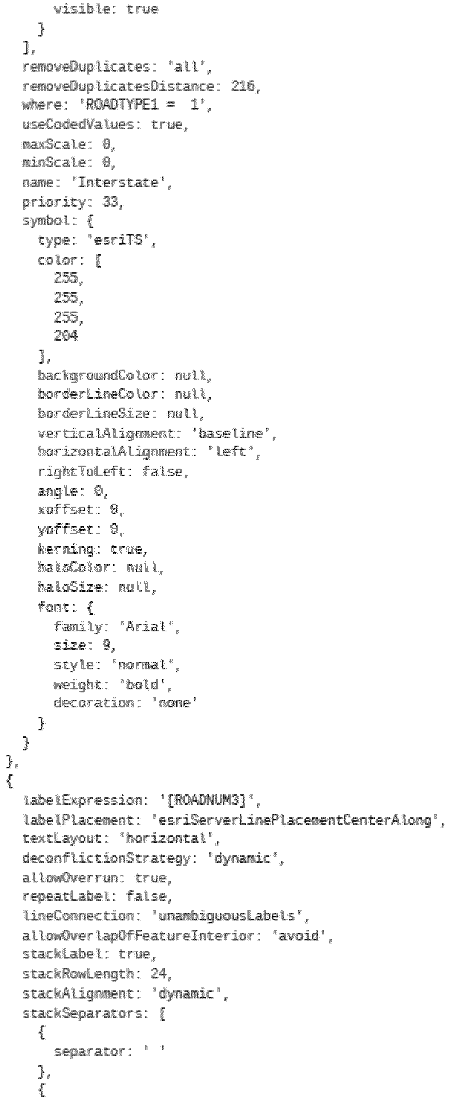

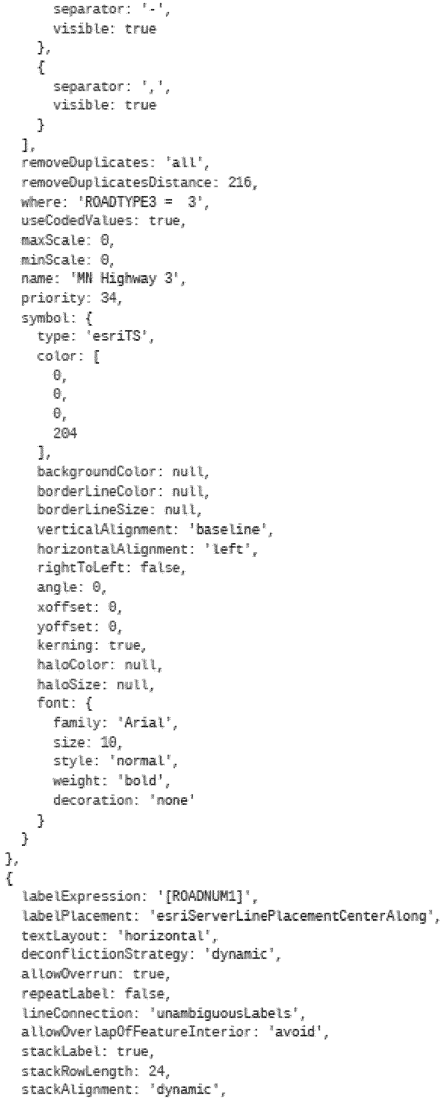

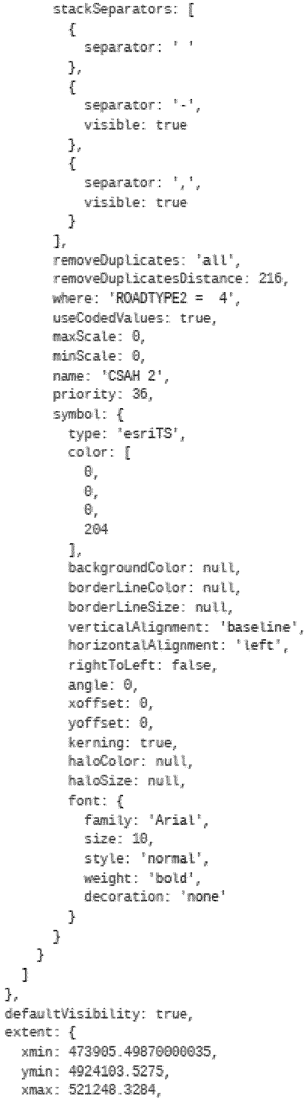

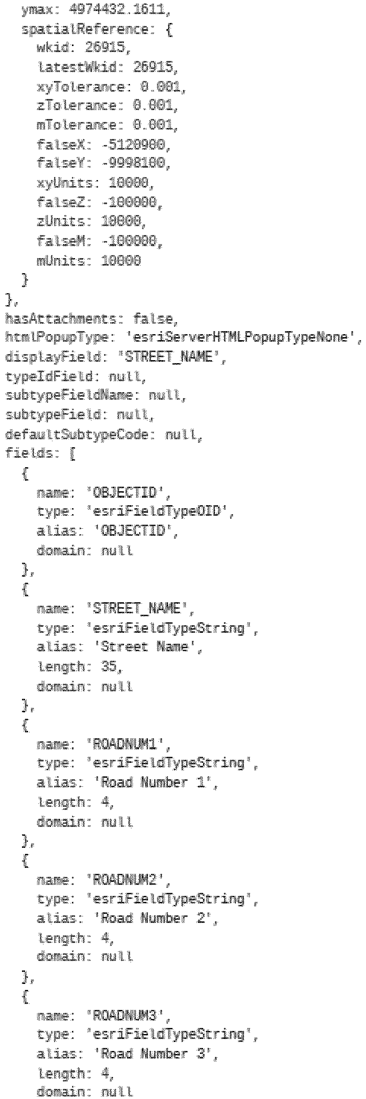

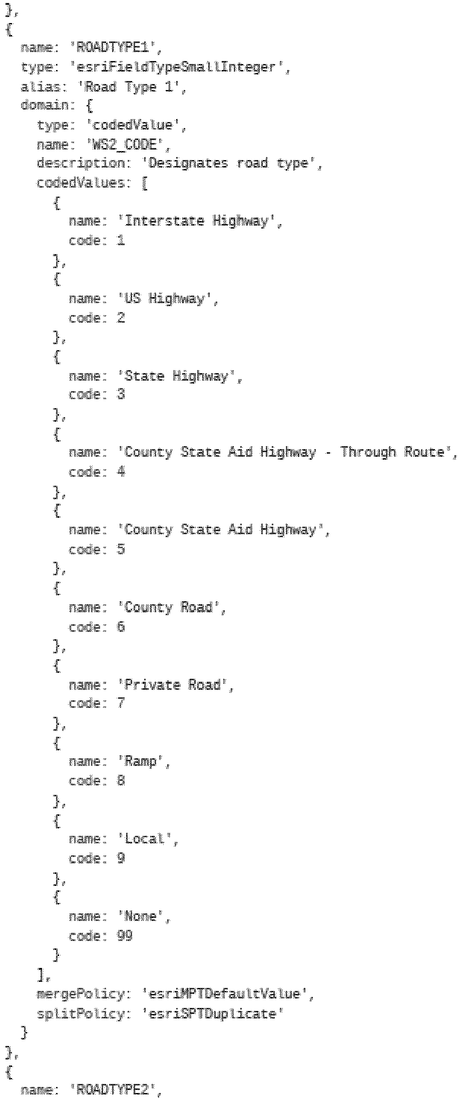

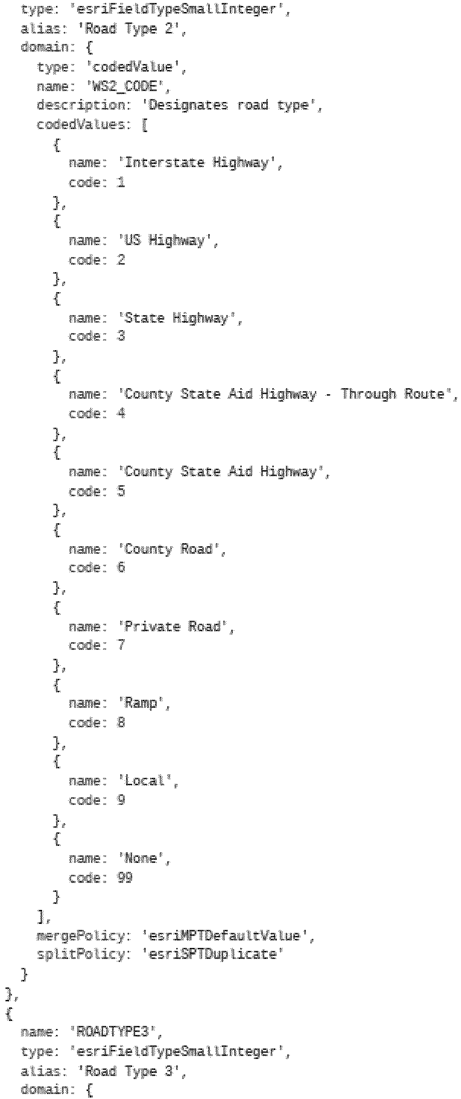

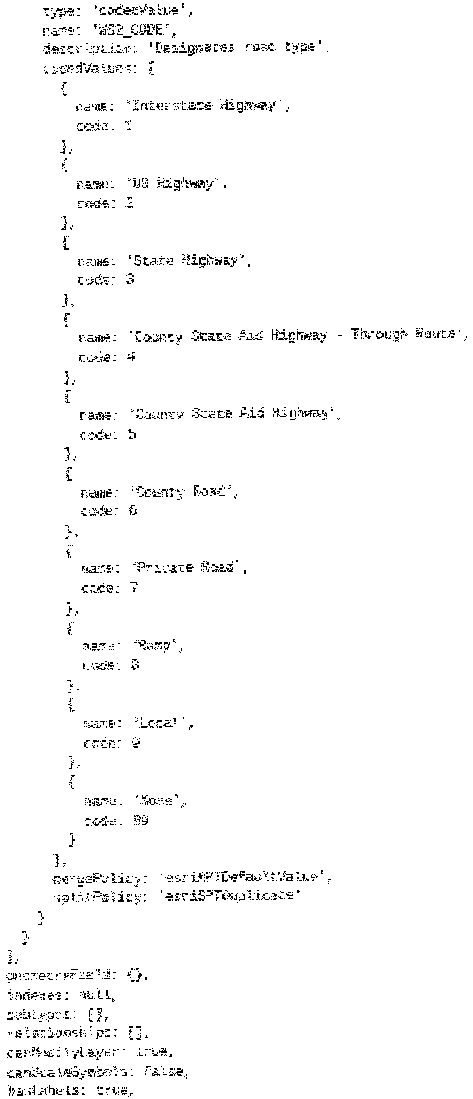

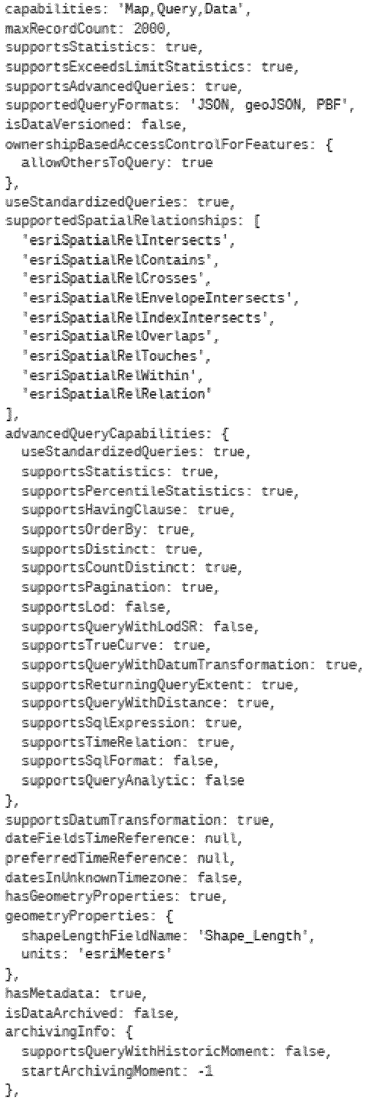

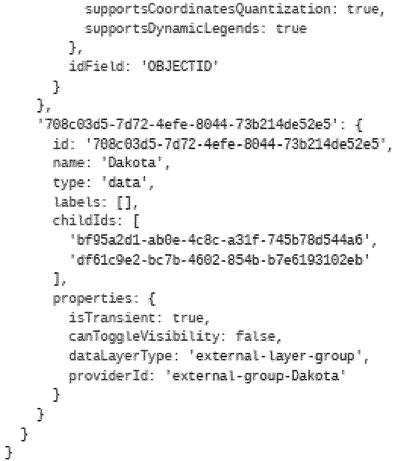

### Undo-Redo and Editor Ownership

### Undo stacks for Alice and Bob

```
            {
              "Alice " : {
               "undoRedos": [ {"id" : "undo-1", "createRectangle"}, {"id": "undo-5" }],
               "entityUndos" : {
                 "rectangle" : ["undo -1"]
               }
  
              },
               "Bob" :
               {
                "undoRedos": [ {"id" : "undo-2", "createcircle"}],
                "entityundos" : {
                 "circle" : ["undo-2"]
                }
              }
             }
```

Bob can then manipulate the circle to increase the radius so that Bob still has ownership over the circle so he can still undo this action

```
            {
             "Alice" : {
               "undoRedos" : [ {"id" : "undo-1", "createrRectangle"}],
               "entityUndos" : {
                "rectangle" : ["undo-1"]
               }
             }
             "Bob" :
             {
               "undoRedos": [ {"id" : "undo-2", "createcircle"},
{ "id" : "undo-3", "increasecircleRadius"}],
               "entityUndos": {
                "circle" : ["undo-2", "undo-3"]
               }
             }
 }
```

Any replica (other than Alice) would have their undo stack for Circle cleared

```
            {
             "Alice": {
               "undoRedos": [ {"id": "undo-1", "createRectangle"},
{"id": "undo-4", "decreasecircleRadius"}],
               "entityUndos": {
                "rectangle" : ["undo-1", "undo-4"]
               }
             }
             "Bob":
             {
               "undoRedos": [ ],
               "entityUndos": {
                "circle": []
                } } }
 
```

Example implementation of a GraphQL service provider for the projects service

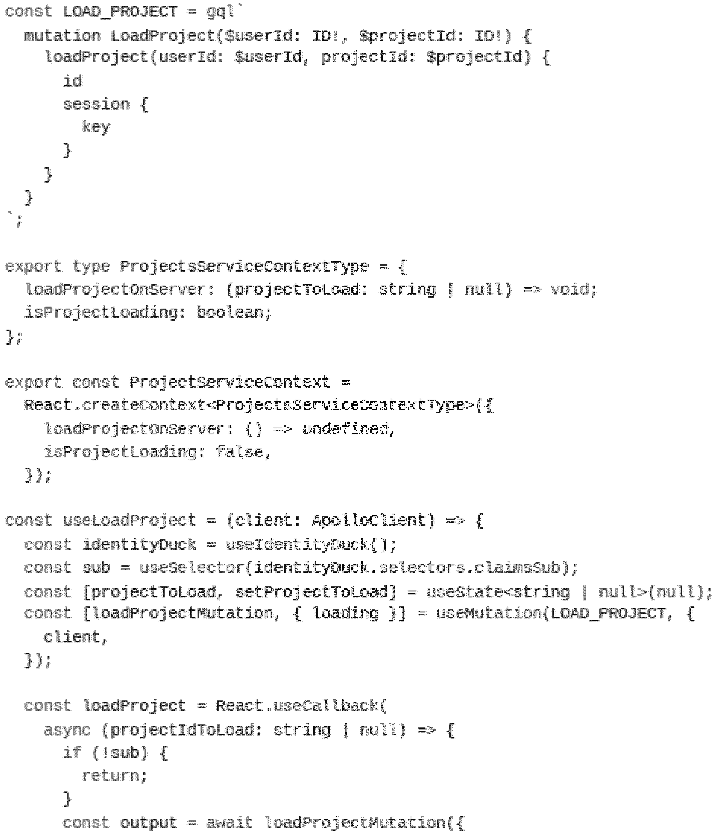

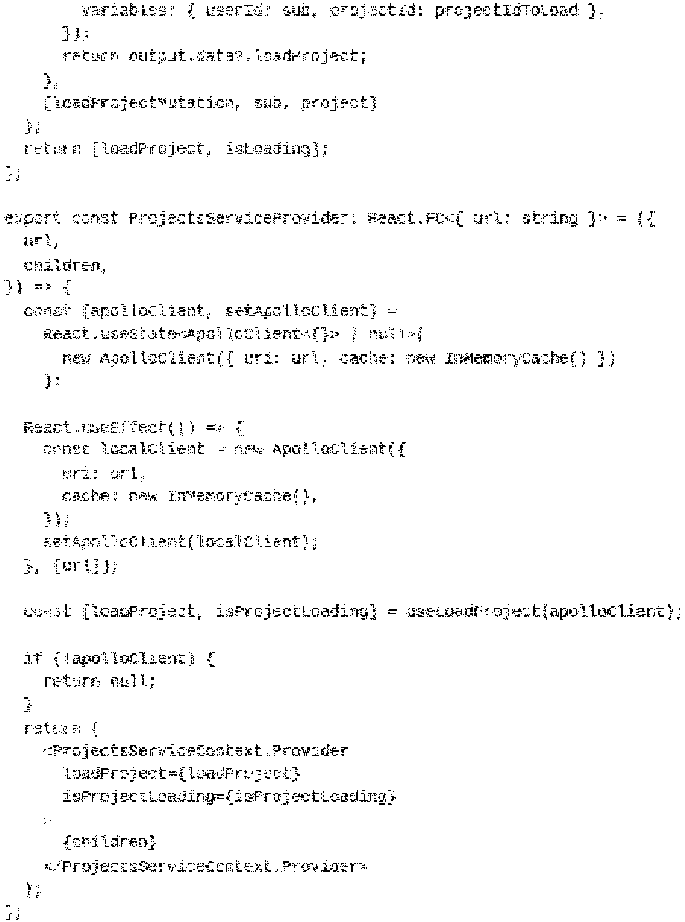

### Project Context Provider

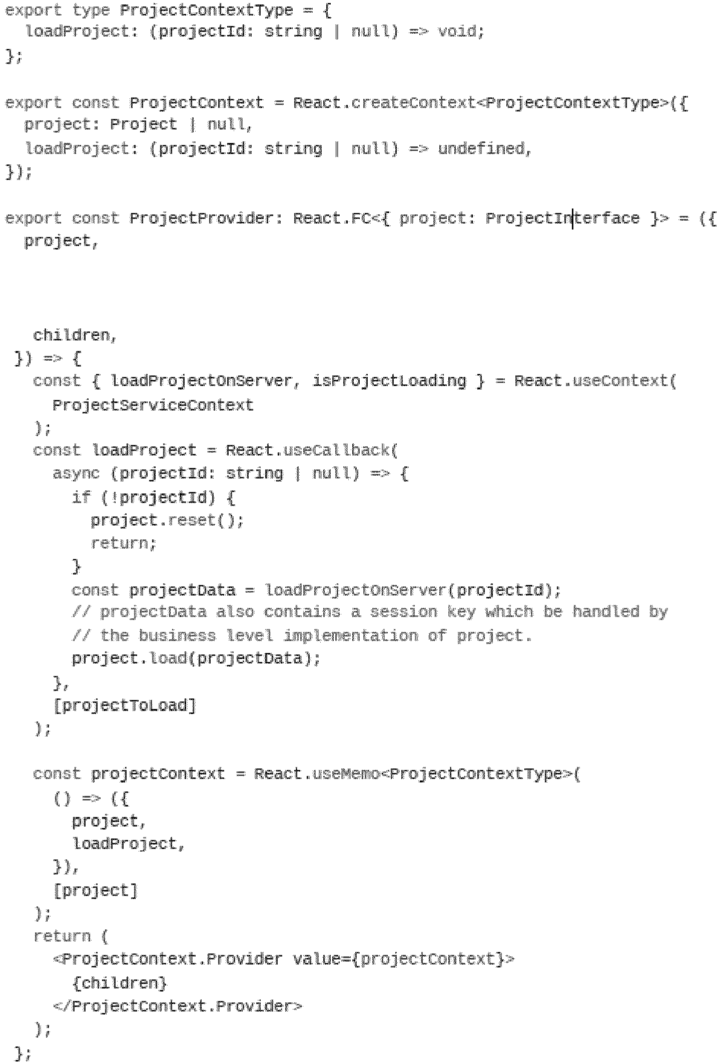

### Data Model

```
             {
               documentId: 'document1-uuid',
               users: [
                { roleid: 'owner', userid: 'user1-uuid' },
                { roleid: 'viewer', userid: 'user3-uuid' },
                { roleid: 'viewer', userid: 'user4-uuid' },
               ]
             }
```

Example data including a "shared via link"

```
            const LINK_SHARE_NAMESPACE = ' a6a9623θ-7fa8-4d37-b4d6-7153be88696' ;
            export const getLinkshareGroupId = (accountId: string)
 => uuidv5(accountId, LINK_SHARE_NAMESPACE);
            {
             documentId: 'document1-uuid',
             users: [
               { roleid: 'owner', user id: 'user1-uuid' },
               { roleid: 'wiewer', userid: getLinkshareGroupId('account1-uuid') },
             ], };
```

For this application the following terms and definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

As used herein, the phrases "at least one," "one or more", "or" and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

It should also be noted that the terms "first", "second", "third", "upper", "lower", and the like may be used herein to modify various elements. These modifiers do not imply a spatial, sequential, or hierarchical order to the modified elements unless specifically stated.

While the present disclosure has been described with reference to one or more exemplary embodiments, it will be understood by those skilled in the art that various changes may be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure should not be limited to the particular embodiment(s) disclosed as the best mode contemplated, but that the disclosure will include all embodiments falling within the scope herein.

## Claims

1. A system for interactively generating 3D geometry data for a location imaged from multiple viewpoints, the system comprising:
a processor; and
a memory storing instructions that, when executed by the processor, configure the system to:
receive a location from a user;
display a first image that includes the location, the first image having both image data and camera calibration parameters;
provide a first UI that includes functions for a user to initialize, modify and view a first 2D geometry over the first image;
store first history data corresponding to a sequence of states of the first 2D geometry over the first image;
create 3D data corresponding to the first 2D geometry based on the first 2D geometry and the camera calibration parameters for the first image;
select a second image for which camera calibration parameters are different from the camera calibration parameters of the first image;
initialize a second 2D geometry based on the 3D data and the camera calibration parameters of the second image;
provide a second UI for viewing the second 2D geometry over the second image, and functions for making modifications to the second 2D geometry and storing second history data corresponding to the modifications to the second 2D geometry;
update the 3D data based on the second 2D geometry and the camera calibration parameters for the second image;
receive from the user or a different user a history request for one of the first and second 2D geometry that is then a selected 2D geometry and performing an operation on the selected 2D geometry based on a selected history data of the selected 2D geometry,
wherein the operation
modifies the selected 2D geometry according to a previous state of the selected 2D geometry stored in its corresponding history data,
updates the appearance of the selected 2D geometry in its corresponding UI, and/or
updates the 3D data based on both the first and second 2D geometries, at least one of which has been updated.

2. The system of claim 1, wherein the first image and/or the second image corresponds to oblique or panorama aerial imagery and/or wherein the first image and/or the second image corresponds to vertical or true ortho aerial imagery.

3. The system of any of the preceding claims,
wherein performing the operation on the selected 2D geometry based on the selected history data of the selected 2D geometry comprises an undo or redo operation; and/or,
wherein performing the operation on the selected 2D geometry based on the history data of the selected 2D geometry comprises a roll back option where the user can select from a plurality of previous states of the selected 2D geometry from the history data of the selected 2D geometry.

4. The system of any of the preceding claims, wherein
a) the location corresponds to a property or a parcel; and/or
b) the history data of the first image or the second image can be marked or tagged with version information; and/or
c) the version information includes user information; and/or
d) the history data is associated with a specific user; and/or
e) the 3D data is continuously updated.

5. The system of any of the preceding claims, wherein the first UI for viewing the first 2D geometry and the second UI for viewing the second 2D geometry are on different devices, wherein optionally, the different devices are geographically distanced from each other.

6. The system of any of the preceding claims, wherein the user modifying the first 2D geometry
a) is different from another user that is modifying the second 2D geometry and/or is geographically distanced from the other user that is modifying the second 2D geometry; and/or
b) is on the first UI that is different from another user that is modifying the second 2D geometry on a second UI, and wherein the 3D data is presented on or near at least one of the first UI or the second UI.

7. The system of any of the preceding claims, wherein the first 2D geometry comprises first 2D data that is an ordered set of 2D locations of a first polygon and the second 2D geometry comprises second 2D data that is an ordered set of 2D locations of a second polygon.

8. The system of any of the preceding claims, wherein the 3D geometry comprises 3D data that is an ordered set of 3D points corresponding to the first 2D geometry and/or the second 2D geometry.

9. The system of any of the preceding claims, wherein the user modifying the first 2D geometry is on the first UI that is different from another user that is modifying the second 2D geometry on a second UI, and wherein modifications are performed on both the first UI and the second UI concurrently.

10. The system of any of the preceding claims, wherein the system is further configured to save project data corresponding to the location based on the first and second 2D geometries and the first and second images, wherein optionally, a) the project data has permissions associated therewith, and wherein the permissions are managed for user access to the project data and/or b) the project data can be loaded on a new device and/or is modified and updated continuously.

11. The system of claim 10, wherein the system is further configured to send an invitation to access the project data to another user within the same organization and/or from a different organization.

12. The system of any of the preceding claims, wherein the system is further configured to save comments that are added and/or shared corresponding to the location based on the first and second 2D geometries and the first and second images.

13. The system of claim 12, wherein the comments comprise
a) markers corresponding to geographical locations with information selected from the group consisting of comments, fields, tags, key value data, and any combination thereof, and wherein the markers plus data are searchable by content, location, and/or user; and/or
b) a discussion thread; and/or
c) mentions and/or requests for comments by username; and/or
d) approvals.

14. The system of any of the preceding claims, wherein the system is further configured to
select a third image for which camera calibration parameters are different from the camera calibration parameters of the first image and the second image;
initialize a third 2D geometry based on the 3D data and the camera calibration parameters of the third image;
provide a third UI for viewing the third 2D geometry over the second image, and functions for making modifications to the third 2D geometry and storing history data corresponding to the modifications to the third 2D geometry; and
update the 3D data based on the third 2D geometry and the camera calibration parameters for the third image.

15. The system of any of the preceding claims, wherein the system is further configured to
select a third image that is the same as the first image, display it on a third UI, and modify the first 2D geometry that corresponds to the third image that is on a different device than the first image.

16. The system of claim 15, wherein the first history includes modifications inputted in the first UI and inputted in the second UI or separate histories stored for each of inputs from the first UI and inputs from the second UI and/or wherein the system is further configured to undo a modification made by one of the first UI or the second UI by an input in the other of the first UI or the second UI and vice versa, and optionally, wherein the system is further configured to redo an undone modification made by one of the first UI or the second UI by an input in the other of the first UI or the second UI and vice versa.
